# EUROPEAN PATENT APPLICATION

(11) **EP 4 516 820 A1**
(43) Date of publication of application: **05.03.2025**
(21) Application number: 23796552.0
(22) Date of filing: 28.04.2023
(51) Int. Cl.: C08F 6/22, C08F 2/16, C08F 2/44, C08F 14/26

(54) **METHOD FOR PRODUCING COMPOSITION CONTAINING FLUORORESIN, AND COMPOSITION CONTAINING FLUORORESIN**

(30) Priority: 28.04.2022 JP 2022075306
(71) Applicant: DAIKIN INDUSTRIES, LTD., Osaka-shi, Osaka 530-0001 (JP)
(72) Inventor: ITO, Kengo, Osaka-Shi, Osaka 530-0001 (JP); OKUI, Chiaki, Osaka-Shi, Osaka 530-0001 (JP); ICHIKAWA, Kenji, Osaka-Shi, Osaka 530-0001 (JP); KATO, Taketo, Osaka-Shi, Osaka 530-0001 (JP)
(74) Representative: Hoffmann Eitle
(86) International application number: PCT/JP2023/016928
(87) International publication number: WO 2023/210820

(57) **Abstract**

Provided is a method for producing a composition containing a fluororesin, the method comprising polymerizing tetrafluoroethylene in an aqueous medium in the presence of a polymer (I) containing a polymerization unit (I) derived from a monomer (I) represented by the general formula (I) to obtain a polymerization dispersion containing a fluororesin containing a tetrafluoroethylene unit, coagulating the fluororesin in the polymerization dispersion to obtain a coagulate, and washing the coagulate to obtain a composition containing the fluororesin, wherein
(1) the coagulation is carried out by bringing the fluororesin in the polymerization dispersion into contact with an organic solvent, and/or
(2) the washing is carried out by bringing the coagulate into contact with an organic solvent,

CX¹X³=CX²R(-CZ¹Z²-A⁰)ₘ (I)

wherein the definitions of the reference signs in the formula are as provided in the specification.

## Description

### TECHNICAL FIELD

The present disclosure relates to a method for producing a composition containing a fluororesin and a composition containing a fluororesin.

### BACKGROUND ART

Patent Document 1 discloses a method for producing a fluoropolymer, the method comprising polymerizing a fluoromonomer in an aqueous medium in the presence of a polymer (1) containing a polymerization unit (1) derived from a monomer represented by the following general formula (1) to obtain a fluoropolymer:

CX₂=CY(-CZ₂-O-Rf-A) (1)

wherein X is the same or different and is -H or -F; Y is -H, - F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, or -OSO₃M (M is -H, a metal atom, - NR⁷₄, imidazolium optionally having a substituent, pyridinium optionally having a substituent, or phosphonium optionally having a substituent, and R⁷ is H or an organic group), provided that at least one of X, Y, and Z contains a fluorine atom.

Patent Document 2 discloses a method for producing a fluorine-containing copolymer, wherein a cationic surfactant and a water-soluble organic solvent are used as a coagulating agent when coagulating a fluorine-containing copolymer present in an aqueous fluorine-containing copolymer dispersion produced by emulsion polymerization in the presence of aqueous ammonia to thereby separate the fluorine-containing copolymer.

### RELATED ART

### PATENT DOCUMENTS

Patent Document 1: International Publication No. WO 2019/168183
Patent Document 2: Japanese Patent Laid-Open No. 2004-285264

### SUMMARY OF THE INVENTION

### PROBLEM TO BE SOLVED BY THE INVENTION

An object of the present disclosure is to provide a method for producing a composition containing a fluororesin containing tetrafluoroethylene unit by polymerizing tetrafluoroethylene in the presence of a polymer containing a specific polymerization unit, the method being capable of producing a composition in which the content of the polymer containing the specific polymerization unit is smaller than that of a composition obtained by conventional production methods.

### MEANS FOR SOLVING THE PROBLEM

The present disclosure provides a method for producing a composition containing a fluororesin, the method comprising:
polymerizing tetrafluoroethylene in an aqueous medium in the presence of a polymer (I) containing a polymerization unit (I) derived from a monomer (I) represented by the general formula (I) to obtain a polymerization dispersion containing a fluororesin containing a tetrafluoroethylene unit,
coagulating the fluororesin in the polymerization dispersion to obtain a coagulate, and
washing the coagulate to obtain a composition containing the fluororesin, wherein
   (1) the coagulation is carried out by bringing the fluororesin in the polymerization dispersion into contact with an organic solvent, and/or
   (2) the washing is carried out by bringing the coagulate into contact with an organic solvent,

      CX¹X³=CX²R(-CZ¹Z²-A⁰)ₘ (I)
   wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

### EFFECTS OF INVENTION

The present disclosure can provide a method for producing a composition containing a fluororesin containing tetrafluoroethylene unit by polymerizing tetrafluoroethylene in the presence of a polymer containing a specific polymerization unit, the method being capable of producing a composition in which the content of the polymer containing the specific polymerization unit is smaller than that of a composition obtained by conventional production methods.

### DESCRIPTION OF EMBODIMENTS

Before specifically describing the present disclosure, some terms used herein will now be defined or explained.

In the present disclosure, the fluororesin is a partially crystalline fluoropolymer which is a fluoroplastic. The fluororesin has a melting point and has thermoplasticity, and may be either melt-fabricable or non melt-processible.

The melt-fabricable in the present disclosure means that a polymer has an ability to be processed in a molten state using a conventional processing device such as an extruder or an injection molding machine. Accordingly, a melt-fabricable fluororesin usually has a melt flow rate of 0.01 to 500 g/10 min as measured by the measurement method described below.

In the present disclosure, the perfluoromonomer is a monomer that does not have a carbon atom-hydrogen atom bond within the molecule. The perfluoromonomer may be a monomer containing carbon atoms and fluorine atoms in which some of the fluorine atoms bonded to any of the carbon atoms are replaced with chlorine atoms, and may be a monomer containing a nitrogen atom, an oxygen atom, a sulfur atom, a phosphorus atom, a boron atom, or a silicon atom in addition to the carbon atoms. The perfluoromonomer is preferably a monomer in which all hydrogen atoms are replaced with fluorine atoms. The perfluoromonomer does not encompass a monomer that provides a crosslinking site.

The monomer that provides a crosslinking site is a monomer (cure-site monomer) having a crosslinkable group that provides the fluoropolymer with a crosslinking site for forming a crosslink with the curing agent.

The polytetrafluoroethylene (PTFE) in the present disclosure is preferably a fluoropolymer having a tetrafluoroethylene unit content of 99 mol% or more based on the entirety of polymerized units.

In the present disclosure, the fluororesin (provided that polytetrafluoroethylene is excluded) is preferably a fluoropolymer having a tetrafluoroethylene unit content of less than 99 mol% based on the entirety of polymerization units.

In the present disclosure, the content of each monomer constituting the fluoropolymer can be calculated by any suitable combination of NMR, FT-IR, elemental analysis, and X-ray fluorescence analysis according to the type of monomer.

In the present disclosure, the term "organic group" means a group containing one or more carbon atoms or a group formed by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
RaSO₂-,
RaCOO-,
RaNRaCO-,
RaCONRa-,
RaOCO-,
RaOSO₂-, and
RaNRbSO₂-,
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
each Rb is independently H or an alkyl group optionally having one or more substituents.

The organic group is preferably an alkyl group optionally having one or more substituents.

The term "substituent" in the present disclosure means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxyl group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8 and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12 and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridine-carbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl group.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring condensed with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range indicated by endpoints as used herein includes all numerical values within the range (for example, the range of 1 to 10 includes 1.4, 1.9, 2.33, 5.75, 9.98, and the like).

In the present disclosure, the phrase "at least one" includes all numerical values greater than or equal to 1 (such as at least 2, at least 4, at least 6, at least 8, at least 10, at least 25, at least 50, at least 100, and the like).

Below, specific embodiments of the present disclosure will now be described in detail, but the present disclosure is not limited to the following embodiments.

### (Production Method)

In the production method of the present disclosure,
tetrafluoroethylene (TFE) is polymerized in an aqueous medium in the presence of a polymer (I) to thereby obtain a polymerization dispersion containing a fluororesin containing TFE unit;
the fluororesin in the resulting polymerization dispersion is coagulated to thereby obtain a coagulate; and
the resulting coagulate is washed to thereby obtain a composition containing a fluororesin (a fluororesin composition).

In the production method of the present disclosure, coagulation and washing are carried out by one or both of the following methods (1) and (2):
(1) Coagulation is carried out by bringing the fluororesin in the polymerization dispersion into contact with an organic solvent.
(2) Washing is carried out by bringing the coagulate into contact with an organic solvent.

The polymer (I) used in the production method of the present disclosure contains a polymerization unit (I) derived from a monomer (I) represented by the general formula (I):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

Due to the polymer (I) present during polymerization, the polymerization of TFE proceeds smoothly, and a polymerization dispersion containing a fluororesin containing TFE unit is obtained. However, the resulting polymerization dispersion and the fluororesin recovered from the polymerization dispersion by conventional methods are problematic in that the polymer (I) remains. For example, Patent Document 1 discloses that the polymerization dispersion is stirred at high speed, thereby the fluororesin in the polymerization dispersion is coagulated, and the coagulated wet powder is dried, but this method results in a relatively large amount of the polymer (I) remaining in the resulting fluororesin.

In the production method of the present disclosure, at least one of washing and coagulation is carried out using an organic solvent, and thus the polymer (I) remaining in the fluororesin obtained by polymerization can be highly efficiently removed from the fluororesin. Accordingly, a fluororesin composition having a reduced polymer (I) content is obtained despite being a fluororesin composition that is obtained using the polymer (I).

Thus, in the production method of the present disclosure, the fluororesin in the polymerization dispersion is brought into contact with an organic solvent in at least one of the steps of washing and coagulation. Next, the organic solvent used in the production method of the present disclosure will now be described in more detail.

### (Organic solvent)

Examples of the organic solvent used in the production method of the present disclosure include:
alcohols;
carboxylic acids such as acetic acid, propionic acid, ethoxyacetic acid, and valeric acid;
esters such as methyl acetate, ethyl acetate, propyl acetate, butyl acetate, methyl propionate, ethyl propionate, propyl propionate, and dimethyl carbonate;
ketones such as methyl ethyl ketone, methyl isobutyl ketone, cyclohexanone, diacetone alcohol, and 3-methyl-2-cyclopentenone;
aromatic hydrocarbons such as benzene, toluene, and xylene; and
ethers such as diethyl ether, tetrahydrofuran, dioxane, diethylene glycol diethyl ether, and 1,2-dimethoxyethane.

In particular, the organic solvent is preferably an alcohol. The alcohol may be a monohydric alcohol, a dihydric alcohol, or a trihydric alcohol. The alcohol is preferably a monohydric alcohol because the efficiency of removing the polymer (I) is further improved.

Examples of the alcohol include:
alcohols having 1 carbon atom, such as methanol;
alcohols having 2 carbon atoms, such as ethanol and ethylene glycol;
alcohols having 3 carbon atoms, such as 1-propanol, 2-propanol, propylene glycol, and glycerin;
alcohols having 4 carbon atoms, such as 1-butanol, 2-butanol, 2-methyl-1-propanol, and 2-methyl-2-propanol;
alcohols having 5 carbon atoms, such as 1-pentanol, 2-pentanol, 3-pentanol, 3-methyl-1-butanol, 2-methyl-1-butanol, 2,2-dimethyl-1-propanol, 3-methyl-2-butanol, and 2-methyl-2-butanol;
alcohols having 6 carbon atoms, such as 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 3,3-dimethyl-1-butanol, 2,3-dimethyl-2-butanol, 3,3-dimethyl-2-butanol, and 2-ethyl-1-butanol;
alcohols having 7 carbon atoms, such as 1-heptanol, 2-heptanol, and 2-methyl-1-hexanol; and
fluorinated alcohols such as 5-fluorinated propanol and 1H,1H,5H-octafluoropentanol.

The alcohol is preferably an alcohol having a MolLogP in the range of 0.3 to 1.6 because the efficiency of removing the polymer (I) is further improved. MolLogP is more preferably 1.2 or less.

Examples of alcohols having a MolLogP in the range of 0.3 to 1.6 include 2-methyl-1-propanol, 2-butanol, and 1-pentanol.

MolLogP is the octanol-water partition coefficient of a compound calculated using an open-source library RDKit.

The number of carbon atoms in the alcohol is preferably 1 to 7, more preferably 2 or more, and even more preferably 3 or more, and is more preferably 5 or less, because the efficiency of removing the polymer (I) is further improved.

When using the alcohol as an organic solvent used to coagulate the fluororesin, the number of carbon atoms of the alcohol is preferably 2 to 7 and more preferably 3 or more, and is more preferably 5 or less and even more preferably 4 or less.

When using the alcohol as an organic solvent used to wash the coagulate of the fluororesin, the number of carbon atoms of the alcohol is preferably 1 to 7, more preferably 2 or more, even more preferably 3 or more, and yet more preferably 4 or more, and is more preferably 5 or less and even more preferably 4 or less.

The organic solvent is preferably at least one selected from the group consisting of methanol, 1-propanol, 2-propanol, 2-butanol, and 1-pentanol because the efficiency of removing the polymer (I) is further improved.

In particular, the organic solvent used to coagulate the fluororesin is preferably at least one selected from the group consisting of 1-propanol, 2-propanol, 2-butanol, and 1-pentanol, and is more preferably at least one selected from the group consisting of 1-propanol, 2-butanol, and 1-pentanol, because the efficiency of removing the polymer (I) is further improved.

In particular, the organic solvent used to wash the coagulate of the fluororesin is preferably at least one selected from the group consisting of methanol, 1-propanol, and 2-butanol because the efficiency of removing the polymer (I) is further improved.

The organic solvent may be used singly in coagulation or washing in the production method of the present disclosure, and when the organic solvent is water-soluble, a composition containing the organic solvent and an aqueous medium may be used.

Next, the coagulation method and the washing method used in the production method of the present disclosure will now be described in more detail.

### (Coagulation method)

In one embodiment of the production method of the present disclosure, the fluororesin is brought into contact with the organic solvent when coagulating the fluororesin in a polymerization dispersion.

The method for bringing the fluororesin into contact with the organic solvent is not limited, and examples include a method involving adding the polymerization dispersion to the organic solvent, and a method involving adding the organic solvent to the polymerization dispersion. By stirring the mixture containing the polymerization dispersion and the organic solvent, the fluororesin and the organic solvent may be sufficiently brought into contact to thereby coagulate the fluororesin in the polymerization dispersion. Also, coagulation of the fluororesin may be carried out in a batch-wise manner or in a continuous manner. The time of adding the organic solvent to the polymerization dispersion may be before coagulation or during coagulation.

Before coagulation, the content of the fluororesin in the polymerization dispersion obtained by polymerization may be regulated with water, and the content of the fluororesin in the polymerization dispersion used in coagulation may be 5 to 40% by mass or may be 5 to 20% by mass based on the polymerization dispersion.

The amount of the organic solvent used in coagulation is preferably a weight corresponding to 1.0% by mass or more based on the weight (the dry weight) of the fluororesin in the polymerization dispersion because the efficiency of removing the polymer (I) is further improved. The amount of the organic solvent used in coagulation is more preferably 5.0% by mass or more, even more preferably 10% by mass or more, and particularly preferably 20% by mass or more. The upper limit of the amount of the organic solvent used in coagulation is not limited. For example, the organic solvent can be used in an amount corresponding to the weight equal to or less than 50 times, more preferably an amount corresponding to the weight equal to or less than 10 times, and even more preferably an amount corresponding to the weight equal to or less than 5 times the weight of the fluororesin in the polymerization dispersion.

The temperature when the fluororesin in the polymerization dispersion is brought into contact with the organic solvent for coagulation is preferably 5 to 80°C, more preferably 10°C or higher, even more preferably 15°C or higher, and is more preferably 70°C or lower and even more preferably 60°C or lower, because the efficiency of removing the polymer (I) is further improved.

The pH of the polymerization dispersion obtained by polymerization may be regulated before coagulation, and the pH of the polymerization dispersion when the fluororesin in the polymerization dispersion is brought into contact with the organic solvent for coagulation is preferably within the range of 3 to 12, more preferably 4 or more, even more preferably 6 or more, and yet more preferably 8 or more, and is more preferably 11 or less and even more preferably 10 or less, because the efficiency of removing the polymer (I) is further improved.

pH can be regulated by adding acid or alkali to the polymerization dispersion. For example, when the pH of the polymerization dispersion is excessively low, alkali such as ammonia can be added to the polymerization dispersion to regulate the pH of the polymerization dispersion to the above range.

When coagulation is carried out by bringing the fluororesin in the polymerization dispersion into contact with the organic solvent, the polymer (I) is removed from the resulting coagulate, and preferably the resulting coagulate is further washed because the efficiency of removing the polymer (I) is further improved.

When obtaining a coagulate by bringing the fluororesin in the polymerization dispersion into contact with the organic solvent, an organic solvent or water can be used to wash the coagulate (the fluororesin). The method for washing the coagulate is preferably a method involving washing the coagulate with at least water. Examples of the method for washing the coagulate include a method involving washing the coagulate solely with water, and a method involving washing the coagulate with an organic solvent and then washing the coagulate with water.

Washing the coagulate (the fluororesin) with water is performed by a conventionally known method. Washing with water may be carried out once, twice, or more. Washing the coagulate (the fluororesin) may be carried out in a batch-wise manner or in a continuous manner.

### (Washing method)

In one embodiment of the production method of the present disclosure, the fluororesin is brought into contact with the organic solvent when washing the coagulate.

Washing the coagulate may be carried out on the resulting coagulate after coagulating the fluororesin in the polymerization dispersion, or may be carried out after drying the resulting coagulate. The fluororesin may be coagulated by bringing the fluororesin into contact with the organic solvent or by other coagulation methods.

Examples of other coagulation methods include a method involving stirring the polymerization dispersion to coagulate the fluororesin, and a method involving adding an inorganic salt such as potassium nitrate or ammonium carbonate and an inorganic acid such as hydrochloric acid, sulfuric acid, or nitric acid as a coagulating agent.

The temperature when the coagulate is brought into contact with the organic solvent to wash the fluororesin is preferably 5 to 80°C, more preferably 10°C or higher, and even more preferably 15°C or higher, and is more preferably 70°C or lower and even more preferably 60°C or lower, because the efficiency of removing the polymer (I) is further improved.

The amount of the organic solvent used in washing is preferably a weight corresponding to 100% by mass or more based on the weight (the dry weight) of the fluororesin because the efficiency of removing the polymer (I) is further improved. The amount of the organic solvent used in washing is more preferably 200% by mass or more and even more preferably 400% by mass or more. The amount of the organic solvent used in washing is the total amount of the organic solvent used in washing. Accordingly, when washing is performed multiple times, it is the sum of the amount of the organic solvent used each time.

The coagulate used in washing is usually a coagulate obtained by providing a polymerization dispersion by polymerization and then coagulating the fluororesin contained in the polymerization dispersion. The pH of the polymerization dispersion obtained by polymerization may be regulated before coagulation, and the pH of the polymerization dispersion before coagulation is preferably within the range of 2 to 12.

Washing the coagulate may be carried out once, twice, or more. When washing is repeated twice or more, washing with water and washing with the organic solvent may be both carried out. Washing the coagulate may be carried out in a batch-wise manner or in a continuous manner.

After the coagulate is washed with the organic solvent, preferably the coagulate is further washed with water. Washing the coagulate with water is carried out by a conventionally known method. Washing with water may be carried out once, twice, or more. Washing the coagulate (the fluororesin) may be carried out in a batch-wise manner or in a continuous manner.

After washing the fluororesin, the fluororesin may be dried. Drying will be described in detail below.

Next, a method for preparing the polymerization dispersion to be subjected to coagulation and washing will now be described in more detail.

### (Preparation of polymerization dispersion)

The polymerization dispersion used in the production method of the present disclosure is produced by polymerizing TFE in an aqueous medium in the presence of a polymer (I). By polymerizing a fluoromonomer containing at least TFE in an aqueous medium in the presence of a polymer (I), a so-called emulsion polymerization reaction proceeds and, usually, a polymerization dispersion in which fluororesin particles are dispersed in the aqueous medium is obtained. Next, the fluororesin particles can be coagulated to recover the fluororesin in the polymerization dispersion.

### (Polymer (I))

The polymer (I) used in the production method of the present disclosure contains a polymerization unit (I) derived from a monomer (I) represented by the general formula (I):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

In the present disclosure, the anionic group includes a functional group that imparts an anionic group, e.g., an acid group such as -COOH and an acid base such as -COONH₄, in addition to anionic groups such as a sulfate group and a carboxylate group. The anionic group is preferably a sulfate group, a carboxylate group, a phosphate group, a phosphonate group, a sulfonate group, or -C(CF₃)₂OM, wherein M is -H, a metal atom, -NR⁷₄, imidazolium optionally having a substituent, pyridinium optionally having a substituent, or phosphonium optionally having a substituent, and R⁷ is H or an organic group.

In the production method of the present disclosure, one monomer (I) represented by the general formula (I) can be used singly, and two or more monomers (I) can be used as well.

R is a linking group. The "linking group" in the present disclosure is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may contain no carbon atoms, and may be a catenary heteroatom such as oxygen, sulfur, or nitrogen.

m is an integer of 1 or more, and is preferably 1 or 2 and more preferably 1. When m is an integer of 2 or more, Z¹, Z², and A⁰ may be the same or different.

Next, a suitable configuration wherein m is 1 in the general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with halogen other than fluorine, such as chlorine, and the divalent organic group may or may not contain a double bond. R may be linear or branched, and may be cyclic or acyclic. Also, R may contain a functional group (such as ester, ether, ketone (a keto group), amine, or halide).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond or a keto group, wherein some or all of the hydrogen atoms bonded to carbon atoms in the hydrocarbon group may be replaced with fluorine.

R is preferably at least one selected from -(CH₂)ₐ-, - (CF₂)ₐ-, -(CF₂)ₐ-O-, -O-(CF₂)ₐ-, -(CF₂)ₐ-O-(CF₂)_{b}-, -O(CF₂)ₐ-O-(CF₂)_{b}-, (CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-, -O[(CF₂)ₐ-O]_{b}-[(CF₂)_{c}-O]_{d}-, -O-[CF₂CF(CF₃)O]ₐ-(CF₂)_{b}-, -O-(CF₂)ₐ-O-[CF(CF₃)CF₂O]_{b}-, -O-[CF₂CF(CF₃)O]ₐ-(CF₂)_{b}-O-, -O-[CF₂CF(CF₃)O]ₐ-(CF₂)_{b}-O-[CF(CF₃)CF₂O]_{c}-, -[CF₂CF(CF₃)O]ₐ-, -[CF(CF₃)CF₂O]ₐ-, -(CF₂)ₐ-O-[CF(CF₃)CF₂O]ₐ-, -(CF₂)ₐ-O-[CF(CF₃)CF₂O]ₐ-(CF₂)_{b}-, -[CF₂CF(CF₃)]ₐ-CO-(CF₂)_{b}-, and a combination thereof.

In the formulae, a, b, c, and d are independently at least 1 or more. a, b, c, and d may independently be 2 or more, 3 or more, 4 or more, 10 or more, or 20 or more. The upper limits of a, b, c, and d are, for example, 100.

R is more preferably at least one selected from -O-CF₂-, - O-CF₂CF₂-, -O-CF₂CF₂-O-, -O-CF₂CF₂CF₂-, -O-CF₂CF₂CF₂-O-, -O-CF₂CF(CF₃)-O-, -O-CF₂CF₂-O-CF(CF₃)CF₂-O-, -O-CF₂CF(CF₃)-O-CF₂CF₂-O-, and -O-CF₂CF(CF₃)-O-CF₂-.

R is preferably a divalent group represented by the general formula (r1):

-CF₂-O-(CX⁶₂)ₑ-{O-CF(CF₃)}_{f}-(O)_{g}- (r1)

(wherein X⁶ is each independently H, F, or CF₃; e is an integer of 0 to 3; f is an integer of 0 to 3; and g is 0 or 1), and more preferably a divalent group represented by the general formula (r2):

-CF₂-O-(CX⁷₂)ₑ-(O)_{g}- (r2)

(wherein X⁷ is each independently H, F, or CF₃; e is an integer of 0 to 3; and g is 0 or 1).

Specific suitable examples of R include -CF₂-O-, -CF₂-O-CF₂-, -CF₂-O-CH₂-, -CF₂-O-CH₂CF₂-, -O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF₂CH₂-, -CF₂-O-CF₂CF₂CH₂-, -CF₂-O-CF (CF₃)-, -CF₂-O-CF (CF₃)CF₂-, -CF₂-O-CF(CF₃)CF₂-O-, -CF₂-O-CF(CF₃)CF₂-O-CF₂-, and -CF₂-O-CF(CF₃)CH₂-. In particular, R is preferably a perfluoroalkylene group optionally containing an oxygen atom and, specifically, is preferably -CF₂-O-, -CF₂-O-CF₂-, -O-CF₂-, -O-CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF(CF₃)-, -CF₂-O-CF(CF₃)CF₂-, or - CF₂-O-CF(CF₃)CF₂-O-.

-R-CZ¹Z²- in the general formula (I) is preferably represented by the general formula (s1):

-CF₂-O-(CX⁶₂)ₑ-{O-CF(CF₃)}_{f}-(O)_{g}-CZ¹Z²- (s1)

(wherein X⁶ is each independently H, F, or CF₃; e is an integer of 0 to 3; f is an integer of 0 to 3; g is 0 or 1; and Z¹ and Z² are each independently H, F, an alkyl group, or a fluorine-containing alkyl group), and more preferably, in the formula (s1), Z¹ and Z² are F or CF₃, and yet more preferably one is F, and the other is CF₃.

Also, -R-CZ¹Z²- in the general formula (I) is preferably represented by the general formula (s2):

-CF₂-O-(CX⁷₂)ₑ-(O)_{g}-CZ¹Z²- (s2)

(wherein X⁷ is each independently H, F, or CF₃; e is an integer of 0 to 3; g is 0 or 1; and Z¹ and Z² are each independently H, F, an alkyl group, or a fluorine-containing alkyl group), and more preferably, in the formula (s2), Z¹ and Z² are F or CF₃, and yet more preferably one is F, and the other is CF₃.

-R-CZ¹Z²- in the general formula (I) is preferably -CF₂-O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -O-CF₂CF(CF₃)-O-CF₂CF₂CF₂-, -CF₂-O-CF(CF₃)-, -CF₂-O-C(CF₃)₂-, -CF₂-O-CF₂-CF₂-, -CF₂-O-CF₂-CF (CF₃)-, -CF₂-O-CF₂-C (CF₃)₂-, -CF₂-O-CF₂CF₂-CF₂-, -CF₂-O-CF₂CF₂-CF(CF₃)-, - CF₂-O-CF₂CF₂-C(CF₃)₂-, -CF₂-O-CF(CF₃)-CF₂-, -CF₂-O-CF (CF₃)-CF(CF₃)-, -CF₂-O-CF(CF₃)-C(CF₃)₂-, -CF₂-O-CF(CF₃)CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, or -CF₂-O-CF(CF₃)CF₂-O-C(CF₃)₂-, more preferably -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, - CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, or -CF₂-O-CF(CF₃)CF₂-O-CF(CF₃)-, and even more preferably -O-CF₂CF₂- and - O-CF₂CF(CF₃)-O-CF₂CF₂-.

Also preferably, the polymer (I) is highly fluorinated. Except for the anionic group (A⁰) such as a phosphate group moiety (such as CH₂OP(O)(OM)₂) or a sulfate group moiety (such as CH₂OS(O)₂OM), 80% or more, 90% or more, 95% or more, or 100% of the C-H bonds in the polymer (I) are preferably replaced with C-F bonds.

The monomer (I) and the polymer (I) also preferably have a C-F bond and does not have a C-H bond, except for the anionic group (A⁰). In other words, in the general formula (I), preferably, X¹, X², and X³ are all F, and R is a perfluoroalkylene group having one or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The monomer (I) and the polymer (I) may be partially fluorinated. That is to say, the monomer (I) and the polymer (I) also preferably have at least one hydrogen atom bonded to a carbon atom and at least one fluorine atom bonded to a carbon atom, in the portion excluding the anionic group (A⁰).

The anionic group (A⁰) may be -SO₂M, -SO₃M, -OSO₃M, -COOM, -SO₂NR'CH₂COOM, -CH₂OP(O)(OM)₂, [-CH₂O]₂P(O)(OM), - CH₂CH₂OP(O)(OM)₂, [-CH₂CH₂O]₂P(O)(OM), -CH₂CH₂OSO₃M, -P(O)(OM)₂, - SO₂NR'CH₂CH₂OP(O)(OM)₂, [-SO₂NR'CH₂CH₂O]₂P(O)(OM), -CH₂OSO₃M, - SO₂NR'CH₂CH₂OSO₃M, or -C(CF₃)₂OM. In particular, it is preferably -SO₃M, -OSO₃M, -COOM, -P(O)(OM)₂, or -C(CF₃)₂OM; more preferably -COOM, -SO₃M, -OSO₃M, -P(O)(OM)₂, or -C(CF₃)₂OM; even more preferably -SO₃M, -COOM, or -P(O)(OM)₂; and particularly preferably -SO₃M or -COOM.

M is H, a metal atom, NR⁷₄, optionally substituted imidazolium, optionally substituted pyridinium, or optionally substituted phosphonium, wherein R⁷ is H or an organic group.

Examples of the metal atom include alkali metals (Group 1) and alkaline earth metals (Group 2), and Na, K, or Li is preferable.

M is preferably -H, a metal atom, or -NR⁷₄, more preferably -H, an alkali metal (Group 1), an alkaline earth metal (Group 2), or -NR⁷₄, even more preferably -H, -Na, -K, - Li, or -NH₄, yet more preferably -H, -Na, -K, or -NH₄, particularly preferably -H, -Na or -NH₄, and most preferably -H, or -NH₄.

In the polymer (I), each polymerization unit (I) may have a different anionic group or may have the same anionic group.

The monomer (I) is also preferably a monomer represented by the general formula (Ia). The polymer (I) is also preferably a polymer containing a polymerization unit (Ia) derived from a monomer represented by the general formula (Ia):

CF₂=CF-O-Rf⁰-A⁰ (Ia)

wherein A⁰ is an anionic group; and Rf⁰ is a perfluorinated divalent linking group that is perfluorinated, may be a linear or branched, cyclic or acyclic, saturated or unsaturated, substituted or unsubstituted, and optionally contains one or more heteroatoms selected from the group consisting of sulfur, oxygen, and nitrogen.

The monomer (I) is also preferably a monomer represented by the general formula (Ib).

The polymer (I) is also preferably a polymer containing a polymerization unit (Ib) derived from a monomer represented by the general formula (Ib):

CH₂=CH-O-Rf⁰-A⁰ (Ib)

wherein A⁰ is an anionic group, and Rf⁰ is a perfluorinated divalent linking group as defined by the formula (Ia).

In one preferable embodiment, A⁰ in the general formula (I) is a sulfate group. A⁰ is, for example, -CH₂OSO₃M, - CH₂CH₂OSO₃M, or -SO₂NR'CH₂CH₂OSO₃M, wherein R' is H or an alkyl group having 1 to 4 carbon atoms, and M is as described above.

When A⁰ is a sulfate group, examples of the monomer represented by the general formula (I) include CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH(O(CF₂)₄CH₂OSO₃M), CF₂=CF(OCF₂CF₂SO₂N(CH₃)CH₂CH₂OSO₃M), CH₂=CH(OCF₂CF₂CH₂OSO₃M), CF₂=CF(OCF₂CF₂CF₂CF₂SO₂N(CH₃)CH₂CH₂OSO₃M), and CH₂=CH(OCF₂CF₂CF₂CH₂OSO₃M). In the formulae, M is as described above.

In one preferable embodiment, A⁰ in the general formula (I) is a sulfonate group. A⁰ is, for example, -SO₃M, wherein M is as described above.

When A⁰ is a sulfonate group, examples of the monomer represented by the general formula (I) include CF₂=CF(OCF₂CF₂SO₃M), CF₂=CF(O(CF₂)₃SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(OCF₂CF₂SO₃M), CF₂=CF(OCF₂CF(CF₃)OCF₂CF₂CF₂CF₂SO₃M), CH₂=CH(O(CF₂)₄SO₃M), and CH₂=CH(O(CF₂)₃SO₃M). In the formulae, M is as described above.

In one preferable embodiment, A⁰ in the general formula (I) is a carboxylate group. A⁰ is, for example, COOM or SO₂NR'CH₂COOM, wherein R' is H or an alkyl group having 1 to 4 carbon atoms, and M is as described above. When A⁰ is a carboxylate group, examples of the monomer represented by the general formula (I) include CF₂=CF(OCF₂CF₂COOM), CF₂=CF(O(CF₂)₃COOM), CF₂=CF(O(CF₂)₄COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(OCF₂CF₂COOM), CH₂=CH(O(CF₂)₄COOM), CH₂=CH(O(CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CH(OCF₂CF₂SO₂NR'CH₂COOM), CF₂=CF(OCF₂CF(CF₃)OCF₂CF₂CF₂CF₂SO₂NR'CH₂COOM), CH₂=CH(O(CF₂)₄SO₂NR'CH₂COOM), and CH₂=CH(O(CF₂)₃SO₂NR'CH₂COOM). In the formulae, R' is H or an alkyl group having 1 to 4 carbon atoms, and M is as described above.

In one preferable embodiment, A⁰ in the general formula (I) is a phosphate group. A⁰ is, for example, -CH₂OP(O)(OM)₂, [-CH₂O]₂P(O)(OM), -CH₂CH₂OP(O)(OM)₂, [-CH₂CH₂O]₂P(O)(OM), [-SO₂NR'CH₂CH₂O]₂P(O)(OM), or SO₂NR'CH₂CH₂OP(O)(OM)₂, wherein R' is an alkyl group having 1 to 4 carbon atoms, and M is as described above.

When A⁰ is a phosphate group, examples of the monomer represented by the general formula (I) include CF₂=CF(OCF₂CF₂CH₂OP(O)(OM) ₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM) ₂), CF₂=CF(OCF₂CF₂CF₂CF₂SO₂N(CH₃)CH₂CH₂OP(O)(OM) ₂), CH₂=CH(OCF₂CF₂CH₂OP(O)(OM)₂), CH₂=CH(O(CF₂)₄CH₂OP(O)(OM)₂), and CH₂=CH(O(CF₂)₃CH₂OP(O)(OM)₂). In the formulae, M is as described above.

In one preferable embodiment, A⁰ in the general formula (I) is a phosphonate group. When A⁰ is a phosphonate group, examples of the monomer represented by the general formula (I) include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(OCF₂CF₂P(O)(OM)₂), CH₂=CH(O(CF₂)₄P(O)(OM)₂), and CH₂=CH(O(CF₂)₃P(O)(OM)₂), wherein M is as described above.

The monomer (I) is preferably a monomer (1) represented by the general formula (1).

The polymer (I) is preferably a polymer (1) containing a polymerization unit (1) derived from a monomer represented by the general formula (1):

CX₂=CY(-CZ₂-O-Rf-A) (1)

wherein X is the same or different and is -H or F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or -C(CF₃)₂OM, where M is -H, a metal atom, -NR⁷₄, optionally substituted imidazolium, optionally substituted pyridinium, or optionally substituted phosphonium, and R⁷ is H or an organic group, provided that at least one of X, Y, and Z contains a fluorine atom.

In the production method of the present disclosure, the monomer (1) represented by the general formula (1) and a further monomer may be copolymerized.

The polymer (1) may be a homopolymer of the monomer (1) represented by the general formula (1), or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (1), X is -H or F. Both X may be - F, or at least one may be -H. For example, one may be -F and the other may be -H, or both may be -H.

In the general formula (1), Y is -H, -F, an alkyl group, or a fluorine-containing alkyl group. The alkyl group is an alkyl group not containing a fluorine atom, and may have one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is preferably -H, -F, or CF₃, and more preferably - F.

In the general formula (1), Z is the same or different, and is -H, -F, an alkyl group, or a fluoroalkyl group. The alkyl group is an alkyl group not containing a fluorine atom, and may have one or more carbon atoms. The alkyl group preferably has 6 or fewer carbon atoms, more preferably 4 or fewer carbon atoms, and even more preferably 3 or fewer carbon atoms. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Z is preferably -H, -F, or CF₃, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or fewer carbon atoms, more preferably 20 or fewer carbon atoms, even more preferably 10 or fewer carbon atoms, particularly preferably 6 or fewer carbon atoms, and most preferably 3 or fewer carbon atoms. Examples of the fluorine-containing alkylene group include -CF₂-, -CH₂CF₂-, - CF₂CF₂-, -CF₂CH₂-, -CF₂CF₂CF₂-, -CF₂CF₂CH₂-, -CF(CF₃)-, - CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group, for example, represented by the general formula: 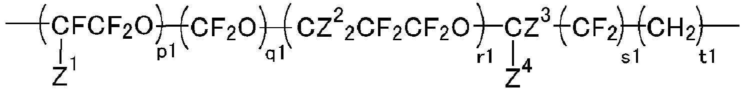 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF(CF₃)CH₂-, -(CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (1), A is -COOM, -SO₃M, -OSO₃M, or -C(CF₃)₂OM, wherein M is H, a metal atom, NR⁷₄, optionally substituted imidazolium, optionally substituted pyridinium, or optionally substituted phosphonium, and R⁷ is H or an organic group.

R⁷ is preferably H or a C₁₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and Na, K, or Li is preferable.

M is preferably H, a metal atom, or NR⁷₄, more preferably H, an alkali metal (Group 1), an alkaline earth metal (Group 2), or NR⁷₄, even more preferably H, Na, K, Li, or NH₄, yet more preferably H, Na, K, or NH₄, particularly preferably H, Na or NH₄, and most preferably H or NH₄.

A is preferably -COOM or -SO₃M.

Examples of the monomer represented by the general formula (1) include the monomer represented by the general formula (1a):

CX₂=CFCF₂-O-(CF(CF₃)CF₂O)ₙ₅-CF(CF₃)-A (1a)

wherein each X is the same and represents F or H; n5 represents an integer of 1 to 10; and A is as defined above.

In the general formula (1a), n5 is preferably 0 or an integer of 1 to 5, more preferably 0, 1, or 2, and even more preferably 0 or 1, from the viewpoint of obtaining particles having a small primary particle size.

In the production method of the present disclosure, the monomer represented by the general formula (1a) and a further monomer may be copolymerized.

The polymer (1) may be a homopolymer of the monomer represented by the general formula (1a) or a copolymer with a further monomer.

The monomer (1) is preferably a monomer represented by the general formula (1A) below.

The polymerization unit (1) is preferably a polymerization unit (1A) derived from a monomer represented by the general formula (1A):

CH₂=CF(-CF₂-O-Rf-A) (1A)

wherein Rf and A are as described above.

In the production method of the present disclosure, the monomer represented by the general formula (1A) and a further monomer may be copolymerized.

The polymer (1) may be a homopolymer of the monomer represented by the general formula (1A), or may be a copolymer with a further monomer.

Specific examples of the monomer represented by the formula (1A) include a monomer represented by the following formula: 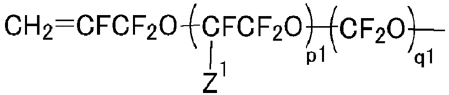 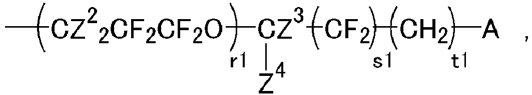 wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5, provided that when Z³ and Z⁴ are both H, p1+q1+r1+s1 is not 0; and A is as defined above. More specifically, preferable examples include

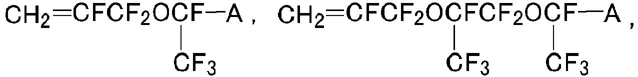

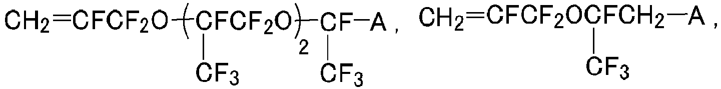

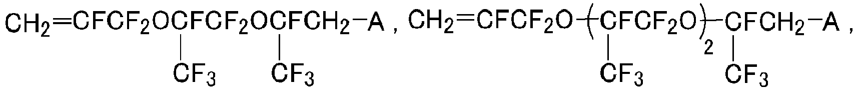

CH₂=CFCF₂OCH₂CF₂-A, CH₂=CFCF₂O(CH₂CF₂CF₂O)CH₂CF₂-A,

CH₂=CFCF₂OCH₂CF₂CH₂-A,

CH₂=CFCF₂O(CH₂CF₂CF₂O)CH₂CF₂CH₂-A,

CH₂=CFCF₂OCF₂CF₂-A, CH₂=CFCF₂O(CF₂CF₂CF₂O)CF₂CF₂-A,

CH₂=CFCF₂OCF₂CF₂CH₂-A,

CH₂=CFCF₂O(CF₂CF₂CF₂O)CF₂CF₂CH₂-A,

CH₂=CFCF₂OCF₂-A, CH₂=CFCF₂O(CF₂CF₂O)CF₂-A,

CH₂=CFCF₂OCF₂CH₂-A,

CH₂=CFCF₂O(CF₂CF₂O)CF₂CH₂-A,

and, in particular, 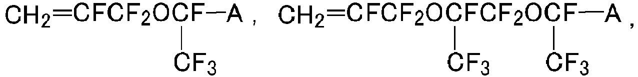 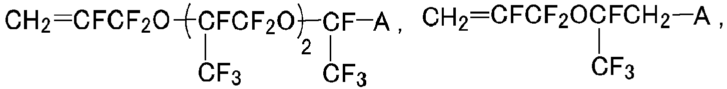 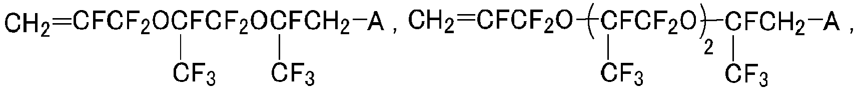 are preferable.

In the monomer represented by the general formula (1A), A in the formula (1A) is preferably -COOM, and, in particular, at least one selected from the group consisting of CH₂=CFCF₂OCF(CF₃)COOM and CH₂=CFCF₂OCF(CF₃)CF₂OCF(CF₃)COOM (wherein M is as defined above) is preferable, and CH₂=CFCF₂OCF(CF₃)COOM is more preferable.

Examples of the monomer represented by the general formula (1) further include monomers represented by the following formula:

CF₂=CFCF₂-O-Rf-A

wherein Rf and A are as described above.

More specifically, examples include

CF₂=CFCF₂OCF₂CF₂CF₂-A,

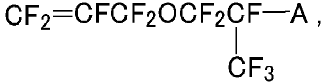

CF₂=CFCF₂OCF₂CF₂CF₂CH₂-A,

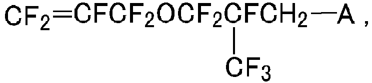

and the like.

The monomer (I) is also preferably a monomer (2) represented by the general formula (2).

The polymer (I) is also preferably a polymer (2) containing a polymerization unit (2) derived from a monomer represented by the general formula (2):

CX₂=CY(-O-Rf -A) (2)

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

In the production method of the present disclosure, the monomer (2) represented by the general formula (2) and a further monomer may be copolymerized.

The polymer (2) may be a homopolymer of the monomer represented by the general formula (2) or may be a copolymer with a further monomer.

In the general formula (2), X is -H or F. Both X may be - F, or at least one may be -H. For example, one may be -F and the other may be -H, or both may be -H.

In the general formula (2), Y is -H, -F, an alkyl group, or a fluorine-containing alkyl group. The alkyl group is an alkyl group not containing a fluorine atom, and may have one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is preferably -H, -F, or -CF₃, and more preferably -F.

In the general formula (2), at least one of X and Y preferably contains a fluorine atom. For example, X may be -H, and Y and Z may be -F.

In the general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group that does not include a structure in which an oxygen atom is an end and that contains an ether bond between carbon atoms.

The number of carbon atoms of the fluorine-containing alkylene group of Rf is preferably 2 or more. The number of carbon atoms is preferably 30 or less, more preferably 20 or less, even more preferably 10 or less, and particularly preferably 5 or less. Examples of the fluorine-containing alkylene group include -CF₂-, -CH₂CF₂-, -CF₂CF₂-, -CF₂CH₂-, - CF₂CF₂CH₂-, -CF(CF₃)-, -CF(CF₃)CF₂-, -CF(CF₃)CH₂-, -CF₂CF₂CF₂-, and -CF₂CF₂CF₂CF₂-. The fluorine-containing alkylene group is preferably a perfluoroalkylene group, and more preferably an unbranched linear perfluoroalkylene group.

The fluorine-containing alkylene group having an ether bond preferably has 3 or more carbon atoms. The fluorine-containing alkylene group having an ether bond preferably has 60 or fewer carbon atoms, more preferably 30 or fewer carbon atoms, even more preferably 12 or fewer carbon atoms, and particularly preferably 5 or fewer carbon atoms. The fluorine-containing alkylene group having an ether bond is also preferably a divalent group, for example, represented by the general formula: 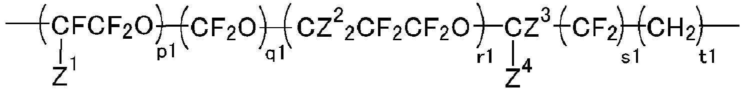 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF₂CF(CF₃)OCF₂CF₂-, -CF₂CF(CF₃)OCF₂CF₂CF₂-, -CF(CF₃)CF₂-O-CF(CF₃)-, - (CF(CF₃)CF₂-O)ₙ-CF(CF₃)- (where n is an integer of 1 to 10), - CF(CF₃)CF₂-O-CF(CF₃)CH₂-, - (CF(CF₃)CF₂-O)ₙ-CF(CF₃)CH₂- (where n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

The fluorine-containing alkylene group having a keto group preferably has 3 or more carbon atoms. The fluorine-containing alkylene group having a keto group preferably has 60 or fewer carbon atoms, more preferably 30 or fewer carbon atoms, even more preferably 12 or fewer carbon atoms, and particularly preferably 5 or fewer carbon atoms.

Specific examples of the fluorine-containing alkylene group having a keto group include -CF₂CF(CF₃)CO-CF₂-, - CF₂CF(CF₃)CO-CF₂CF₂-, -CF₂CF(CF₃)CO-CF₂CF₂CF₂-, and -CF₂CF(CF₃)CO-CF₂CF₂CF₂CF₂-. The fluorine-containing alkylene group having a keto group is preferably a perfluoroalkylene group.

Water may be added to the keto group in the fluorine-containing alkylene group. Accordingly, the monomer (2) may be a hydrate. Examples of the fluorine-containing alkylene group in which water is added to the keto group include - CF₂CF(CF₃)C(OH)₂-CF₂-, -CF₂CF(CF₃)C(OH)₂-CF₂CF₂-, - CF₂CF(CF₃)C(OH)₂-CF₂CF₂CF₂-, and -CF₂CF(CF₃)C(OH)₂-CF₂CF₂CF₂CF₂-.

The monomer represented by the general formula (2) is preferably at least one selected from the group consisting of monomers represented by the following general formulae (2a), (2b), (2c), (2d), (2e), (2f), and (2g):

CF₂=CF-O-(CF₂)-A (2a)

wherein n1 represents an integer of 1 to 10, and A is as defined above;

CF₂=CF-O-(CF₂C(CF₃)F)ₙ₂-A (2b)

wherein n2 represents an integer of 1 to 5, and A is as defined above;

CF₂=CF-O-(CFX¹)ₙ₃-A (2c)

wherein X¹ represents F or CF₃, n3 represents an integer of 1 to 10, and A is as defined above;

CF₂=CF-O-(CF₂CFX¹O)ₙ₄-(CF₂)ₙ₆-A (2d)

wherein n4 represents an integer of 1 to 10, n6 represents an integer of 1 to 3, and A and X¹ are as defined above;

CF₂=CF-O-(CF₂CF₂CFX¹O)ₙ₅-CF₂CF₂CF₂-A (2e)

wherein n5 represents an integer of 0 to 10, and A and X¹ are as defined above;

CF₂=CF-O-(CF₂)ₙ₇-O-(CF₂)ₙ₈-A (2f)

wherein n7 represents an integer of 1 to 10, n8 represents an integer of 1 to 3, and A is as defined above; and

CF₂=CF[OCF₂CF(CF₃)]n₉O(CF₂)ₙ₁₀O[CF(CF₃)CF₂O]ₙ₁₁CF(CF₃)-A (2g)

wherein n9 represents an integer of 0 to 5, n10 represents an integer of 1 to 8, n11 represents an integer of 0 to 5, and A is as defined above.

In the general formula (2a), n1 is preferably an integer of 5 or less, and more preferably an integer of 2 or less.

Examples of the monomer represented by the general formula (2a) include CF₂=CF-O-CF₂COOM, CF₂=CF(OCF₂CF₂COOM), CF₂=CF(O(CF₂)₃COOM), CF₂=CF(OCF₂CF₂SO₃M), CF₂=CFOCF₂SO₃M, and CF₂=CFOCF₂CF₂CF₂SO₃M, wherein M is as defined above.

In the general formula (2b), n2 is preferably an integer of 3 or less from the viewpoint of the dispersion stability of the resulting composition.

In the general formula (2c), n3 is preferably an integer of 5 or less from the viewpoint of water solubility, A is preferably -COOM, and M is preferably H, Na, or NH₄.

In the general formula (2d), X¹ is preferably -CF₃ from the viewpoint of the dispersion stability of the composition, n4 is preferably an integer of 5 or less from the viewpoint of water solubility, A is preferably -COOM, and M is preferably H, Na, or NH₄.

Examples of the monomer represented by the general formula (2d) include CF₂=CFOCF₂CF(CF₃)OCF₂CF₂COOM, CF₂=CFOCF₂CF(CF₃)OCF₂COOM, CF₂=CFOCF₂CF(CF₃)OCF₂CF₂CF₂COOM, CF₂=CFOCF₂CF(CF₃)OCF₂SO₃M, CF₂=CFOCF₂CF(CF₃)OCF₂CF₂SO₃M, and CF₂=CFOCF₂CF(CF₃)OCF₂CF₂CF₂SO₃M, wherein M represents H, NH₄, or an alkali metal.

In the general formula (2e), n5 is preferably an integer of 5 or less from the viewpoint of water solubility, A is preferably -COOM, and M is preferably H or NH₄.

An example of the monomer represented by the general formula (2e) may be CF₂=CFOCF₂CF₂CF₂COOM, wherein M represents H, Na, NH₄, or an alkali metal.

In the general formula (2f), n7 is preferably an integer of 5 or less from the viewpoint of water solubility, and A is preferably -COOM or -SO₃M, and more preferably -COOM. M is preferably H, Na, K, or NH₄.

An example of the monomer represented by the general formula (2f) may be CF₂=CF-O-(CF₂)₃-O-CF₂-COOM, wherein M represents H, NH₄, or an alkali metal.

In the general formula (2g), n9 is preferably an integer of 3 or less from the viewpoint of water solubility, n10 is preferably an integer of 3 or less, n11 is preferably an integer of 3 or less, and A is preferably -COOM or -SO₃M, and more preferably -COOM. M is preferably H, Na, K, or NH₄.

Examples of the monomer represented by the general formula (2g) include CF₂=CFO(CF₂)₂OCF(CF₃)COOM, CF₂=CFOCF₂CF₂OCF(CF₃)CF₂OCF(CF₃)COOM, CF₂=CFOCF₂CF(CF₃)OCF₂CF₂OCF(CF₃)COOM, CF₂=CF[OCF₂CF(CF₃)]₂O(CF₂)₂O[CF(CF₃)CF₂O]CF(CF₃)COOM, and CF₂=CF[OCF₂CF(CF₃)]₃O(CF₂)₂O[CF(CF₃)CF₂O]₃CF(CF₃)COOM, wherein M represents H, NH₄, or an alkali metal.

The monomer (I) is also preferably a monomer (3) represented by the general formula (3).

The polymer (I) is also preferably a polymer (3) containing a polymerization unit (3) derived from a monomer represented by the general formula (3):

CX₂=CY(-Rf-A) (3)

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

In the production method of the present disclosure, the monomer (3) represented by the general formula (3) and a further monomer may be copolymerized.

The polymer (3) may be a homopolymer of the monomer represented by the general formula (3) or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (3), Rf is preferably a fluorine-containing alkylene group having 1 to 40 carbon atoms. In the general formula (3), at least one of X and Y preferably contains a fluorine atom.

The monomer represented by the general formula (3) is preferably at least one selected from the group consisting of monomers represented by the general formula (3a):

CF₂=CF-(CF₂)ₙ₁-A (3a)

wherein n1 represents an integer of 1 to 10, and A is as defined above; and a monomer represented by the general formula (3b):

CF₂=CF-(CF₂C(CF₃)F)ₙ₂-A (3b)

wherein n2 represents an integer of 1 to 5, and A is as defined above.

In the general formula (3a) and the general formula (3b), A is preferably -SO₃M or COOM, and M is preferably H, a metal atom, NR⁷₄, optionally substituted imidazolium, optionally substituted pyridinium, or optionally substituted phosphonium. R⁷ represents H or an organic group.

In the general formula (3a), n1 is preferably an integer of 5 or less, and more preferably an integer of 2 or less. A is preferably -COOM, and M is preferably H or NH₄.

Examples of the monomer represented by the general formula (3a) include CF₂=CFCF₂COOM, wherein M is as defined above.

In the general formula (3b), n2 is preferably an integer of 3 or less from the viewpoint of the dispersion stability of the resulting composition, A is preferably -COOM, and M is preferably H or NH₄.

Next, a suitable configuration wherein m is an integer of 2 or more in the general formula (I) will now be described.

The monomer (I) is also preferably at least one selected from the group consisting of monomers represented by the general formula (4a) and the general formula (4b).

The polymer (I) is also preferably a polymer (4) containing a polymerization unit (4) derived from at least one monomer selected from the group consisting of monomers represented by the general formulae (4a) and (4b):

CF₂=CF-CF₂-O-Q^{F1}-CF(-Q^{F2}-CZ¹Z²-A)₂ (4a)

wherein Z¹, Z², and A are as defined above, and Q^{F1} and Q^{F2} are the same or different and are a single bond, a fluorine-containing alkylene group optionally containing an ether bond between carbon atoms, or a fluorine-containing oxyalkylene group optionally containing an ether bond between carbon atoms; and

CF₂=CF-O-Q^{F1}-CF(-Q^{F2}-CZ¹Z²-A)₂ (4b)

wherein Z¹, Z², A, Q^{F1}, and Q^{F2} are as defined above.

Examples of the monomers represented by the general formulae (4a) and (4b) include: 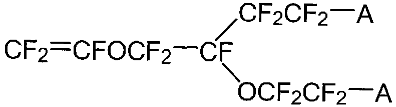 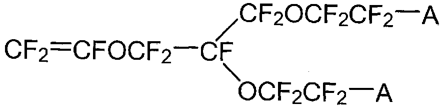 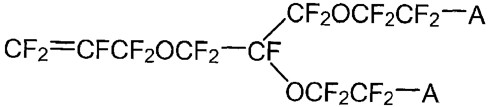 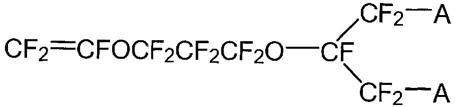 and the like.

The monomer (I) is preferably at least one selected from the group consisting of the monomer (1), the monomer (2), and the monomer (3), more preferably the monomer (1), and even more preferably the monomer (1A).

The polymer (I) is preferably at least one selected from the group consisting of the polymer (1), the polymer (2), and the polymer (3), and the polymer (1) is more preferable.

In the production method of the present disclosure, the monomer (I) and a further monomer may be copolymerized.

The polymer (I) may be a homopolymer composed solely of the polymerization unit (I), or may be a copolymer containing the polymerization unit (I) and a polymerization unit derived from a further monomer copolymerizable with the monomer represented by the general formula (I). From the viewpoint of solubility in an aqueous medium, a homopolymer composed solely of the polymerization unit (I) is preferable. The polymerization unit (I) may be the same or different at each occurrence, and may contain the polymerization unit (I) derived from two or more different monomers represented by the general formula (I).

The further monomer is preferably a monomer represented by the general formula CFR=CR₂ wherein R is independently H, F, or a perfluoroalkyl group having 1 to 4 carbon atoms. Also, the further monomer is preferably a fluorine-containing ethylenic monomer having 2 or 3 carbon atoms. Examples of the further monomer include CF₂=CF₂, CF₂=CFCl, CH₂=CF₂, CFH=CH₂, CFH=CF₂, CF₂=CFCF₃, CH₂=CFCF₃, CH₂=CHCF₃, CHF=CHCF₃ (E-form), and CHF=CHCF₃ (Z-form).

In particular, from the viewpoint of good copolymerizability, at least one selected from the group consisting of tetrafluoroethylene (CF₂=CF₂), chlorotrifluoroethylene (CF₂=CFCl), and vinylidene fluoride (CH₂=CF₂) is preferable, and at least one selected from the group consisting of tetrafluoroethylene and vinylidene fluoride is more preferable. Accordingly, the polymerization unit derived from the further monomer is preferably a polymerization unit derived from tetrafluoroethylene. The polymerization unit derived from the further monomer may be the same or different at each occurrence, and the polymer (I) may contain a polymerization unit derived from two or more different further monomers.

Examples of the further monomer also include a monomer represented by the following general formula (n1-2): 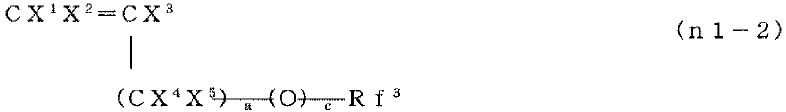 wherein X¹ and X² are the same or different and are each H or F; X³ is H, F, Cl, CH₃, or CF₃; X⁴ and X⁵ are the same or different and are each H or F; and a and c are the same or different and are each 0 or 1; and Rf³ is a fluorine-containing alkyl group having 1 to 40 carbon atoms, or a fluorine-containing alkyl group having 2 to 100 carbon atoms and having an ether bond.

Specifically, preferable examples include CH₂=CFCF₂-O-Rf³, CF₂=CF-O-Rf³, CF₂=CFCF₂-O-Rf³, CF₂=CF-Rf³, CH₂=CH-Rf³, and CH₂=CH-O-Rf³, wherein Rf³ is as in the above formula (n1-2).

Another example of the further monomer is a fluorine-containing acrylate monomer represented by the formula (n2-1): 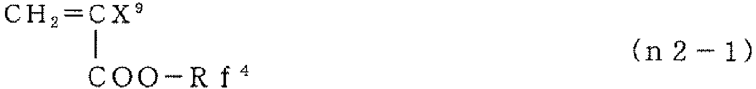 wherein X⁹ is H, F, or CH₃; and Rf⁴ is a fluorine-containing alkyl group having 1 to 40 carbon atoms, or a fluorine-containing alkyl group having 2 to 100 carbon atoms and having an ether bond. Examples of the Rf⁴ group include: 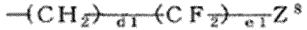 wherein Z⁸ is H, F, or Cl; d1 is an integer of 1 to 4; and e1 is an integer of 1 to 10,
-CH(CF₃)₂, 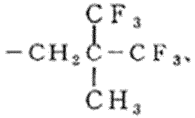 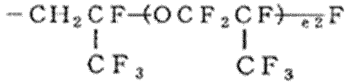 wherein e2 is an integer of 1 to 5, 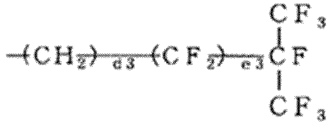 wherein d3 is an integer of 1 to 4; and e3 is an integer of 1 to 10.

Another example of the further monomer is a fluorine-containing vinyl ether represented by the following formula (n2-2):

CH₂=CHO-Rf⁵ (n2-2)

wherein Rf⁵ is a fluorine-containing alkyl group having 1 to 40 carbon atoms, or a fluorine-containing alkyl group having 2 to 100 carbon atoms and having an ether bond.

Specifically, preferable examples of the monomer represented by the general formula (n2-2) include: 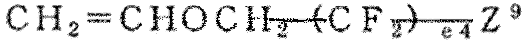 wherein Z⁹ is H or F; and e4 is an integer of 1 to 10, 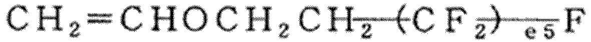 wherein e5 is an integer of 1 to 10, 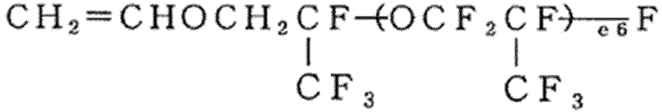 wherein e6 is an integer of 1 to 10.

More specific examples include:

CH₂=CHOCH₂CF₂CF₂H

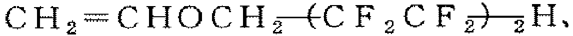

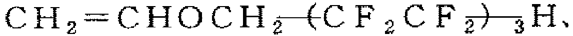

CH₂=CHOCH₂CF₂CF₃,

CH₂=CHOCH₂CF₃,

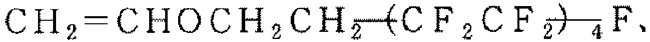

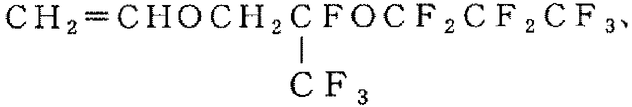

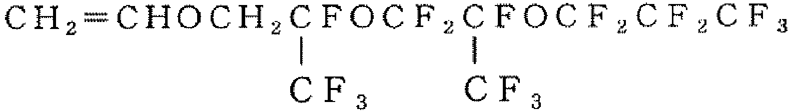

and the like.

In addition, examples also include fluorine-containing allyl ether represented by the general formula (n2-3):

CH₂=CHCH₂O-Rf⁶ (n2-3)

wherein Rf⁶ is a fluorine-containing alkyl group having 1 to 40 carbon atoms, or a fluorine-containing alkyl group having 2 to 100 carbon atoms and having an ether bond; and a fluorine-containing vinyl monomer represented by the following general formula (n2-4):

CH₂=CH-Rf⁷ (n2-4)

wherein Rf⁷ is a fluorine-containing alkyl group having 1 to 40 carbon atoms, or a fluorine-containing alkyl group having 2 to 100 carbon atoms and having an ether bond.

Specific examples of the monomers represented by the general formulae (n2-3) and (n2-4) include monomers such as:

CH₂=CHCH₂OCH₂CF₂CF₂H,

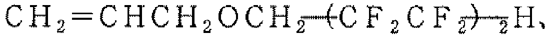

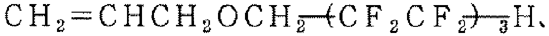

CH₂=CHCH₂OCH₂CF₂CF₃,

CH₂=CHCH₂OCH₂CF₃,

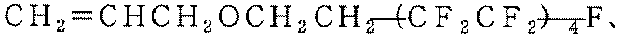

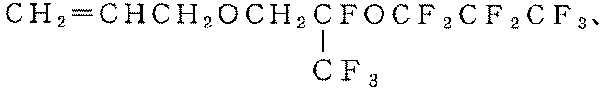

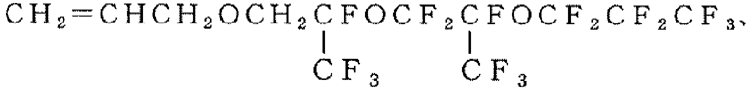

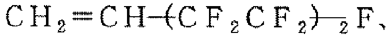

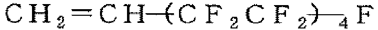

and the like.

The polymer (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or the fluoroalkyl group preferably has 1 to 20 carbon atoms. These terminal groups are, in general, produced from an initiator or a chain transfer agent used to form the polymer (I) or produced during a chain transfer reaction.

In the polymer (I), the content of the polymerization unit (I) is, in ascending order of preference, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more based on the entirety of polymerization units. The content of the polymerization unit (I) is, particularly preferably, substantially 100 mol%, and the polymer (I) is most preferably composed solely of the polymerization unit (I).

In the polymer (I), the content of the polymerization unit derived from the further monomer copolymerizable with the monomer represented by the general formula (I) is, in ascending order of preference, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less based on the entirety of polymerization units. The content of the polymerization unit derived from the further monomer copolymerizable with the monomer represented by the general formula (I) is, particularly preferably, substantially 0 mol%, and most preferably the polymer (I) does not contain the polymerization unit derived from the further monomer.

The number average molecular weight of the polymer (I) is preferably 0.1 × 10⁴ or more, more preferably 0.2 × 10⁴ or more, even more preferably 0.3 × 10⁴ or more, yet more preferably 0.4 × 10⁴ or more, further preferably 0.5 × 10⁴ or more, particularly preferably 1.0 × 10⁴ or more, more particularly preferably 3.0 × 10⁴ or more, and most preferably 3.1 × 10⁴ or more. The number average molecular weight of the polymer (I) is preferably 75.0 × 10⁴ or less, more preferably 50.0 × 10⁴ or less, even more preferably 40.0 × 10⁴ or less, yet more preferably 30.0 × 10⁴ or less, and particularly preferably 20.0 × 10⁴ or less. The number average molecular weight and the weight average molecular weight are molecular weight values calculated by gel permeation chromatography (GPC) using monodisperse polystyrene as a standard. When measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The lower limit of the weight average molecular weight of the polymer (I) is, in ascending order of preference, 0.2 × 10⁴ or more, 0.4 × 10⁴ or more, 0.6 × 10⁴ or more, 0.8 × 10⁴ or more, 1.0 × 10⁴ or more, 2.0 × 10⁴ or more, 5.0 × 10⁴ or more, 10.0 × 10⁴ or more, 15.0 × 10⁴ or more, 20.0 × 10⁴ or more, or 25.0 × 10⁴ or more. The upper limit of the weight average molecular weight of the polymer (I) is, in ascending order of preference, 150.0 × 10⁴ or less, 100.0 × 10⁴ or less, 60.0 × 10⁴ or less, 50.0 × 10⁴ or less, or 40.0 × 10⁴ or less.

The polymer (I) preferably has an ion exchange rate (IXR) of 53 or less. The IXR is defined as the number of carbon atoms in the polymer backbone relative to the ionic groups. A precursor group that becomes ionic by hydrolysis (such as - SO₂F) is not regarded as an ionic group for the purpose of determining the IXR.

The IXR is preferably 0.5 or more, more preferably 1 or more, even more preferably 3 or more, yet more preferably 4 or more, further preferably 5 or more, and particularly preferably 8 or more. The IXR is also more preferably 43 or less, even more preferably 33 or less, and particularly preferably 23 or less.

The ion exchange capacity of the polymer (I) is, in ascending order of preference, 0.80 meq/g or more, 1.50 meq/g or more, 1.75 meq/g or more, 2.00 meq/g or more, 2.20 meq/g or more, more than 2.20 meq/g, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I).

In the polymer (I), the ionic groups (anionic groups) are typically distributed along the polymer backbone. The polymer (I) contains the polymer backbone together with a repeating side chain bonded to this backbone, and this side chain preferably has an ionic group.

The polymer (I) preferably contains an ionic group having a pKa of less than 10, and more preferably less than 7. The ionic group of the polymer (I) is preferably selected from the group consisting of sulfonate, carboxylate, phosphonate, and phosphate.

The terms "sulfonate, carboxylate, phosphonate, and phosphate" are intended to refer to the respective salts or the respective acids that can form salts. A salt when used is preferably an alkali metal salt or an ammonium salt. Preferable ionic groups are a carboxylate group and a sulfonate group.

The polymer (I) preferably has water solubility. Water solubility means the property of being readily dissolved or dispersed in an aqueous medium. When the polymer (I) has water solubility, the particle size cannot be measured, or a particle size of 10 nm or less is indicated, by, for example, dynamic light scattering (DLS).

The viscosity of the aqueous solution of polymer (I) is preferably 5.0 mPa.s or more, more preferably 8.0 mPa.s or more, more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and yet more preferably 20.0 mPa.s or less.

The viscosity of the aqueous solution of the polymer (I) can be determined by regulating the content of the polymer (I) in the aqueous solution to be 33% by mass based on the aqueous solution, and measuring the viscosity of the resulting aqueous solution at 20°C using a tuning fork vibration viscometer (model number: SV-10) manufactured by A&D Company Limited.

The critical micelle concentration (CMC) of the polymer (I) is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the polymer (I) can be determined by measuring surface tension. Surface tension can be measured with, for example, a surface tensiometer CBVP-A3 manufactured by Kyowa Interface Science Co., Ltd.

The acid value of the polymer (I) is preferably 60 or more, more preferably 90 or more, even more preferably 120 or more, particularly preferably 150 or more, and most preferably 180 or more, and while the upper limit is not specified, it is preferably 300 or less.

When the polymer (I) has an anionic group such as -COOM, -SO₃M, -OSO₃M, or -C(CF₃)₂OM (M is a metal atom, NR⁷₄, optionally substituted imidazolium, optionally substituted pyridinium, or optionally substituted phosphonium, and R⁷ is H or an organic group) other than an acid-type functional group, the acid value of the polymer (I) can be determined by acid-base titration after converting the anionic group into an acid-type group.

The polymer (I) may also be a polymer (11) of a monomer (11) represented by the general formula (11) wherein the content of a polymerization unit (11) derived from the monomer (11) is 50 mol% or more based on the entirety of polymerization units constituting the polymer (11), and the weight average molecular weight (Mw) is 38.0 × 10⁴ or more. The polymer (11) is a novel polymer.

General formula (11): CX₂=CY-CF₂-O-Rf-A

wherein X and Y are independently H, F, CH₃, or CF₃, and at least one of X and Y is F. Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or - C(CF₃)₂OM, wherein M is H, a metal atom, NR⁷₄, optionally substituted imidazolium, optionally substituted pyridinium, or optionally substituted phosphonium, and R⁷ is H or an organic group.

In the general formula (11), X and Y are independently H, F, CH₃, or CF₃, and at least one of X and Y is F. X is preferably H or F, and more preferably H. Y is preferably H or F, and more preferably F.

Rf and A in the general formula (11) are the same as Rf and A in the general formula (1), respectively, which represents the monomer constituting the polymer (1).

The polymer (11) may be a homopolymer composed solely of the polymerization unit (11) derived from the monomer (11), or may be a copolymer containing the polymerization unit (11) and a polymerization unit derived from a further monomer copolymerizable with the monomer (11). The further monomer is as described above. The polymerization unit (11) may be the same or different at each occurrence, and the polymer (11) may contain polymerization units (11) derived from two or more different monomers represented by the general formula (11).

The content of the polymerization unit (11) in the polymer (11) is, in ascending order of preference, 50 mol% or more, 60 mol% or more, 70 mol% or more, 80 mol% or more, 90 mol% or more, or 99 mol% or more based on the entirety of polymerization units constituting the polymer (11). The content of the polymerization unit (11) is, particularly preferably, substantially 100 mol%, and the polymer (11) is most preferably composed solely of the polymerization unit (11).

In the polymer (11), the content of the polymerization unit derived from the further monomer copolymerizable with the monomer (11) is, in ascending order of preference, 99.0 mol% or less, 97.0 mol% or less, 95.0 mol% or less, 90 mol% or less, 80 mol% or less, 70 mol% or less, 60 mol% or less, or 50 mol% or less based on the entirety of polymerization units constituting the polymer (11). The content of the polymerization unit derived from the further monomer copolymerizable with the monomer (11) is, particularly preferably, substantially 0 mol%, and most preferably the polymer (11) does not contain the polymerization unit derived from the further monomer.

The lower limit of the weight average molecular weight of the polymer (11) is, in ascending order of preference, 38.0 × 10⁴ or more or 40.0 × 10⁴ or more. The upper limit of the weight average molecular weight of the polymer (11) is, in ascending order of preference, 150.0 × 10⁴ or less, 100.0 × 10⁴ or less, or 60.0 × 10⁴ or less.

The lower limit of the number average molecular weight of the polymer (11) is, in ascending order of preference, 5.0 × 10⁴, 8.0 × 10⁴, 10.0 × 10⁴ or more, and 12.0 × 10⁴ or more. The upper limit of the number average molecular weight of the polymer (11) is, in ascending order of preference, 75.0 × 10⁴ or less, 50.0 × 10⁴ or less, 40.0 × 10⁴ or less, or 30.0 × 10⁴ or less.

The polymer (I) may also be a polymer (12) of a monomer (12) represented by the general formula (12) wherein the content of a polymerization unit (12) derived from the monomer (12) is 50 mol% or more based on the entirety of polymerization units constituting the polymer (12), and the weight average molecular weight (Mw) is 1.4 × 10⁴ or more. The polymer (12) is a novel polymer.

General formula (12): CX₂=CX-O-Rf-A

wherein X is independently F or CF₃; Rf is a fluorine-containing alkylene group having 1 to 40 carbon atoms or a fluorine-containing alkylene group having 2 to 100 carbon atoms and having an ether bond or a keto group; and A is -COOM, -SO₃M, -OSO₃M, or -C(CF₃)₂OM, wherein M is -H, a metal atom, - NR⁷₄, optionally substituted imidazolium, optionally substituted pyridinium, or optionally substituted phosphonium, and R⁷ is H or an organic group.

In the general formula (12), each X is independently F or CF₃. At least one X is preferably F, and more preferably all X are F.

Rf and A in the general formula (12) are the same as Rf and A in the general formula (2), respectively, which represents the monomer constituting the polymer (2).

The polymer (12) may be a homopolymer composed solely of the polymerization unit (12) derived from the monomer (12), or may be a copolymer containing the polymerization unit (12) and a polymerization unit derived from a further monomer copolymerizable with the monomer (12). The further monomer is as described above. The polymerization unit (12) may be the same or different at each occurrence, and the polymer (12) may contain the polymerization unit (12) derived from two or more different monomers represented by the general formula (12).

The content of the polymerization unit (12) in the polymer (12) is, in ascending order of preference, 40 mol% or more, 50 mol% or more, 60 mol% or more, 70 mol% or more, 80 mol% or more, 90 mol% or more, or 99 mol% or more based on the entirety of polymerized units constituting the polymer (12). The content of the polymerization unit (12) is, particularly preferably, substantially 100 mol%, and the polymer (12) is most preferably composed solely of the polymerization unit (12).

In the polymer (12), the content of the polymerization unit derived from the further monomer copolymerizable with the monomer (12) is, in ascending order of preference, 50 mol% or less, 40 mol% or less, 30 mol% or less, 20 mol% or less, 10 mol% or less, or 1 mol% or less based on the entirety of polymerization units constituting the polymer (12). The content of the polymerization unit derived from the further monomer copolymerizable with the monomer (12) is, particularly preferably, substantially 0 mol%, and most preferably the polymer (12) does not contain the polymerization unit derived from the further monomer.

The lower limit of the weight average molecular weight (Mw) of the polymer (12) is, in ascending order of preference, 1.4 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, 4.3 × 10⁴ or more, 4.7 × 10⁴ or more, or 5.1 × 10⁴ or more. The upper limit of the weight average molecular weight (Mw) of the polymer (12) is, in ascending order of preference, 150.0 × 10⁴ or less, 100.0 × 10⁴ or less, 60.0 × 10⁴ or less, 50.0 × 10⁴ or less, or 40.0 × 10⁴ or less.

The lower limit of the number average molecular weight (Mn) of the polymer (12) is, in ascending order of preference, 0.7 × 10⁴ or more, 0.9 × 10⁴ or more, 1.0 × 10⁴ or more, 1.2 × 10⁴ or more, 1.4 × 10⁴ or more, 1.6 × 10⁴ or more, or 1.8 × 10⁴ or more. The upper limit of the number average molecular weight (Mn) of the polymer (12) is, in ascending order of preference, 75.0 × 10⁴ or less, 50.0 × 10⁴ or less, 40.0 × 10⁴ or less, 30.0 × 10⁴ or less, or 20.0 × 10⁴ or less.

The molecular weight distribution (Mw/Mn) of the polymer (12) is preferably 3.0 or less, more preferably 2.4 or less, even more preferably 2.2 or less, particularly preferably 2.0 or less, and most preferably 1.9 or less.

When the polymer (12) contains the polymerization unit (12) and a polymerization unit derived from a further monomer copolymerizable with the monomer (12), the content of the polymerization unit (12) derived from the monomer (12) is preferably 40 to 60 mol% and more preferably 45 to 55 mol% based on the entirety of polymerization units constituting the polymer (12), and the content of the polymerization unit derived from the further monomers is preferably 60 to 40 mol% and more preferably 55 to 45 mol% based on the entirety of polymerization units constituting the polymer (12). Such a configuration is particularly suitable when the polymerization unit derived from the further monomer copolymerizable with the monomer (12) is a polymerization unit (M) derived from a monomer represented by the general formula CFR=CR₂.

When the polymer (12) contains the polymerization unit (12) and the polymerization unit derived from the further monomer copolymerizable with the monomer (12), the alternating ratio of the polymerization unit (12) to the polymerization unit derived from the further monomer copolymerizable with the monomer (12) is preferably 40% or more, more preferably 50% or more, even more preferably 60% or more, yet more preferably 70% or more, particularly preferably 80% or more, and most preferably 90% or more. The alternating ratio may be, for example, 40 to 99%. Such a configuration is particularly suitable when the polymerization unit derived from the further monomer copolymerizable with the monomer (12) is a polymerization unit (M) derived from a monomer represented by the general formula CFR=CR₂.

The alternating ratio between the polymerization unit (12) to the polymerization unit derived from the further monomer copolymerizable with the monomer (12) in the polymer (12) is determined by ¹⁹F-NMR analysis of the polymer (12).

The polymer (I) can be produced by a conventionally known method except that the above-described monomer is used.

The polymer (I) may also be a polymer (13) of a monomer (13) represented by the general formula (13) wherein the content of a polymerization unit (13) derived from the monomer (13) is 50% by mass or more based on the entirety of polymerization units constituting the polymer (13). The polymer (13) is a novel polymer.

General Formula (13): CX₂=CX-O-Rf-SO₃M

wherein X is independently F or CF₃; Rf is a fluorine-containing alkylene group having 1 to 40 carbon atoms or a fluorine-containing alkylene group having 2 to 100 carbon atoms and having an ether bond or a keto group; and M is -H, a metal atom, -NR⁷₄, optionally substituted imidazolium, optionally substituted pyridinium, or optionally substituted phosphonium, wherein R⁷ is H or an organic group.

In the general formula (13), each X is independently F or CF₃. At least one X is preferably F, and more preferably all X are F.

Rf and M in the general formula (13) are the same as Rf and A in the general formula (2), respectively, which represents the monomer constituting the polymer (2).

The polymer (13) may be a homopolymer composed solely of the polymerization unit (13) derived from the monomer (13), or may be a copolymer containing the polymerization unit (13) and a polymerization unit derived from a further monomer copolymerizable with the monomer (13). The further monomer is as described above. The polymerization unit (13) may be the same or different at each occurrence, and the polymer (13) may contain polymerization units (13) derived from two or more different monomers represented by the general formula (13).

In the polymer (13), the content of the polymerization unit (13) derived from the monomer (13) is 50% by mass or more based on the entirety of polymerization units constituting the polymer (13). The content of the polymerization unit (13) in the polymer (13) is, in ascending order of preference, 50% by mass or more, 60% by mass or more, 70% by mass or more, 80% by mass or more, 90% by mass or more, or 99% by mass or more based on the entirety of polymerization units constituting the polymer (13). The content of the polymerization unit (13) is, particularly preferably, substantially 100% by mass, and the polymer (13) is most preferably composed solely of the polymerization unit (13).

In the polymer (13), the content of the polymerization unit derived from the further monomer copolymerizable with the monomer (13) is, in ascending order of preference, 50% by mass or less, 40% by mass or less, 30% by mass or less, 20% by mass or less, 10% by mass or less, or 1% by mass or less based on the entirety of polymerization units constituting the polymer (13). The content of the polymerization unit derived from the further monomer copolymerizable with the monomer (13) is, particularly preferably, substantially 0% by mass, and most preferably the polymer (13) does not contain the polymerization unit derived from the further monomer.

The lower limit of the number average molecular weight of the polymer (13) is, in ascending order of preference, 0.3 × 10⁴ or more, 0.4 × 10⁴ or more, 0.5 × 10⁴ or more, 0.7 × 10⁴ or more, 0.8 × 10⁴ or more, 1.0 × 10⁴ or more, 1.2 × 10⁴ or more, 1.4 × 10⁴ or more, 1.6 × 10⁴ or more, 1.8 × 10⁴ or more, 2.0 × 10⁴ or more, or 3.0 × 10⁴ or more. The upper limit of the number average molecular weight of the polymer (13) is, in ascending order of preference, 75.0 × 10⁴ or less, 50.0 × 10⁴ or less, 40.0 × 10⁴ or less, 30.0 × 10⁴ or less, or 20.0 × 10⁴ or less.

The lower limit of the weight average molecular weight of the polymer (13) is, in ascending order of preference, 0.4 × 10⁴ or more, 0.5 × 10⁴ or more, 0.6 × 10⁴ or more, 0.8 × 10⁴ or more, 1.0 × 10⁴ or more, 1.2 × 10⁴ or more, 1.4 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, 4.3 × 10⁴ or more, 4.7 × 10⁴ or more, 5.1 × 10⁴ or more, 10.0 × 10⁴ or more, 15.0 × 10⁴ or more, 20.0 × 10⁴ or more, and 25.0 × 10⁴ or more. The upper limit of the weight average molecular weight of the polymer (13) is, in ascending order of preference, 150.0 × 10⁴ or less, 100.0 × 10⁴ or less, 60.0 × 10⁴ or less, 50.0 × 10⁴ or less, or 40.0 × 10⁴ or less.

The molecular weight distribution (Mw/Mn) of the polymer (13) is, in ascending order of preference, 3.0 or less, 2.4 or less, 2.2 or less, 2.0 or less, 1.9 or less, 1.7 or less, 1.5 or less, 1.4 or less, or 1.3 or less.

Concerning the polymer (I), the polymer (11) is a novel polymer and can be produced by a production method (11) comprising polymerizing the monomer (11) represented by the general formula (11) in an aqueous medium to produce the polymer (11) of the monomer (11), wherein the oxygen concentration in the reaction system of the polymerization is maintained at 500 volume ppm or less.

In the production method (11), the oxygen concentration in the reaction system of the polymerization is 500 volume ppm or less. In the production method (11), the oxygen concentration in the reaction system is maintained at 500 volume ppm or less throughout the polymerization of the monomer (11). The oxygen concentration in the reaction system is preferably 350 volume ppm or less, more preferably 300 volume ppm or less, even more preferably 100 volume ppm or less, and particularly preferably 50 volume ppm or less. The oxygen concentration in the reaction system is usually 0.01 volume ppm or more.

In the production method (11), the polymerization temperature of the monomer (11) is preferably 59°C or lower, more preferably 57°C or lower, even more preferably 55°C or lower, and particularly preferably 53°C or lower, and is preferably 20°C or higher, more preferably 25°C or higher, even more preferably 30°C or higher, and particularly preferably 35°C or higher because the polymer (11) having a higher molecular weight can be readily produced.

In the production method (11), the monomer (11) may be copolymerized with the above-described further monomer.

In the production method (11), the polymerization pressure is usually atmospheric pressure to 10 MPaG. The polymerization pressure is suitably determined according to the type of monomer used, the molecular weight of the target polymer, and the reaction rate.

In the production method (11), the polymerization time is usually 1 to 200 hours, and may be 5 to 100 hours.

Concerning the polymer (I), the polymer (12) is a novel polymer and can be produced by a production method (12) comprising polymerizing the monomer (12) represented by the general formula (12) in an aqueous medium to produce the polymer (12) of the monomer (12), wherein the oxygen concentration in the reaction system of the polymerization is maintained at 1,500 volume ppm or less.

In the production method (12), the oxygen concentration in the reaction system of the polymerization is 1,500 volume ppm or less. In the production method (12), the oxygen concentration in the reaction system is maintained at 1,500 volume ppm or less throughout the polymerization of the monomer (12). The oxygen concentration in the reaction system is preferably 500 volume ppm or less, more preferably 100 volume ppm or less, and even more preferably 50 volume ppm or less. The oxygen concentration in the reaction system is usually 0.01 volume ppm or more.

Concerning the polymer (I), the polymer (13) is a novel polymer and can be produced by a production method (13) comprising polymerizing the monomer (13) represented by the general formula (13) in an aqueous medium to produce the polymer (13) of the monomer (13).

In the production method (13), the oxygen concentration in the reaction system of polymerization is preferably 1,500 volume ppm or less, more preferably 500 volume ppm or less, even more preferably 100 volume ppm or less, and particularly preferably 50 volume ppm or less. The oxygen concentration in the reaction system is usually 0.01 volume ppm or more. In the production method, the oxygen concentration in the reaction system is maintained within the above range throughout the polymerization of the monomer (13).

In the production method (12) and the production method (13), the polymerization temperature of the monomer (12) and the monomer (13) is preferably 70°C or lower, more preferably 65°C or lower, even more preferably 60°C or lower, particularly preferably 55°C or lower, yet more preferably 50°C or lower, particularly preferably 45°C or lower, and most preferably 40°C or lower, and is preferably 10°C or higher, more preferably 15°C or higher, and even more preferably 20°C or higher because the polymer (12) and the polymer (13) having a higher molecular weight can be readily produced.

In the production method (12) and the production method (13), the monomer (12) and the monomer (13) may be copolymerized with the above-described further monomer.

In the production method (12) and the production method (13), the polymerization pressure is usually atmospheric pressure to 10 MPaG. The polymerization pressure is suitably determined according to the type of monomer used, the molecular weight of the target polymer, and the reaction rate.

In the production method (12) and the production method (13), the polymerization time is usually 1 to 200 hours, and may be 5 to 100 hours.

In the production methods (11) to (13), the oxygen concentration in the reaction system of the polymerization can be controlled by causing, for example, an inert gas such as nitrogen or argon, or the gaseous monomer when a gaseous monomer is used, to flow through the liquid phase or the gas phase in the reactor. The oxygen concentration in the reaction system of the polymerization can be determined by measuring and analyzing the gas emitted from the discharge gas line of the polymerization system with a low-concentration oxygen analyzer.

In the production methods (11) to (13), the aqueous medium is a reaction medium in which polymerization is performed, and means a liquid containing water. The aqueous medium may be any medium containing water, and it may be a medium containing water and, for example, any of the fluorine-free organic solvents such as alcohols, ethers, and ketones, and/or fluorine-containing organic solvents having a boiling point of 40°C or lower. The aqueous medium is preferably water.

In the production methods (11) to (13), the monomer can be polymerized in the presence of a polymerization initiator. The polymerization initiator is not limited as long as it can generate radicals within the polymerization temperature range, and known oil-soluble and/or water-soluble polymerization initiators can be used. The polymerization initiator can be combined with a reducing agent or the like to form a redox agent and initiate the polymerization. The concentration of the polymerization initiator is suitably determined according to the types of monomers, the molecular weight of the target polymer, and the reaction rate.

The polymerization initiator used may be an organic peroxide such as persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Moreover, the concentration of radicals in the system can be also regulated by adding a radical scavenger such as hydroquinone or catechol or adding a peroxide decomposer such as ammonium sulfite during polymerization.

As a polymerization initiator, persulfate is particularly preferable because a polymer having a higher molecular weight can be readily produced. Examples of persulfate include ammonium persulfate, potassium persulfate, and sodium persulfate, and ammonium persulfate is preferable.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the production methods (11) to (13), the polymerization initiator can be added at the beginning of polymerization, and can also be added during polymerization. The proportion of the amount of the polymerization initiator added at the beginning of polymerization to the amount of the polymerization initiator added during polymerization is preferably 95/5 to 5/95, more preferably 60/40 to 10/90, and more preferably 30/70 to 15/85. The method for adding the polymerization initiator during polymerization is not limited, and it may be added in the entire amount at once, may be added in two or more portions, or may be added continuously.

In the production methods (11) to (13), the total amount of the polymerization initiator added to be used in the polymerization is preferably 0.00001 to 10% by mass based on the aqueous medium because a polymer having a higher molecular weight can be readily produced. The total amount of the polymerization initiator added to be used in the polymerization is more preferably 0.0001% by mass or more, even more preferably 0.001% by mass or more, and particularly preferably 0.01% by mass or more, and is more preferably 5% by mass or less, and even more preferably 2% by mass or less.

In the production methods (11) to (13), the total amount of the polymerization initiator added to be used in the polymerization is 0.001 to 10 mol% based on the monomer because a polymer having a higher molecular weight can be readily produced. The total amount of the polymerization initiator added to be used in the polymerization is more preferably 0.005 mol% or more, even more preferably 0.01 mol% or more, yet more preferably 0.1 mol% or more, and most preferably 0.5 mol% or more, and is more preferably 5 mol% or less, even more preferably 2.5 mol% or less, particularly preferably 2.2 mol% or less, and most preferably 2.0 mol% or less.

In the production methods (11) to (13), the amount of monomer that is present and that contains the monomers (11) to (13) at the beginning of polymerization is preferably 30% by mass or more based on the amount of the aqueous medium present because a polymer having a higher molecular weight can be readily produced. The amount of monomer present is more preferably 30% by mass or more, and even more preferably 40% by mass or more. The upper limit of the amount of monomer present is not limited, and may be 200% by mass or less from the viewpoint of causing the polymerization to proceed smoothly. The amount of monomer present at the beginning of polymerization is the total amount of the monomers (11) to (13) and, if any, further monomers present in the reactor at the beginning of polymerization.

In the production methods (11) to (13), polymerization may be carried out in the presence of a pH adjuster. The pH adjuster may be added before the beginning of polymerization or after the beginning of polymerization.

The pH adjuster may be ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, or ammonium gluconate.

In the production methods (11) to (13), polymerization of the monomers (11) to (13) can be carried out by charging a polymerization reactor with an aqueous medium, any of the monomers (11) to (13), optionally a further monomer, and optionally a further additive, stirring the contents of the reactor, maintaining the reactor at a predetermined polymerization temperature, and adding a predetermined amount of a polymerization initiator to thereby initiate the polymerization reaction. After the beginning of the polymerization reaction, the monomer, the polymerization initiator, and the further additive may be added depending on the purpose.

In the production methods (11) to (13), the polymerization of the monomer can be carried out substantially in the absence of a fluorine-containing surfactant. The expression "substantially in the absence of a fluorine-containing surfactant" as used herein means that the amount of the fluorine-containing surfactant is 10 mass ppm or less based on the aqueous medium. The amount of the fluorine-containing surfactant based on the aqueous medium is preferably 1 mass ppm or less, more preferably 100 mass ppb or less, even more preferably 10 mass ppb or less, and yet more preferably 1 mass ppb or less.

As for the fluorine-containing surfactant, the description concerning the polymerization of a fluoromonomer is also applicable to the production methods (11) to (13).

The content of the polymer (I) in the polymerization dispersion is preferably more than 0.15% by mass and is preferably 10.0% by mass or less, more preferably 5.0% by mass or less, even more preferably 2.0% by mass or less, yet more preferably 1.0% by mass or less, and particularly preferably 0.50% by mass or less based on the fluororesin.

When the fluororesin is PTFE, the content of the polymer (I) in the polymerization dispersion is preferably more than 0.23% by mass and is preferably 10.0% by mass or less, 5.0% by mass or less, more preferably 2.0% by mass or less, even more preferably 1.0% by mass or less, and particularly preferably 0.50% by mass or less based on PTFE.

When the fluororesin is a melt-fabricable fluororesin, the content of the polymer (I) in the polymerization dispersion is preferably more than 4.0% by mass and is preferably 10.0% by mass or less and 5.0% by mass or less based on the fluororesin.

When the fluororesin is a TFE/perfluoro(alkyl vinyl ether) copolymer, the content of the polymer (I) in the polymerization dispersion is preferably more than 0.25% by mass and is preferably 10.0% by mass or less, 5.0% by mass or less, more preferably 2.0% by mass or less, even more preferably 1.0% by mass or less, and particularly preferably 0.50% by mass or less based on the TFE/perfluoro(alkyl vinyl ether) copolymer.

When the fluororesin is FEP, the content of the polymer (I) in the polymerization dispersion is preferably more than 3.5% by mass and is preferably 10.0% by mass or less and 5.0% by mass or less based on FEP.

The content of the polymer (I) in the polymerization dispersion can be determined by solid-state NMR measurement or liquid-state NMR measurement. When the polymer (I) contains a carbonyl group, the content can also be determined with a Fourier transform infrared spectrometer.

Also, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like disclose measurement methods for their respective polymers. The method for measuring the content of the polymer (I) may be any of the polymer measurement methods respectively described in these documents.

The content of the dimer and the trimer of the monomer (I) represented by the general formula (I) in the composition is preferably 1.0% by mass or less, more preferably 0.1% by mass or less, even more preferably 0.01% by mass or less, particularly preferably 0.001% by mass or less, and most preferably 0.0001% by mass or less based on the polymer (I).

### (Fluoromonomer)

In the production method of the present disclosure, the fluoromonomer to be polymerized is at least tetrafluoroethylene [TFE]. Thereby, a polymerization dispersion containing a fluororesin containing a TFE unit can be obtained.

In the production method of the present disclosure, a fluoromonomer other than TFE may be polymerized in addition to TFE. Below, TFE and a fluoromonomer other than TFE may be collectively referred to simply as a "fluoromonomer".

The fluoromonomer other than TFE preferably has at least one double bond. The fluoromonomer other than TFE is preferably at least one selected from the group consisting of hexafluoropropylene (HFP), chlorotrifluoroethylene (CTFE), vinyl fluoride, vinylidene fluoride (VDF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100): CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), a fluorinated vinyl heterocyclic compound, and a monomer that provides a crosslinking site.

The fluoroalkyl vinyl ether is preferably, for example, at least one selected from the group consisting of:
a fluoromonomer represented by the general formula (110): CF₂=CF-ORf¹¹¹
   wherein Rf¹¹¹ represents a perfluoro organic group;
a fluoromonomer represented by the general formula (120): CF₂=CF-OCH₂-Rf¹²¹
   wherein Rf¹²¹ is a perfluoroalkyl group having 1 to 5 carbon atoms;
a fluoromonomer represented by the general formula (130): CF₂=CFOCF₂ORf¹³¹
   wherein Rf¹³¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) : CF₂=CFO(CF₂CF(Y¹⁴¹)O)ₘ(CF₂)ₙF
   wherein Y¹⁴¹ represents a fluorine atom or a trifluoromethyl group; m is an integer of 1 to 4, and n is an integer of 1 to 4; and
a fluoromonomer represented by the general formula (150): CF₂=CF-O-(CF₂CFY¹⁵¹-O)ₙ-(CFY¹⁵²)ₘ-A¹⁵¹
   wherein Y¹⁵¹ represents a fluorine atom, a chlorine atom, a - SO₂F group, or a perfluoroalkyl group; the perfluoroalkyl group optionally containing ether oxygen and a -SO₂F group; n represents an integer of 0 to 3; n Y¹⁵¹s are the same as or different from each other; Y¹⁵² represents a fluorine atom, a chlorine atom, or a -SO₂F group; m represents an integer of 1 to 5; m Y¹⁵²s are the same as or different from each other; A¹⁵¹ represents -SO₂X¹⁵¹, -COZ¹⁵¹, or -POZ¹⁵²Z¹⁵³; X¹⁵¹ represents F, Cl, Br, I, -OR¹⁵¹, or-NR¹⁵²R¹⁵³; Z¹⁵¹, Z¹⁵², and Z¹⁵³ are the same as or different from each other, and each represent -NR¹⁵⁴R¹⁵⁵ or - OR¹⁵⁶; R¹⁵¹, R¹⁵², R¹⁵³, R¹⁵⁴, R¹⁵⁵, and R¹⁵⁶ are the same as or different from each other, and each represent H, ammonium, an alkali metal, or an alkyl group, aryl group, or sulfonyl-containing group optionally containing a fluorine atom.

The "perfluoroorganic group" in the present disclosure, means an organic group in which all hydrogen atoms bonded to the carbon atoms are replaced with fluorine atoms. The perfluoroorganic group optionally has ether oxygen.

The fluoromonomer represented by the general formula (110) may be a fluoromonomer in which Rf¹¹¹ is a perfluoroalkyl group having 1 to 10 carbon atoms. The perfluoroalkyl group preferably has 1 to 5 carbon atoms.

Examples of the perfluoro organic group in the general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by the general formula (110) also include those represented by the general formula (110) in which Rf¹¹¹ is a perfluoro(alkoxyalkyl) group having 4 to 9 carbon atoms; those in which Rf¹¹¹ is a group represented by the following formula: 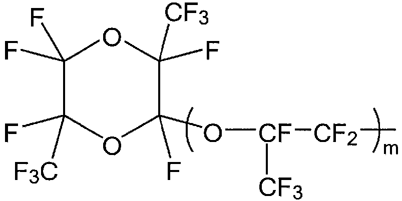 wherein m represents 0 or an integer of 1 to 4; and those in which Rf is a group represented by the following formula:

CF₃CF₂CF₂-(O-CF(CF₃)-CF₂)ₙ-

wherein n represents an integer of 1 to 4.

In particular, the fluoromonomer represented by the general formula (110) is preferably
a fluoromonomer represented by the general formula (160): CF₂=CF-ORf¹⁶¹
wherein Rf¹⁶¹ represents a perfluoroalkyl group having 1 to 10 carbon atoms. Rf¹⁶¹ is preferably a perfluoroalkyl group having 1 to 5 carbon atoms.

The fluoroalkyl vinyl ether is preferably at least one selected from the group consisting of fluoromonomers represented by the general formulae (160), (130), and (140).

The fluoromonomer represented by the general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether) .

The fluoromonomer represented by the general formula (130) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by the general formula (140) is preferably at least one selected from the group consisting of CF₂=CFOCF₂CF(CF₃)O(CF₂)₃F, CF₂=CFO(CF₂CF(CF₃)O)₂(CF₂)₃F, and CF₂=CFO(CF₂CF(CF₃)O)₂(CF₂)₂F.

The fluoromonomer represented by the general formula (150) is preferably at least one selected from the group consisting of CF₂=CFOCF₂CF₂SO₂F, CF₂=CFOCF₂CF(CF₃)OCF₂CF₂SO₂F, CF₂=CFOCF₂CF(CF₂CF₂SO₂F)OCF₂CF₂SO₂F, and CF₂=CFOCF₂CF(SO₂F)₂.

The fluoromonomer represented by the general formula (100) is preferably a fluoromonomer in which Rf¹⁰¹ is a linear fluoroalkyl group, and more preferably a fluoromonomer in which Rf¹⁰¹ is a linear perfluoroalkyl group. Rf¹⁰¹ preferably has 1 to 6 carbon atoms. Examples of the fluoromonomer represented by the general formula (100) include CH₂=CFCF₃, CH₂=CFCF₂CF₃, CH₂=CFCF₂CF₂CF₃, CH₂=CFCF₂CF₂CF₂H, CH₂=CFCF₂CF₂CF₂CF₃, CHF=CHCF₃ (E isomer), and CHF=CHCF₃ (Z isomer), and, in particular, 2,3,3,3-tetrafluoropropylene represented by CH₂=CFCF₃ is preferable.

The fluoroalkyl ethylene is preferably a fluoroalkyl ethylene represented by the general formula (170):

CH₂=CH-(CF₂)ₙ-X¹⁷¹

(wherein X¹⁷¹ is H or F; and n is an integer of 3 to 10), and more preferably at least one selected from the group consisting of CH₂=CH-C₄F₉ and CH₂=CH-C₆F₁₃.

An example of the fluoroalkyl allyl ether may be a fluoromonomer represented by

the general formula (180): CF₂=CF-CF₂-ORf¹¹¹

wherein Rf¹¹¹ represents a perfluoroorganic group.

Rf¹¹¹ in the general formula (180) is the same as Rf¹¹¹ in the general formula (110). Rf¹¹¹ is preferably a perfluoroalkyl group having 1 to 10 carbon atoms or a perfluoroalkoxyalkyl group having 1 to 10 carbon atoms. The fluoroalkyl allyl ether represented by the general formula (180) is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

An example of the fluorinated vinyl heterocyclic compound may be a fluorinated vinyl heterocyclic compound represented by the general formula (230): 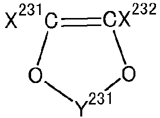 wherein X²³¹ and X²³² are each independently F, Cl, a methoxy group, or a fluorinated methoxy group; and Y²³¹ is represented by the formula Y²³² or the formula Y²³³:

-FC=CF- (Y²³²)

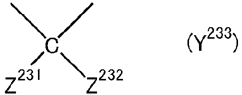

wherein Z²³¹ and Z²³² are each independently F or a fluorinated alkyl group having 1 to 3 carbon atoms.

The monomer that provides a crosslinking site is preferably at least one selected from the group consisting of:
a fluoromonomer represented by the general formula (180) : CX¹⁸¹₂=CX¹⁸²-R_{f}¹⁸¹CHR¹⁸¹X¹⁸³
   wherein X¹⁸¹ and X¹⁸² are each independently a hydrogen atom, a fluorine atom, or CH₃; R_{f}¹⁸¹ is a fluoroalkylene group, a perfluoroalkylene group, a fluoro(poly)oxyalkylene group, or a perfluoro(poly)oxyalkylene group; R¹⁸¹ is a hydrogen atom or CH₃; and X¹⁸³ is an iodine atom or a bromine atom;
a fluoromonomer represented by the general formula (190): CX¹⁹¹₂=CX¹⁹²-R_{f}¹⁹¹X¹⁹³
   wherein X¹⁹¹ and X¹⁹² are each independently a hydrogen atom, a fluorine atom, or CH₃; R_{f}¹⁹¹ is a fluoroalkylene group, a perfluoroalkylene group, a fluoropolyoxyalkylene group, or a perfluoropolyoxyalkylene group; and X¹⁹³ is an iodine atom or a bromine atom;
a fluoromonomer represented by the general formula (200): CF₂=CFO(CF₂CF(CF₃)O)ₘ(CF₂)ₙ-X²⁰¹ wherein m is an integer of 0 to 5; n is an integer of 1 to 3; and X²⁰¹ is a cyano group, a carboxyl group, an alkoxycarbonyl group, an iodine atom, a bromine atom, or -CH₂I; and
a fluoromonomer represented by the general formula (210): CH₂=CFCF₂O(CF(CF₃)CF₂O)ₘ(CF(CF₃))ₙ-X²¹¹
   wherein m is an integer of 0 to 5; n is an integer of 1 to 3; and X²¹¹ is a cyano group, a carboxyl group, an alkoxycarbonyl group, an iodine atom, a bromine atom, or-CH₂OH; and
a monomer represented by the general formula (220): CR²²¹R²²²=CR²²³-Z²²¹-CR²²⁴=CR²²⁵R²²⁶
   wherein R²²¹, R²²², R²²³, R²²⁴, R²²⁵, and R²²⁶ are the same as or different from each other, and are each a hydrogen atom or an alkyl group having 1 to 5 carbon atoms; Z²²¹ is a linear or branched alkylene group having 1 to 18 carbon atoms and optionally having an oxygen atom, a cycloalkylene group having 3 to 18 carbon atoms, an at least partially fluorinated alkylene or oxyalkylene group having 1 to 10 carbon atoms, or a (per)fluoropolyoxyalkylene group which is represented by:

   - (Q)ₚ-CF₂O-(CF₂CF₂O)ₘ(CF₂O)ₙ-CF₂-(Q)ₚ-

   (wherein Q is an alkylene group or an oxyalkylene group; p is 0 or 1; and m/n is 0.2 to 5) and has a molecular weight of 500 to 10,000.

X¹⁸³ and X¹⁹³ are each preferably an iodine atom. R_{f}¹⁸¹ and R_{f}¹⁹¹ are each preferably a perfluoroalkylene group having 1 to 5 carbon atoms. R¹⁸¹ is preferably a hydrogen atom. X²⁰¹ is preferably a cyano group, an alkoxycarbonyl group, an iodine atom, a bromine atom, or -CH₂I. X²¹¹ is preferably a cyano group, an alkoxycarbonyl group, an iodine atom, a bromine atom, or -CH₂OH.

The monomer that provides a crosslinking site is preferably at least one selected from the group consisting of CF₂=CFOCF₂CF(CF₃)OCF₂CF₂CN, CF₂=CFOCF₂CF(CF₃)OCF₂CF₂COOH, CF₂=CFOCF₂CF(CF₃)OCF₂CF₂CH₂I, CF₂=CFOCF₂CF₂CH₂I, CH₂=CFCF₂OCF(CF₃)CF₂OCF(CF₃)CN, CH₂=CFCF₂OCF(CF₃)CF₂OCF(CF₃)COOH, CH₂=CFCF₂OCF(CF₃)CF₂OCF(CF₃)CH₂OH, CH₂=CHCF₂CF₂I, CH₂=CH(CF₂)₂CH=CH₂, CH₂=CH(CF₂)₆CH=CH₂, and CF₂=CFO(CF₂)₅CN, and is more preferably at least one selected from the group consisting of CF₂=CFOCF₂CF(CF₃)OCF₂CF₂CN and CF₂=CFOCF₂CF₂CH₂I.

In the polymerization, the fluoromonomer may be polymerized with a fluorine-free monomer. An example of the fluorine-free monomer may be a hydrocarbon monomer that is reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth)acrylic esters such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer (other than monomers that provide a crosslinking site). Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenoic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group, such as aminoalkyl vinyl ether and aminoalkyl allyl ether; fluorine-free monomers having an amide group, such as (meth)acrylamide and methylol acrylamide; and fluorine-free monomers having a nitrile group, such as acrylonitrile and methacrylonitrile.

In the polymerization, particles of the desired fluororesin can be obtained by polymerizing one or two or more of the above fluoromonomers.

### (Polymerization of fluoromonomer)

The amount of the polymer (I) added to the polymerization is preferably more than 0.02% by mass and 10% by mass or less based on the aqueous medium, and the more preferable upper limit is 1% by mass or less. When the amount of the polymer (I) added is within the above range, polymerization of the fluoromonomer in the aqueous medium can progress smoothly. The amount of the polymer (I) added is the total amount of the polymer (I) added to the polymerization.

In the polymerization, the entirety of the polymer (I) may be added at once, or the polymer (I) may be added continuously. Continuously adding the polymer (I) means, for example, adding the polymer (I) not all at once, but adding over time and without interruption, or adding in divided portions. In the polymerization, an aqueous solution containing the polymer (I) and water may be prepared, and the aqueous solution may be added.

In the polymerization, it is preferable to initiate the addition of the polymer (I) before the solid content of the fluororesin formed in the aqueous medium reaches 0.5% by mass, and add the polymer (I) continuously thereafter as well. The timing to initiate the addition of the polymer (I) is preferably before the solid content of the fluororesin reaches 0.3% by mass, more preferably before it reaches 0.2% by mass, even more preferably before it reaches 0.1% by mass, and particularly preferably at the same time as the beginning of polymerization. The solid content is the content of the fluororesin based on the total amount of the aqueous medium and the fluororesin.

In the polymerization, the use of at least one polymer (I) enables a fluororesin to be efficiently produced. Also, two or more compounds encompassed within the polymer (I) may be used at the same time, and a compound having a surfactant function other than the polymer (I) may also be used in combination insofar as the compound is volatile or is allowed to remain in a molded body formed from the fluororesin or the like.

In the polymerization, a nucleating agent may be used. The amount of the nucleating agent added can be suitably selected according to the type of the nucleating agent. The amount of the nucleating agent added may be 5,000 ppm by mass or less based on the aqueous medium, and it is preferably 1,000 ppm by mass or less, more preferably 500 ppm by mass or less, even more preferably 100 pm by mass or less, particularly preferably 50 ppm by mass or less, and most preferably 10 ppm by mass or less.

In the polymerization, the nucleating agent is preferably added to the aqueous medium before the initiation of polymerization or before the solid content of the fluororesin formed in the aqueous medium reaches 5.0% by mass. Adding the nucleating agent at the initial stage of the polymerization makes it possible to obtain an aqueous dispersion having a small average primary particle size and excellent stability.

The amount of the nucleating agent added at the initial stage of the polymerization is preferably 0.001% by mass or more, more preferably 0.01% by mass or more, even more preferably 0.05% by mass or more, and particularly preferably 0.1% by mass or more, based on the resulting fluororesin. The upper limit of the amount of the nucleating agent added at the initial stage of the polymerization may be, but is not limited to, 2,000% by mass.

The use of the nucleating agent enables a fluororesin having a smaller primary particle size to be obtained than that in the case of polymerization in the absence of the above nucleating agent.

Examples of the nucleating agent include dicarboxylic acids, perfluoropolyether (PFPE) acids or salts thereof, and hydrocarbon-containing surfactants. The nucleating agent is preferably free from an aromatic ring, and is preferably an aliphatic compound.

Although the nucleating agent is preferably added before adding the polymerization initiator or simultaneously with addition of the polymerization initiator, it is also possible to regulate the particle size distribution by adding the nucleating agent during the polymerization.

The amount of the dicarboxylic acid is preferably 1,000 ppm by mass or less, more preferably 500 ppm by mass or less, and even more preferably 100 ppm by mass or less, based on the aqueous medium.

The perfluoropolyether (PFPE) acids or salts thereof may have any chain structure in which the oxygen atoms in the main chain of the molecule are separated by saturated carbon fluoride groups having 1 to 3 carbon atoms. Two or more carbon fluoride groups may be present in the molecule. Representative structures thereof have the repeating units represented by the following formulae:

(-CFCF₃-CF₂-O-)ₙ (VII)

(-CF₂-CF₂-CF₂-O-)ₙ (VIII)

(-CF₂-CF₂-O-)ₙ-(-CF₂-O-)ₘ (IX)

(-CF₂-CFCF₃-O-)ₙ-(-CF₂-O-)ₘ (X).

These structures are described in Kasai, J. Appl. Polymer Sci., 57, 797(1995). As disclosed in this document, the PFPE acid or a salt thereof may have a carboxylic acid group or a salt thereof at one end or both ends. The PFPE acid or a salt thereof may also have a sulfonic acid, a phosphonic acid group, or a salt thereof at one end or both ends. The PFPE acid or a salt thereof may have different groups at each end. Regarding monofunctional PFPE, the other end of the molecule is usually perfluorinated, but may contain a hydrogen or chlorine atom. The PFPE acid or a salt thereof has at least two ether oxygen atoms, preferably at least four ether oxygen atoms, and even more preferably at least six ether oxygen atoms. Preferably, at least one carbon fluoride group separating ether oxygen atoms, more preferably at least two of such carbon fluoride groups, have 2 or 3 carbon atoms. Even more preferably, at least 50% of the carbon fluoride groups separating ether oxygen atoms has 2 or 3 carbon atoms. Also preferably, the PFPE acid or a salt thereof has at least 15 carbon atoms in total, and for example, a preferable minimum value of n or n + m in the repeating unit structure is preferably at least 5. Two or more of the PFPE acids and salts thereof having an acid group at one end or both ends may be used in the production method of the present disclosure. The PFPE acid or a salt thereof preferably has a number average molecular weight of less than 6,000 g/mol.

The hydrocarbon-containing surfactant is preferably added in an amount of 40 ppm by mass or less, more preferably 30 ppm by mass or less, and even more preferably 20 ppm by mass or less based on the aqueous medium. It is presumed that the amounts in ppm of the oleophilic nucleation sites present in the aqueous medium will be less than the amounts in ppm disclosed herein as being added to the aqueous medium. Thus, the amounts of oleophilic nucleation sites will each be less than the 40 ppm by mass, 30 ppm by mass, and 20 ppm by mass. Since it is considered that oleophilic nucleation sites exist as molecules, only a small amount of the hydrocarbon-containing surfactant can generate a large amount of oleophilic nucleation sites. Thus, addition of as little as 1 ppm by mass of the hydrocarbon-containing surfactant to the aqueous medium provides beneficial effect. A preferable lower limit is 0.01 mass ppm.

The hydrocarbon-containing surfactant encompasses nonionic surfactants and cationic surfactants, including siloxane surfactants such as those disclosed in U.S. Patent No. 7,897,682 (Brothers et al.) and U.S. Patent No. 7,977,438 (Brothers et al.).

The hydrocarbon-containing surfactant is preferably a nonionic surfactant (for example, a nonionic hydrocarbon surfactant). In other words, the nucleating agent is preferably a nonionic surfactant. The nonionic surfactant preferably does not contain an aromatic moiety.

The nonionic surfactant usually does not contain a charged group and has a hydrophobic moiety that is a long chain hydrocarbon. The hydrophilic moiety of the nonionic surfactant contains water-soluble functional groups such as chains of ethylene ether derived from polymerization with ethylene oxide.

Examples of the nonionic surfactant include the following.

Polyoxyethylene alkyl ether, polyoxyethylene alkyl phenyl ether, polyoxyethylene alkyl ester, sorbitan alkyl ester, polyoxyethylene sorbitan alkyl ester, glycerol ester, and derivatives thereof.

Specific examples of polyoxyethylene alkyl ethers: polyoxyethylene lauryl ether, polyoxyethylene cetyl ether, polyoxyethylene stearyl ether, polyoxyethylene oleyl ether, polyoxyethylene behenyl ether, and the like.

Specific examples of polyoxyethylene alkyl phenyl ether: polyoxyethylene nonylphenyl ether, polyoxyethylene octylphenyl ether, and the like.

Specific examples of polyoxyethylene alkyl esters: polyethylene glycol monolaurylate, polyethylene glycol monooleate, polyethylene glycol monostearate, and the like.

Specific examples of sorbitan alkyl ester: polyoxyethylene sorbitan monolaurate, polyoxyethylene sorbitan monopalmitate, polyoxyethylene sorbitan monostearate, polyoxyethylene sorbitan monooleate, and the like.

Specific examples of polyoxyethylene sorbitan alkyl ester: polyoxyethylene sorbitan monolaurate, polyoxyethylene sorbitan monopalmitate, polyoxyethylene sorbitan monostearate, and the like.

Specific examples of glycerol ester: glycerol monomyristate, glycerol monostearate, glycerol monooleate, and the like.

Specific examples of the derivatives: polyoxyethylene alkylamine, polyoxyethylene alkyl phenyl-formaldehyde condensate, and polyoxyethylene alkyl ether phosphate.

The ethers and esters may have an HLB value of 10 to 18.

Examples of nonionic surfactants include the Triton(R) X series (X15, X45, X100, etc.), the Tergitol(R) 15-S series, the Tergitol(R) TMN series (TMN-6, TMN-10, TMN-100, etc.), and the Tergitol(R) L series manufactured by Dow Chemical Co., Ltd., and the Pluronic(R) R series (31R1, 17R2, 10R5, 25R4 (m ~22, n ~23) and the Iconol(R) TDA series (TDA-6, TDA-9, TDA-10) manufactured by BASF.

The nonionic surfactant is preferably a fluorine-free nonionic surfactant. Examples include ether-type nonionic surfactants such as polyoxyethylene alkyl phenyl ether, polyoxyethylene alkyl ether, and polyoxyethylene alkylene alkyl ether; polyoxyethylene derivatives such as ethylene oxide/propylene oxide block copolymers; ester-type nonionic surfactants such as sorbitan fatty acid esters, polyoxyethylene sorbitan fatty acid esters, polyoxyethylene sorbitol fatty acid esters, glycerin fatty acid esters, and polyoxyethylene fatty acid esters; and amine-based nonionic surfactants such as polyoxyethylene alkyl amine and alkylalkanolamide.

The hydrophobic group of the nonionic surfactant may be any of an alkylphenol group, a linear alkyl group, and a branched alkyl group.

The nonionic surfactant is preferably a nonionic surfactant represented by the general formula (i):

R⁶-O-A¹-H (i)

wherein R⁶ is a linear or branched primary or secondary alkyl group having 8 to 18 carbon atoms, and A¹ is a polyoxyalkylene chain.

In the general formula (i), the number of carbon atoms in R⁶ is preferably 10 to 16, and more preferably 12 to 16. When the number of carbon atoms in R⁶ is 18 or less, excellent precipitation stability of the composition is likely obtained. On the other hand, when the number of carbon atoms in R⁶ exceeds 18, it is difficult to handle because of the high flow temperature. When the number of carbon atoms of R⁶ is 8 or less, the surface tension of the composition is increased and, thus, permeability and wettability are likely impaired.

The polyoxyalkylene chain of A¹ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically supplied, or a broader or bimodal distribution which may be obtained by blending. When the average number of repeating oxypropylene groups is more than 0, the oxyethylene groups and oxypropylene groups in the polyoxyalkylene chain may be arranged in blocks or randomly. From the viewpoint of viscosity and precipitation stability of the composition, a polyoxyalkylene chain, in which the average number of repeating oxyethylene groups is 7 to 12 and the average number of repeating oxypropylene groups is 0 to 2, is preferable. In particular, A¹ having 0.5 to 1.5 oxypropylene groups on average favorably results in reduced foamability, and is thus preferable.

More preferably, R⁶ is (R')(R")HC-, wherein R' and R" are the same or different linear, branched, or cyclic alkyl groups, and the total amount of carbon atoms is at least 5, preferably 7 to 17. Preferably, at least one of R' and R" is a branched or cyclic hydrocarbon group.

Specific examples of the polyoxyethylene alkyl ether include C₁₃H₂₇-O-C₂H₄O)ₙ-H, C₁₂H₂₅-O-C₂H₄O)ₙ-H, C₁₀H₂₁CH(CH₃)CH₂-O-C₂H₄O)ₙ-H, C₁₃H₂₇-O-C₂H₄O)ₙ-(CH(CH₃)CH₂O)-H, C₁₆H₃₃-O-C₂H₄O)ₙ-H, and HC(C₅H₁₁)(C₇H₁₅)-O-C₂H₄O)ₙ-H, wherein n is an integer of 1 or greater. Examples of commercially available products of the polyoxyethylene alkyl ether include Genapol X series (manufactured by Clariant AG) such as Genapol X080 (trade name), NOIGEN TDS series (manufactured by DKS Co., Ltd.) such as NOIGEN TDS-80 (trade name), LEOCOL TD series (manufactured by Lion Corp.) such as LEOCOL TD-90 (trade name), LIONOL(R) TD series (manufactured by Lion Corp.), T-Det A series (manufactured by Harcros Chemicals Inc.) such as T-Det A 138 (trade name), and Tergitol(R) 15 S series (manufactured by The Dow Chemical Company).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all trade names, manufactured by Dow Chemical Co., Ltd.).

The hydrophobic group of the nonionic surfactant may be any of an alkylphenol group, a linear alkyl group, and a branched alkyl group. Examples of the nonionic surfactant include a nonionic surfactant represented by the general formula (ii):

R⁷-C₆H₄-O-A²-H (ii)

wherein R⁷ is a linear or branched alkyl group having 4 to 12 carbon atoms, and A² is a polyoxyalkylene chain. Specific examples of the nonionic surfactant include Triton(R) X-100 (trade name, manufactured by Dow Chemical Co., Ltd.).

The polyoxyalkylene chain of A² may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as usually provided, or a broader or bimodal distribution which may be obtained by blending. When the average number of repeating oxypropylene groups is more than 0, the oxyethylene groups and oxypropylene groups in the polyoxyalkylene chain may be arranged in blocks or randomly. From the viewpoint of viscosity and precipitation stability of the composition, a polyoxyalkylene chain, in which the average number of repeating oxyethylene groups is 7 to 12 and the average number of repeating oxypropylene groups is 0 to 2, is preferable. In particular, A² having 0.5 to 1.5 oxypropylene groups on average favorably results in reduced foamability, and is thus preferable.

More preferably, R⁷ is a primary or secondary alkyl group, and is more preferably (R')(R")HC-, wherein R' and R'' are the same or different linear, branched, or cyclic alkyl groups, and the total amount of carbon atoms is at least 5, preferably 7 to 17. Preferably, at least one of R' and R" is a branched or cyclic hydrocarbon group.

Examples of the nonionic surfactant also include polyol compounds. Specific examples include those described in International Publication No. WO 2011/014715. Typical examples of the polyol compound include compounds having one or more sugar units as polyol units. The sugar units may be modified to contain at least one long chain. Examples of suitable polyol compounds containing at least one long chain moiety include alkyl glycosides, modified alkyl glycosides, sugar esters, and combinations thereof. Examples of the sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 of the same or different monosaccharides. Examples of oligosaccharides include, but are not limited to, saccharose, maltose, lactose, raffinose, and isomaltose.

Typically, sugars suitable for use as polyol compounds include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to the carbon ring atoms. Typically, the sugars are modified in that one or more of the hydrogen atoms of a hydroxy group (and/or hydroxyalkyl group) bonded to the carbon ring atoms has been substituted by the long chain residues such that an ether or ester bond is created between the long chain residue and the sugar moiety. The sugar-based polyol may contain a single sugar unit or a plurality of sugar units. The single sugar unit or the plurality of sugar units may be modified with long chain moieties as described above. Specific examples of sugar-based polyol compounds include glycosides, sugar esters, sorbitan esters, and mixtures and combinations thereof.

A preferable type of polyol compound is an alkyl or modified alkyl glucoside. These types of surfactant contain at least one glucose moiety. 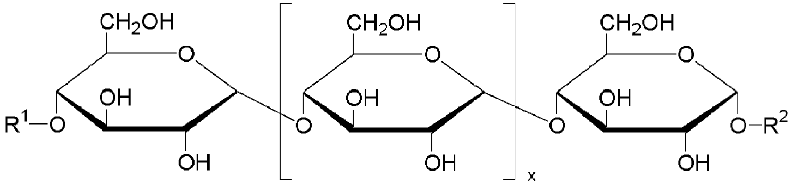 wherein x represents 0, 1, 2, 3, 4, or 5 and R¹ and R² each independently represent H or a long chain unit containing at least 6 carbon atoms, provided that at least one of R¹ or R² is not H. Typical examples of R¹ and R² include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. It is understood that the above formula represents specific examples of alkyl poly glucosides showing glucose in its pyranose form but other sugars or the same sugars but in different enantiomeric or diastereomeric forms may also be used.

Alkyl glucosides are obtainable by, for example, acid-catalyzed reactions of glucose, starch, or n-butyl glucoside with aliphatic alcohols, which typically yields a mixture of various alkyl glucosides (Alkylpolygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic(R) R series and tridecyl alcohol alkoxylates supplied from BASF as Iconol(R) TDA series.

The nonionic surfactant is preferably at least one selected from the group consisting of a nonionic surfactant represented by the general formula (i) and a nonionic surfactant represented by the general formula (ii), and more preferably a nonionic surfactant represented by the general formula (i).

Preferably, the nonionic surfactant does not contain an aromatic moiety.

In the polymerization, a compound having a functional group capable of reaction by radical polymerization and a hydrophilic group may be used together with the polymer (I). The compound having a functional group capable of reaction by radical polymerization and a hydrophilic group may be the same compound as a modifying monomer (A), which will be described below.

In the polymerization, in addition to the polymer (I) and optionally used other compounds having a surfactant function, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. One stabilizing aid may be used singly or used as a combination of two or more. The stabilizing aid is more preferably paraffin wax. The paraffin wax may be in the form of liquid, semi-solid, or solid at room temperature, and is preferably a saturated hydrocarbon having 12 or more carbon atoms. The paraffin wax usually preferably has a melting point of 40 to 65°C, and more preferably 50 to 65°C.

The amount of the stabilizing aid used is preferably 0.1 to 12% by mass, and more preferably 0.1 to 8% by mass, based on the mass of the aqueous medium used. Desirably, the stabilizing aid is sufficiently hydrophobic so that the stabilizing aid is completely separated from the aqueous dispersion after polymerization, and does not serve as a contaminating component.

The polymerization is performed by charging a polymerization reactor with an aqueous medium, the polymer (I), a monomer, and optionally a further additive, stirring the contents of the reactor, maintaining the reactor at a predetermined polymerization temperature, and adding a predetermined amount of a polymerization initiator to thereby initiate the polymerization reaction. After the beginning of the polymerization reaction, the components such as the monomer, the polymerization initiator, a chain transfer agent, and the polymer (I) may additionally be added depending on the purpose. The polymer (I) may be added after the polymerization reaction is initiated.

The polymerization is usually performed at a polymerization temperature of 5 to 120°C and a polymerization pressure of 0.05 to 10 MPaG. The polymerization temperature and the polymerization pressure are suitably determined according to the type of monomer used, the molecular weight of the target fluororesin, and the reaction rate.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is suitably determined according to the type of monomer, the molecular weight of the target fluororesin, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples thereof include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω-hydro-dodecafluorohexanoyl)peroxide, di(ω-hydro-tetradecafluoroheptanoyl)peroxide, di(ω-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω-chloro-hexafluorobutyryl)peroxide, di(ω-chloro-decafluorohexanoyl)peroxide, di(ω-chloro-tetradecafluorooctanoyl)peroxide, ω-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and may be used in an amount of 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator may preferably contain a copper salt or an iron salt. The copper salt may be copper(II) sulfate, and the iron salt may be iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, ammonium cerium nitrate/oxalic acid, and bromate/bisulfite, and potassium permanganate/oxalic acid is preferable. When using a redox initiator, one of an oxidizing agent or a reducing agent may be introduced into a polymerization tank in advance, and then the other may be added continuously or intermittently to initiate polymerization. For example, in the case of using potassium permanganate/oxalic acid, preferably a polymerization tank is charged with oxalic acid, and then potassium permanganate is continuously added thereto.

The polymerization initiator may be added in any amount, and the initiator in an amount that does not significantly decrease the polymerization rate (e.g., concentration of several ppm in water) or more may be added at once in the initial stage of polymerization, or may be added successively or continuously. The upper limit is within a range where the reaction temperature is allowed to increase while the polymerization reaction heat is removed through the device surface, and the upper limit is more preferably within a range where the polymerization reaction heat can be removed through the device surface.

The aqueous medium is a reaction medium in which polymerization is carried out, and means a liquid containing water. The aqueous medium is not limited as long as it contains water, and may be a medium that contains water as well as a fluorine-free organic solvent such as alcohol, ether, or ketone and/or a fluorine-containing organic solvent having a boiling point of 40°C or lower.

In the polymerization, known chain transfer agents, radical scavengers, and decomposers may be added to adjust the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent to be used may be a bromine compound or an iodine compound. An example of a polymerization method using a bromine compound or an iodine compound may be a method involving polymerization of a fluoromonomer in an aqueous medium substantially in the absence of oxygen and in the presence of a bromine compound or an iodine compound (iodine transfer polymerization). Representative examples of the bromine compound or the iodine compound to be used include compounds represented by the general formula:

R^{a}IₓBr_{y}

wherein x and y are each an integer of 0 to 2 and satisfy 1 ≤ x + y ≤ 2; and R^{a} is a saturated or unsaturated fluorohydrocarbon or chlorofluorohydrocarbon group having 1 to 16 carbon atoms, or a hydrocarbon group having 1 to 3 carbon atoms, each of which optionally contains an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodo- and monobromo-substitution product, diiodo- and monobromo-substitution product, and (2-iodoethyl)- and (2-bromoethyl)-substitution product of benzene. These compounds may be used singly or in any combination.

Among these, 1,4-diiodoperfluorobutane, 1,6-diiodoperfluorohexane, and 2-iodoperfluoropropane are preferably used from the viewpoint of polymerization reactivity, crosslinkability, availability, and the like.

The amount of the chain transfer agent used is usually 1 to 50,000 ppm by mass, preferably 1 to 20,000 ppm by mass, based on the total amount of the fluoromonomer fed.

The chain transfer agent may be added to the reaction vessel at once before initiation of the polymerization, may be added at once after initiation of the polymerization, may be added in multiple portions during the polymerization, or may be added continuously during the polymerization.

The polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Moreover, the concentration of radicals in the system can be also regulated by adding a radical scavenger such as hydroquinone or catechol or adding a peroxide decomposer such as ammonium sulfite during polymerization.

In the polymerization, the fluororesin may be obtained by polymerizing the fluoromonomer in the aqueous medium in the presence of the polymer (I) to produce an aqueous dispersion of fluororesin particles, and seed-polymerizing the fluoromonomer to the fluororesin particles in the aqueous dispersion of the fluororesin particles.

In the polymerization, the fluoromonomer is preferably polymerized substantially in the absence of a fluorine-containing surfactant (excluding the compound having a functional group capable of reaction by radical polymerization and a hydrophilic group). While a fluorine-containing surfactant is conventionally used in the polymerization of a fluoromonomer in an aqueous medium, the production method of the present disclosure enables a fluororesin to be obtained even without using the fluorine-containing surfactants.

In the present disclosure, the expression "substantially in the absence of a fluorine-containing surfactant" means that the amount of the fluorine-containing surfactant is 10 ppm by mass or less based on the aqueous medium. The amount of the fluorine-containing surfactant based on the aqueous medium is preferably 1 mass ppm or less, more preferably 100 mass ppb or less, even more preferably 10 mass ppb or less, and yet more preferably 1 mass ppb or less.

Examples of the fluorine-containing surfactant include anionic fluorine-containing surfactants. The anionic fluorine-containing surfactant may be, for example, a fluorine atom-containing surfactant having 20 or fewer carbon atoms in total in the portion excluding the anionic group.

The fluorine-containing surfactant may also be a fluorine-containing surfactant in which the molecular weight of the anionic moiety is 1,000 or less.

The "anionic moiety" means the portion of the fluorine-containing surfactant excluding the cation. For example, in the case of F(CF₂)ₙ₁COOM represented by the formula (I) described below, the anionic moiety is the "F(CF₂)ₙ₁COO" portion.

Examples of the fluorine-containing surfactant also include fluorine-containing surfactants having a LogPOW of 3.5 or less. The LogPOW is a partition coefficient between 1-octanol and water, and is represented by LogP wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (ϕ4.6 mm × 250 mm, manufactured by Tosoh Corporation), eluent: acetonitrile/0.6% by mass HClO₄ solution = 1/1 (vol/vol%), flow rate: 1.0 ml/min, sample volume: 300 µL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, and U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3,250,808, U.S. Patent No. 3,271,341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

Examples of the anionic fluorine-containing surfactant include a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced with F; the alkylene group optionally containing one or more ether bonds in which some of H are replaced with Cl; and Y⁰ is an anionic group.

The anionic group Y⁰ may be -COOM, -SO₂M, or -SO₃M, and may be -COOM or -SO₃M.

M is H, a metal atom, NR⁷₄, imidazolium optionally having a substituent, pyridinium optionally having a substituent, or phosphonium optionally having a substituent, wherein R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In the Rfⁿ⁰, 50% or more of H atoms may be replaced with fluorine atoms.

Examples of the compound represented by the general formula (N⁰) include:
a compound represented by the following general formula (N¹):

   Xⁿ⁰-(CF₂)ₘ₁-Y⁰ (N¹)
wherein Xⁿ⁰ is H, Cl, or F; m1 is an integer of 3 to 15; and Y⁰ is as defined above;
   a compound represented by the following general formula (N²):

   Rfⁿ¹-O-(CF(CF₃)CF₂O)ₘ₂CFXⁿ¹-Y⁰ (N²)
wherein Rfⁿ¹ is a perfluoroalkyl group having 1 to 5 carbon atoms; m2 is an integer of 0 to 3; Xⁿ¹ is F or CF₃; and Y⁰ is as defined above;
   a compound represented by the following general formula (N³):

   Rfⁿ²(CH₂)ₘ₃-(Rfⁿ³)_{q}-Y⁰ (N³)
wherein Rfⁿ² is a partially or fully fluorinated alkyl group having 1 to 13 carbon atoms and optionally containing an ether bond; m3 is an integer of 1 to 3; Rfⁿ³ is a linear or branched perfluoroalkylene group having 1 to 3 carbon atoms; q is 0 or 1; and Y⁰ is as defined above;
   a compound represented by the following general formula (N⁴):

   Rfⁿ⁴-O-(CYⁿ¹Yⁿ²)ₚCF₂-Y⁰ (N⁴)
wherein Rfⁿ⁴ is a linear or branched partially or fully fluorinated alkyl group having 1 to 12 carbon atoms and optionally containing an ether bond and/or a chlorine atom; and Yⁿ¹ and Yⁿ² are the same or different and are each H or F; p is 0 or 1; and Y⁰ is as defined above; and
   a compound represented by the general formula (N⁵): 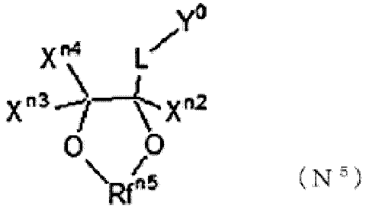
wherein Xⁿ², Xⁿ³, and Xⁿ⁴ may be the same or different and are each H, F, or a linear or branched partially or fully fluorinated alkyl group having 1 to 6 carbon atoms and optionally containing an ether bond; Rfⁿ⁵ is a linear or branched partially or fully fluorinated alkylene group having 1 to 3 carbon atoms and optionally containing an ether bond; L is a linking group; and Y⁰ is as defined above, provided that the total number of carbon atoms in Xⁿ², Xⁿ³, Xⁿ⁴, and Rfⁿ⁵ is 18 or less.

More specific examples of the compound represented by the general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14; and M is H, a metal atom, NR⁷₄, imidazolium optionally having a substituent, pyridinium optionally having a substituent, or phosphonium optionally having a substituent, wherein R⁷ is H or an organic group.

The ω-H perfluorocarboxylic acid (II) is represented by the following general formula (II):

H(CF₂)ₙ₂COOM (II)

wherein n2 is an integer of 4 to 15; and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms; n3 is an integer of 0 to 3; and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms; Rf³ is a linear or branched perfluoroalkylene group having 1 to 3 carbon atoms; n4 is an integer of 1 to 3; and M is as defined above.

The alkoxyfluorocarboxylic acid (V) is represented by the following general formula (V):

Rf⁴-O-CY¹Y²CF₂-COOM (V)

wherein Rf⁴ is a linear or branched partially or fully fluorinated alkyl group having 1 to 12 carbon atoms and optionally containing an ether bond and/or a chlorine atom; Y¹ and Y² are the same or different and are each H or F; and M is as defined above.

The perfluoroalkylsulfonic acid (VI) is represented by the following general formula (VI):

F(CF₂)ₙ₅SO₃M (VI)

wherein n5 is an integer of 3 to 14; and M is as defined above.

The ω-H perfluorosulfonic acid (VII) is represented by the following general formula (VII):

H(CF₂)ₙ₆SO₃M (VII)

wherein n6 is an integer of 4 to 14; and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms; n7 is an integer of 1 to 3; and M is as defined above.

The alkylalkylenecarboxylic acid (IX) is represented by the following general formula (IX):

Rf⁶(CH₂)ₙ₈COOM (IX)

wherein Rf⁶ is a linear or branched partially or fully fluorinated alkyl group having 1 to 13 carbon atoms and optionally containing an ether bond; n8 is an integer of 1 to 3; and M is as defined above.

The fluorocarboxylic acid (X) is represented by the following general formula (X):

Rf⁷-O-Rf⁸-O-CF₂-COOM (X)

wherein Rf⁷ is a linear or branched partially or fully fluorinated alkyl group having 1 to 6 carbon atoms and optionally containing an ether bond and/or a chlorine atom; Rf⁸ is a linear or branched partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched partially or fully fluorinated alkyl group having 1 to 12 carbon atoms and optionally containing an ether bond and optionally containing chlorine; Y¹ and Y² are the same or different and are each H or F; and M is as defined above.

The compound (XII) is represented by the following general formula (XII): 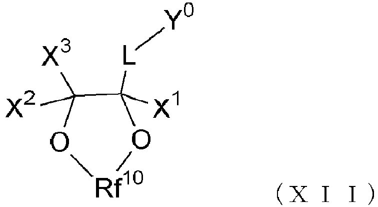 wherein X¹, X², and X³ may be the same or different and are H, F, and a linear or branched partially or fully fluorinated alkyl group having 1 to 6 carbon atoms and optionally containing an ether bond; Rf¹⁰ is a perfluoroalkylene group having 1 to 3 carbon atoms; L is a linking group; and Y⁰ is an anionic group.

Y⁰ may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms and containing chlorine; n9 is an integer of 0 to 3; n10 is an integer of 0 to 3; and M is as defined above. An example of the compound (XIII) may be CF₂ClO(CF₂CF(CF₃)O)ₙ₉(CF₂O)ₙ₁₀CF₂COONH₄ (a mixture having an average molecular weight of 750, n9 and n10 in the formula are as described above).

As described above, examples of the anionic fluorine-containing surfactant include a carboxylic acid-based surfactant and a sulfonic acid-based surfactant.

The fluorine-containing surfactant may be one type of fluorine-containing surfactant or it may be a mixture containing two or more types of fluorine-containing surfactants.

Examples of the fluorine-containing surfactant include compounds represented by the formulae below. The fluorine-containing surfactant may be a mixture of these compounds. In one embodiment of the polymerization, the fluoromonomer is polymerized substantially in the absence of the compounds represented by the following formulae:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF (CF₃)CF₂OCF₂COOM,

CF₂ClCF(CF₃)OCF₂CF(CF₃)OCF₂COOM,

and 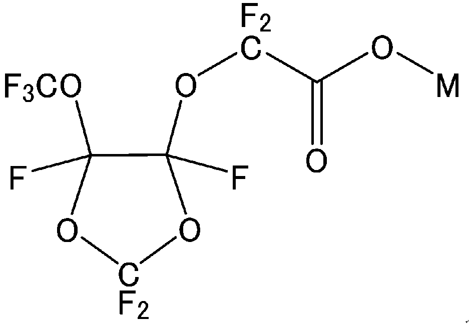 wherein M is H, a metal atom, NR⁷₄, optionally substituted imidazolium, optionally substituted pyridinium, or optionally substituted phosphonium, wherein R⁷ is H or an organic group.

### (Aqueous medium)

The aqueous medium used in the production method of the present disclosure means a liquid that contains water. The aqueous medium is not limited as long as it contains water, and may be a medium that contains water as well as a fluorine-free organic solvent such as alcohol, ether, or ketone and/or a fluorine-containing organic solvent having a boiling point of 40°C or lower.

Polymerization of the fluoromonomer in the aqueous medium yields a polymerization dispersion containing the fluororesin, the polymer (I), and the aqueous medium. The content (the solid concentration) of the fluororesin in the polymerization dispersion is usually 10 to 50% by mass and more preferably 15% by mass or more, and is preferably 40% by mass or less and more preferably 35% by mass or less.

The content of the fluororesin in the polymerization dispersion is a value obtained by drying 1 g of the polymerization dispersion in an air dryer at 150°C for 60 minutes, measuring the mass of non-volatile matter, and calculating the proportion of the mass of the non-volatile matter based on the mass (1 g) of the polymerization dispersion in percentage.

### (Fluororesin)

The polymerization dispersion obtained by the above method contains a fluororesin containing a TFE unit.

The fluororesin preferably has an ion exchange rate (IXR) of higher than 53. A preferable fluoropolymer has either no ionic groups at all or a limited number of ionic groups that result in an ion exchange rate higher than about 100. A preferable ion exchange rate of the fluororesin is preferably 1,000 or higher, more preferably 2,000 or higher, and even more preferably 5,000 or higher.

The TFE polymer may suitably be a TFE homopolymer, or may be a copolymer containing (1) TFE, (2) one or two or more fluorine-containing monomers each of which is different from TFE and has 2 to 8 carbon atoms, in particular VDF, HFP, or CTFE, and (3) a further monomer. Examples of the further monomer (3) include fluoro(alkyl vinyl ethers) having an alkyl group having 1 to 5 carbon atoms, particularly 1 to 3 carbon atoms; fluorodioxoles; perfluoroalkyl ethylenes; and ω-hydroperfluoroolefins.

The TFE polymer may also be a copolymer of TFE and one or two or more fluorine-free monomers. Examples of the fluorine-free monomers include alkenes such as ethylene and propylene; vinyl esters; and vinyl ethers. The TFE polymer may also be a copolymer of TFE, one or two or more fluorine-containing monomers having 2 to 8 carbon atoms, and one or two or more fluorine-free monomers.

The VDF polymer may suitably be a VDF homopolymer (PVDF), or may be a copolymer containing (1) VDF, (2) one or two or more fluoroolefins each of which is different from VDF and has 2 to 8 carbon atoms, in particular TFE, HFP, or CTFE, and (3) a perfluoro (alkyl vinyl ether) having an alkyl group having 1 to 5 carbon atoms, particularly 1 to 3 carbon atoms, or the like.

The CTFE polymer may suitably be a CTFE homopolymer, or may be a copolymer consisting of (1) CTFE, (2) one or two or more fluoroolefins each of which is different from CTFE and has 2 to 8 carbon atoms, in particular TFE or HFP, and (3) a perfluoro(alkyl vinyl ether) having an alkyl group having 1 to 5 carbon atoms, particularly 1 to 3 carbon atoms.

The CTFE polymer may also be a copolymer of CTFE and one or two or more fluorine-free monomers, and examples of the fluorine-free monomers include alkenes such as ethylene and propylene; vinyl esters; and vinyl ethers.

In the production method of the present disclosure, for example, a tetrafluoroethylene polymer [TFE polymer (PTFE)] can be suitably produced as the non melt-processable fluororesin (I), and an ethylene/TFE copolymer [ETFE], a TFE/HFP copolymer [FEP], a TFE/perfluoro(alkyl vinyl ether) copolymer [such as PFA or MFA], a TFE/perfluoroallyl ether copolymer, a TFE/VDF copolymer, or an electrolytic polymer precursor can be suitably produced as the melt-processable fluororesin (II).

The fluororesin is, in particular, more preferably a fluororesin having a fluorine substitution percentage, calculated by the following formula, of 50% or higher, even more preferably a fluororesin having the fluorine substitution percentage of higher than 50%, yet more preferably a fluororesin having the fluorine substitution percentage of 55% or higher, yet more preferably a fluororesin having the fluorine substitution percentage of 60% or higher, yet more preferably a fluororesin having the fluorine substitution percentage of 75% or higher, particularly preferably a fluororesin having the fluorine substitution percentage of 80% or higher, and most preferably a fluororesin having the fluorine substitution percentage of 90 to 100%, i.e., a perfluororesin. Fluorine substitution percentage (%) = (Number of fluorine atoms bonded to carbon atoms constituting fluororesin) / ((Number of hydrogen atoms bonded to carbon atoms constituting fluororesin) + (Number of fluorine atoms and chlorine atoms bonded to carbon atoms constituting fluororesin)) × 100

The perfluororesin is more preferably a fluororesin having the fluorine substitution percentage of 95 to 100%, even more preferably PTFE, FEP, or PFA, and particularly preferably PTFE.

The fluororesin may have a core-shell structure. An example of the fluororesin having a core-shell structure may be modified PTFE including a core of high-molecular-weight PTFE and a shell of a lower-molecular-weight PTFE or a modified PTFE in the particle. Examples of such modified PTFE include PTFE described in Japanese National Publication of International Patent Application No. 2005/527652.

The core-shell structure may have the following structures.
Core: TFE homopolymer Shell: TFE homopolymer
Core: modified PTFE Shell: TFE homopolymer
Core: modified PTFE Shell: modified PTFE
Core: TFE homopolymer Shell: modified PTFE
Core: low-molecular-weight PTFE Shell: high-molecular-weight PTFE
Core: high-molecular-weight PTFE Shell: low-molecular-weight PTFE

In the fluororesin having a core-shell structure, the lower limit of the proportion of the core is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the core is preferably 99.5% by mass, more preferably 99.0% by mass, even more preferably 98.0% by mass, yet more preferably 97.0% by mass, particularly preferably 95.0% by mass, and most preferably 90.0% by mass.

In the fluororesin having a core-shell structure, the lower limit of the proportion of the shell is preferably 0.5% by mass, more preferably 1.0% by mass, even more preferably 2.0% by mass, yet more preferably 3.0% by mass, particularly preferably 5.0% by mass, and most preferably 10.0% by mass. The upper limit of the proportion of the shell is preferably 99.5% by mass, more preferably 99.0% by mass, even more preferably 98.0% by mass, yet more preferably 97.0% by mass, particularly preferably 95.0% by mass, and most preferably 90.0% by mass.

In the fluororesin having a core-shell structure, the core or the shell may be composed of two or more layers. For example, the fluororesin may have a trilayer structure including a core center portion of a modified PTFE, a core outer layer portion of a TFE homopolymer, and a shell of a modified PTFE.

Examples of the fluororesin having a core-shell structure also include those in which a single particle of the fluororesin has a plurality of cores.

The non melt-processible fluororesin (I) and the melt-fabricable fluororesin (II) suitably produced by the production method of the present disclosure are preferably produced in the following manner.

### (I) Non melt-processible fluororesin

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and even more preferably 50°C or higher. The polymerization temperature is more preferably 120°C or lower, and even more preferably 100°C or lower. The polymerization pressure is more preferably 0.3 MPaG or higher, even more preferably 0.5 MPaG or higher, and more preferably 5.0 MPaG or lower, and even more preferably 3.0 MPaG or lower. In particular, from the viewpoint of improving the yield of the fluororesin, the polymerization pressure is preferably 1.0 MPaG or more, more preferably 1.2 MPaG or more, even more preferably 1.5 MPaG or more, and even more preferably 2.0 MPaG or more.

In one embodiment, the polymerization reaction is initiated by introducing pure water into a pressure-resistant reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In production of the TFE polymer (PTFE), various known modifying monomers may be used in combination. The TFE polymer in the present disclosure is a concept that encompasses not only a TFE homopolymer but also a non melt-processible copolymer of TFE and a modifying monomer (hereinafter, referred to as "modified PTFE").

The modifying monomer is not limited as long as it is copolymerizable with TFE, and examples include fluoromonomers and non-fluoromonomers. One modifying monomer may be used, and two or more may be used.

An example of the non-fluoromonomer may be, but not limited to, a monomer represented by the general formula:

CH₂=CR^{Q1}-LR^{Q2}

wherein R^{Q1} represents a hydrogen atom or an alkyl group; L represents a single bond, -CO-O-*, -O-CO-*, or -O-; ***** represents the site of bonding to R^{Q2}; and R^{Q2} represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. In particular, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, a perfluoro unsaturated compound represented by the following general formula (A):

CF₂=CF-ORf (A)

wherein Rf represents a perfluoroorganic group. The "perfluoroorganic group" in the present disclosure, means an organic group in which all hydrogen atoms bonded to the carbon atoms are replaced with fluorine atoms. The perfluoroorganic group optionally has ether oxygen.

Examples of the perfluorovinyl ether include a perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by the general formula (A) in which Rf is a perfluoro(alkoxyalkyl) group having 4 to 9 carbon atoms; those in which Rf is a group represented by the following formula: 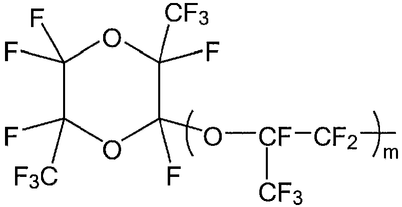 wherein m represents 0 or an integer of 1 to 4; and those in which Rf is a group represented by the following formula:

CF₃CF₂CF₂-(O-CF(CF₃)-CF₂)ₙ-

wherein n represents an integer of 1 to 4.

Examples of hydrogen-containing fluoroolefins include CH₂=CF₂, CFH=CH₂, CFH=CF₂, CH₂=CFCF₃, CH₂=CHCF₃, CHF=CHCF₃ (E-form), and CHF=CHCF₃ (Z-form).

Examples of the (perfluoroalkyl)ethylene (PFAE) include, but are not limited to, (perfluorobutyl)ethylene (PFBE) and (perfluorohexyl)ethylene.

An example of the perfluoroallyl ether may be a fluoromonomer represented by the general formula:

CF₂=CF-CF₂-ORf

wherein Rf represents a perfluoroorganic group.

Rf in the above general formula is the same as Rf in the general formula (A). Rf is preferably a perfluoroalkyl group having 1 to 10 carbon atoms or a perfluoroalkoxyalkyl group having 1 to 10 carbon atoms. Perfluoroallyl ether is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

A preferable example of the modifying monomer is also (3) a modifying monomer having a monomer reactivity ratio of 0.1 to 8. The presence of the modifying monomer (3) makes it possible to obtain PTFE particles having a small particle size, and to thereby obtain an aqueous dispersion having high dispersion stability.

The monomer reactivity ratio in the copolymerization with TFE is a value obtained by dividing a rate constant attained when the propagating radical reacts with TFE when the propagating radical is less than a repeating unit based on TFE by a rate constant attained when the propagating radical reacts with a modifying monomer. A smaller monomer reactivity ratio indicates higher reactivity of the modifying monomers with TFE. The monomer reactivity ratio can be calculated by copolymerizing TFE and the modifying monomer, determining the composition of the polymer formed immediately after initiation, and calculating the reactivity ratio by Fineman-Ross equation.

The copolymerization is carried out by using 3,600 g of deionized degassed water, 1,000 ppm by mass of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added into the reactor, and then 0.072 g of ammonium persulfate (20 ppm by mass based on the water) is added thereto. To maintain the polymerization pressure at 0.78 MPaG, TFE is continuously fed thereinto. When the amount of TFE charged reaches 1,000 g, stirring is stopped, and the pressure is released until the pressure in the reactor decreases to the atmospheric pressure. After cooling, the paraffin wax is separated to give an aqueous dispersion containing the produced polymer. The aqueous dispersion is stirred so that the resulting polymer coagulates, and the polymer is dried at 150°C. The composition of the resulting polymer is calculated by suitably combining NMR, FT-IR, elemental analysis, and X-ray fluorescence analysis according to the type of monomer.

The modifying monomer having a monomer reactivity ratio of 0.1 to 8 (3) is preferably at least one selected from the group consisting of modifying monomers represented by the formulae (3a) to (3d):

CH₂=CH-Rf¹ (3a)

wherein Rf¹ is a perfluoroalkyl group having 1 to 10 carbon atoms;

CF₂=CF-O-Rf² (3b)

wherein Rf² is a perfluoroalkyl group having 1 to 2 carbon atoms;

CF₂=CF-O-(CF₂)ₙCF=CF₂ (3c)

wherein n is 1 or 2; 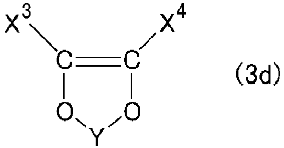 wherein X³ and X⁴ are each F, Cl, or a methoxy group; and Y is represented by the formula Y1 or Y2; and

-CF=CF- (Y1)

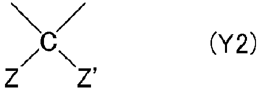

in the formula Y2, Z and Z' are each F or a fluorinated alkyl group having 1 to 3 carbon atoms.

The content of the modifying monomer (3) unit is preferably in the range of 0.00001 to 1.0% by mass based on the entirety of polymerized units in PTFE. The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ethers), (perfluoroalkyl)ethylenes, ethylene, and modifying monomers having a functional group capable of reaction by radical polymerization and a hydrophilic group, in view of obtaining an aqueous dispersion with a small average primary particle size of a primary particle, a small aspect ratio of primary particles, and excellent stability. The use of the modifying monomer makes it possible to obtain an aqueous dispersion of PTFE with a smaller average primary particle size, a small aspect ratio of primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

More preferably, the modifying monomer contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, the perfluoro(alkyl vinyl ether) unit, and the (perfluoroalkyl)ethylene unit is preferably in the range of 0.00001 to 1% by mass based on the entirety of polymerized units in PTFE. The lower limit of the total amount is more preferably 0.0001% by mass, more preferably 0.0005% by mass, even more preferably 0.001% by mass, and yet more preferably 0.005% by mass. The upper limit is, in ascending order of preference, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

The modifying monomer also preferably includes a modifying monomer having a functional group capable of reaction by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Also, the amount of uncoagulated polymer can be reduced. Moreover, the aspect ratio of the primary particles can be reduced.

The amount of the modifying monomer (A) used is preferably an amount exceeding 0.1 mass ppm of the aqueous medium, more preferably an amount exceeding 0.5 mass ppm, even more preferably an amount exceeding 1.0 mass ppm, yet more preferably 5 mass ppm or more, and particularly preferably 10 mass ppm or more. When the amount of the modifying monomer (A) used is too small, the average primary particle size of PTFE obtained may not be small enough.

The amount of the modifying monomer (A) used may be within the above range, but for example, the upper limit can be set to 5,000 ppm by mass. In the production method, the modifying monomer (A) may also be added to the system during the reaction in order to improve the stability of the aqueous dispersion during or after the reaction.

Since the modifying monomer (A) is highly water-soluble, even if the unreacted modifying monomer (A) remains in the aqueous dispersion, it can be easily removed by the concentration step or the coagulation and washing steps.

The modifying monomer (A) is incorporated into the resulting polymer during the course of polymerization, and since the concentration of the modifying monomer (A) in the polymerization system itself is low and the amount incorporated into the polymer is small, there is no problem such as an impaired heat resistance of PTFE or coloring of PTFE after sintering.

Examples of the hydrophilic group in the modifying monomer (A) include -NH₂, -PO₃M, -OPO₃M, -SO₃M, -OSO₃M, and - COOM, wherein M represents H, a metal atom, NR^{7y}₄, imidazolium optionally having a substituent, pyridinium optionally having a substituent, or phosphonium optionally having a substituent, wherein R^{7y} is H or an organic group and may be the same or different, and any two thereof may be bonded to each other to form a ring. In particular, the hydrophilic group is preferably -SO₃M or -COOM. The organic group in R^{7y} is preferably an alkyl group. R^{7y} is preferably H or a C₁₋₁₀ organic group, more preferably H or a C₁₋₄ organic group, and even more preferably H or a C₁₋₄ alkyl group.

The metal atom may be a monovalent or divalent metal atom, such as an alkali metal (Group 1) or an alkaline earth metal (Group 2), and is preferably Na, K, or Li.

Examples of the "functional group capable of reaction by radical polymerization" in the modifying monomer (A) include a group having an ethylenically unsaturated bond such as a vinyl group or an allyl group. The group having an ethylenically unsaturated bond can be represented by the following formula:

CX^{e}X^{g}=CX^{f}R-

wherein X^{e}, X^{f}, and X^{g} are each independently F, Cl, H, CF₃, CF₂H, CFH₂, or CH₃; and R is a linking group. The linking group R may be a linking group R^{a}, which will be described below. Preferable examples include groups having an unsaturated bond, such as -CH=CH₂, -CF=CH₂, -CH=CF₂, -CF=CF₂, -CH₂-CH=CH₂, -CF₂-CF=CH₂, -CF₂-CF=CF₂, -(C=O)-CH=CH₂, -(C=O)-CF=CH₂, -(C=O)-CH=CF₂, -(C=O)-CF=CF₂, -(C=O)-C(CH₃)=CH₂, -(C=O)-C(CF₃)=CH₂, -(C=O)-C(CH₃)=CF₂, -(C=O)-C(CF₃)=CF₂, -O-CH₂-CH=CH₂, -O-CF₂-CF=CH₂, -O-CH₂-CH=CF₂, and -O-CF₂-CF=CF₂.

Since the modifying monomer (A) has a functional group capable of reaction by radical polymerization, it is presumed that, when used in the polymerization, it reacts with the fluorine-containing monomer in the initial stage of the polymerization reaction to form particles that have a hydrophilic group derived from the modifying monomer (A) and are highly stable. Thus, polymerization in the presence of the modifying monomer (A) is considered to increase the number of particles.

The polymerization may be carried out in the presence of one or more modifying monomers (A).

In the polymerization, a compound having an unsaturated bond can be used as the modifying monomer (A).

The modifying monomer (A) is preferably a compound represented by the general formula (4):

CXⁱX^{k}=CX^{j}R^{a}-(CZ¹Z²)ₖ-Y³ (4)

wherein Xⁱ, X^{j}, and X^{k} are each independently F, Cl, H, or CF₃; Y³ is a hydrophilic group; R^{a} is a linking group; Z¹ and Z² are each independently H, F, or CF₃; and k is 0 or 1.

Examples of the hydrophilic group include -NH₂, -PO₃M, - OPO₃M, -SO₃M, -OSO₃M, and -COOM, wherein M represents H, a metal atom, NR^{7y}₄, imidazolium optionally having a substituent, pyridinium optionally having a substituent, or phosphonium optionally having a substituent, wherein R^{7y} is H or an organic group, and may be the same or different, and any two thereof may be bonded to each other to form a ring. In particular, the hydrophilic group is preferably -SO₃M or -COOM. The organic group in R^{7y} is preferably an alkyl group. R^{7y} is preferably H or a C₁₋₁₀ organic group, more preferably H or a C₁₋₄ organic group, and even more preferably H or a C₁₋₄ alkyl group. The metal atom may be a monovalent or divalent metal atom, such as an alkali metal (Group 1) or an alkaline earth metal (Group 2), and is preferably Na, K, or Li.

The use of the modifying monomer (A) makes it possible to obtain an aqueous dispersion having a smaller average primary particle size and superior stability. Also, the aspect ratio of the primary particles can be more reduced.

R^{a} is a linking group. In the present disclosure, the term "linking group" refers to a divalent linking group. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be a group that does not contain a carbon atom and that is a catenary heteroatom such as oxygen, sulfur, or nitrogen.

R^{a} is preferably a catenary heteroatom such as oxygen, sulfur, or nitrogen, or a divalent organic group.

When R^{a} is a divalent organic group, the hydrogen atom bonded to the carbon atom may be replaced with a halogen other than fluorine, such as chlorine, and may or may not contain a double bond. R^{a} may be linear or branched, and may be cyclic or acyclic. R^{a} may contain a functional group (e.g., ester, ether, ketone, amine, halide, etc.).

R^{a} may be a fluorine-free divalent organic group or a partially fluorinated or perfluorinated divalent organic group.

R^{a} may be, for example, a hydrocarbon group in which a fluorine atom is not bonded to a carbon atom, a hydrocarbon group in which some of the hydrogen atoms bonded to a carbon atom are replaced with fluorine atoms, a hydrocarbon group in which all of the hydrogen atoms bonded to the carbon atoms are replaced with fluorine atoms, -(C=O)-, -(C=O)-O-, or a hydrocarbon group containing an ether bond, and these groups optionally contain an oxygen atom, optionally contain a double bond, and optionally contain a functional group.

R^{a} is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced with fluorine.

R^{a} is preferably at least one selected from -(CH₂)ₐ-, - (CF₂)ₐ-, -O-(CF₂)ₐ-, -(CF₂)ₐ-O-(CF₂)_{b}-, -O(CF₂)ₐ-O-(CF₂)ₑ-, - (CF₂)ₐ-[O-(CF₂)_{b}]_{c}-, -O(CF₂)ₐ-[O-(CF₂)_{b}]_{c}-, -[(CF₂)-O]_{b}-[(CF₂) _{c}-O]_{d}-, -O[(CF₂)ₐ-O]_{b}-[(CF₂)-O]_{d}-, -O-[CF₂CF(CF₃)O]ₐ-(CF₂)_{b}-, - (C=O)-, -(C=O)-O-, -(C=O)-(CH₂)ₐ-, -(C=O)-(CF₂)ₐ-, -(C=O)-O-(CH₂)ₐ-, -(C=O)-O-(CF₂)ₐ-, -(C=O)-[(CH₂)ₐ-O]_{b}-, -(C=O)-[(CF₂)ₐ-O]_{b}-, - (C=O)-O[(CH₂)ₐ-O]_{b}-, -(C=O)-O[(CF₂)ₐ-O]_{b}-, - (C=O) - O[(CH₂)ₐ-O]_{b}-(CH₂)_{c}-, -(C=O)-O[(CF₂)ₐ-O]_{b}-(CF₂)_{c}-, -(C=O)-(CH₂)ₐ-O-(CH₂)_{b}-, -(C=O)-(CF₂)ₐ-O- (CF₂)_{b}-, -(C=O)-O-(CH₂)ₐ-O-(CH₂)_{b}-, - (C=O)-O-(CF₂)ₐ-O-(CF₂)_{b}-, - (C=O)-O-C₆H₄-, and combinations thereof.

In the formulae, a, b, c, and d are each independently at least 1 or more. a, b, c and d may independently be 2 or more, 3 or more, 4 or more, 10 or more, or 20 or more. The upper limits of a, b, c, and d are 100, for example.

Specific examples suitable for R^{a} include -CF₂-O-, -CF₂-O-CF₂-, -CF₂-O-CH₂-, -CF₂-O-CH₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CH₂-, - (C=O) -, - (C=O) -O-, - (C=O) - (CH₂)-, -(C=O)-(CF₂)-, -(C=O)-O-(CH₂)-, -(C=O)-O-(CF₂)-, -(C=O)-[(CH₂)₂-O]ₙ-, - (C=O)-[(CF₂)₂-O]-, - (C=O)-O[(CH₂)₂-O]-, - (C=O) - O[(CF₂)₂-O]-, -(C=O)-O[(CH₂)₂-O]- (CH₂) -, - (C=O)-O[(CF₂)₂-O]ₙ-(CF₂) -, - (C=O)-(CH₂)₂-O-(CH₂) -, - (C=O) - (CF₂) ₂-O- (CF₂) -, - (C=O)-O-(CH₂)₂-O-(CH₂)-, -(C=O)-O-(CF₂)₂-O-(CF₂)-, and -(C=O)-O-C₆H₄-. In particular, preferable R^{a} is specifically -CF₂-O-, -CF₂-O-CF₂-, -CF₂-O-CF₂CF₂-, -CF₂-O-CF(CF₃)-, -CF₂-O-CF(CF₃)CF₂-, -CF₂-O-CF(CF₃)CF₂-O-, - (C=O) -, - (C=O) -O-, -(C=O) - (CH₂) -, - (C=O) -O-(CH₂) -, -(C=O)-O[(CH₂)₂-O]- , -(C=O)-O[(CH₂)₂-O]-(CH₂) -, -(C=O) (CH₂) ₂-O-(CH₂)-, or - (C=O)-O-C₆H₄-.

In the formulae, n is an integer of 1 to 10.

-R^{a}-(CZ¹Z²)ₖ- in the general formula (4) is preferably - CF₂-O-CF₂-, -CF₂-O-CF(CF₃)-, -CF₂-O-C(CF₃)₂-, -CF₂-O-CF₂-CF₂-, - CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, - CF₂-O-CF(CF₃)-CF(CF₃)-, -CF₂-O-CF(CF₃)-C(CF₃)₂-, -CF₂-O-CF(CF₃) CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, -CF₂-O-CF(CF₃)CF₂-O-C(CF₃)₂-, - (C=O) -, -(C=O)-O-, -(C=O) - (CH₂) -, - (C=O)-(CF₂)-, -(C=O)-O-(CH₂)-, -(C=O)-O-(CF₂)-, -(C=O)-[(CH₂)₂-O]ₙ-(CH₂)-, -(C=O)-[(CF₂)₂-O]ₙ-(CF₂)-, -(C=O)-[(CH₂)₂-O]ₙ-(CH₂)-(CH₂)-, -(C=O)-[(CF₂)₂-O]ₙ-(CF₂)-(CF₂)-, -(C=O)-O[(CH₂)₂-O]ₙ-(CF₂)-, (C=O)-O[(CH₂)₂-O]-(CH₂)(CH₂)-, (C=O)-O[(CF₂)₂-O]ₙ-(CF₂) -, -(C=O)-O[(CF₂)₂-O]ₙ-(CF₂)-(CF₂)-, -(C=O)-(CH₂)₂-O-(CH₂)-(CH₂)-(C=O)-(CF₂)₂-O-(CF₂)-(CF₂)-, -(C=O)-O-(CH₂)₂-O- (CH₂) (CH₂)-(C=O)-O-(CF₂)₂-O-(CF₂)-(CF₂)-, -(C=O)-O-(CH₂)₂-O- (CH₂)-C (CF₃)₂-, -(C=O)-O-(CF₂)₂-O-(CF₂)-C(CF₃)₂-, or - (C=O)-O-C₆H₄-C(CF₃)₂-, and is more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, -CF₂-O-CF(CF₃)CF₂-O-CF(CF₃)-, -(C=O) -, - (C=O)-O-(CH₂)-, -(C=O)-O-(CH₂)-(CH₂)-, -(C=O)-O[(CH₂)₂-O]ₙ-(CH₂)-(CH₂) -, -(C=O)-O-(CH₂)₂-O-(CH₂)-C(CF₃)₂-, or - (C=O)-O-C₆H₄-C(CF₃)2⁻.

In the formulae, n is an integer of 1 to 10.

Specific examples of the compound represented by the general formula (4) include compounds represented by the following formulae: 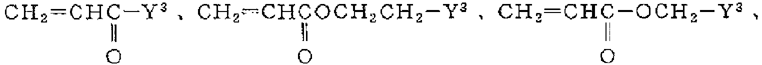 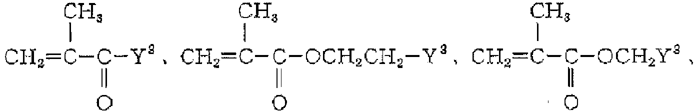 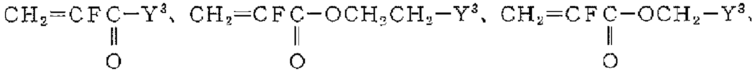 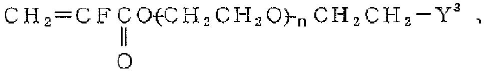 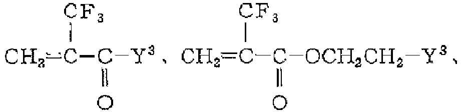 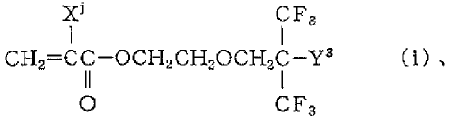 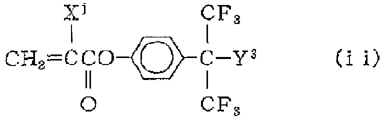 wherein X^{j} and Y³ are as described above; and n is an integer of 1 to 10.

R^{a} is preferably a divalent group represented by the general formula (r1):

-(C=O)ₕ-(O)ᵢ-CF₂-O-(CX⁶₂)ₑ-{O-CF(CF₃)}_{f}-(O)_{g}- (r1)

wherein X⁶ is each independently H, F, or CF₃; e is an integer of 0 to 3; f is an integer of 0 to 3; g is 0 or 1; h is 0 or 1; and i is 0 or 1, and is also preferably a divalent group represented by the general formula (r2):

-(C=O)ₕ-(O)₁-CF₂-O-(CX⁷₂)ₑ- (O)_{g}- (r2)

wherein X⁷ is each independently H, F, or CF₃; e is an integer of 0 to 3; g is 0 or 1; h is 0 or 1; and i is 0 or 1.

-R^{a}-(CZ¹Z²)ₖ- in the general formula (4) is also preferably a divalent group represented by the following formula (t1):

-(C=O)ₕ-(O)ᵢ-CF₂-O-(CX⁶₂)ₑ-{O-CF(CF₃)}_{f}-(O)_{g}-CZ¹Z²- (t1)

wherein X⁶ is each independently H, F, or CF₃; e is an integer of 0 to 3; f is an integer of 0 to 3; g is 0 or 1; h is 0 or 1; i is 0 or 1; and Z¹ and Z² are each independently F or CF₃, and is more preferably a group in which one of Z¹ and Z² is F and the other is CF₃ in the formula (t1).

Also, in the general formula (4), -R^{a}-(CZ¹Z²)ₖ- is preferably a divalent group represented by the following formula (t2):

- (C=O)ₕ-(O)ᵢ-CF₂-O-(CX⁷₂)ₑ-(O)_{g}-CZ¹Z²- (t2)

wherein X⁷ is each independently H, F, or CF₃; e is an integer of 0 to 3; g is 0 or 1; h is 0 or 1; i is 0 or 1; and Z¹ and Z² are each independently F, or CF₃, and is more preferably a group in which one of Z¹ and Z² is F and the other is CF₃ in the formula (t2).

The compound represented by the general formula (4) also preferably has a C-F bond and does not have a C-H bond, in the portion excluding the hydrophilic group (Y³). In other words, in the general formula (4), Xⁱ, X^{j}, and X^{k} are all F, and R^{a} is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group (Y³).

The compound represented by the general formula (4) is also preferably a compound represented by the following formula (4a):

CF₂=CF-O-Rf⁰-Y³ (4a)

wherein Y³ is a hydrophilic group; and Rf⁰ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the following formula (4b):

CH₂=CH-O-Rf⁰-Y³ (4b)

wherein Y³ is a hydrophilic group; and Rf⁰ is a perfluorinated divalent linking group as defined in the formula (4a).

In one preferable embodiment, Y³ in the general formula (4) is -OSO₃M. Examples of the compound represented by the general formula (4) when Y³ is -OSO₃M include CF₂=CF(OCF₂CF₂CH₂OSO₃M), CH₂=CH(O(CF₂)₄CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH(O(CF₂)₄CH₂OSO₃M), CF₂=CF(OCF₂CF₂SO₂N(CH₃)CH₂CH₂OSO₃M), CH₂=CH(OCF₂CF₂CH₂OSO₃M), and CF₂=CF(OCF₂CF₂CF₂CF₂SO₂N(CH₃)CH₂CH₂OSO₃M). In the formulae, M is as described above.

In one preferable embodiment, Y³ in the general formula (4) is preferably -SO₃M. Examples of the compound represented by the general formula (4) when Y³ is -SO₃M include CF₂=CF(OCF₂CF₂SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(OCF₂CF₂SO₃M), CF₂=CF (OCF₂CF(CF₃)OCF₂CF₂CF₂CF₂SO₃M), CH₂=CH(O(CF₂)₄SO₃M), and CH₂=CH(O(CF₂)₃SO₃M). In the formulae, M is as described above.

In one preferable embodiment, Y³ in the general formula (4) is -COOM. Examples of the compound represented by the general formula (4) when Y³ is -COOM include CF₂=CF(OCF₂CF₂COOM), CF₂=CF(OCF₂CF₂CF₂COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(OCF₂CF₂COOM), CH₂=CH(O(CF₂)₄COOM), CH₂=CH(O(CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CH(OCF₂CF₂SO₂NR'CH₂COOM), CF₂=CF(OCF₂CF(CF₃)OCF₂CF₂CF₂CF₂SO₂NR'CH₂COOM), CH₂=CH(O(CF₂)₄SO₂NR'CH₂COOM), and CH₂=CH(O(CF₂)₃SO₂NR'CH₂COOM). In the formulae, R' is H or a C₁₋₄ alkyl group, and M is as described above.

In one preferable embodiment, Y³ in the general formula (4) is -OPO₃M or -OP(O)(OM)₂. Examples of the compound represented by the general formula (4) when Y³ is -OPO₃M or - OP(O)(OM)₂ include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF (OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(OCF₂CF₂CH₂OP(O)(OM)₂, CH₂=CH(O(CF₂)₄CH₂OP(O)(OM)₂), and CH₂=CH(O(CF₂)₃CH₂OP(O)(OM)₂). In the formulae, M is as described above.

In one preferable embodiment, Y³ in the general formula (4) is also -PO₃M or -P(O)(OM)₂. Examples of the compound represented by the general formula (4) when Y³ is -PO₃M or - P(O)(OM)₂ include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(OCF₂CF₂P(O)(OM)₂), CH₂=CH(O(CF₂)₄P(O)(OM)₂), and CH₂=CH(O(CF₂)₃P(O)(OM)₂), wherein M is as described above.

The compound represented by the general formula (4) is preferably at least one selected from the group consisting of: a compound represented by the general formula (5):

CX₂=CY(-CZ₂-O-Rf-Y³) (5)

wherein X is the same or different and is -H or -F; Y is -H, - F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; a compound represented by the general formula (6):

CX₂=CY(-O-Rf-Y³) (6)

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; and a compound represented by the general formula (7):

CX₂=CY(-Rf-Y³) (7)

wherein X is the same or different and is -H or -F; Y is -H, - F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above.

The fluorine-containing alkylene group having 2 to 100 carbon atoms and having an ether bond is an alkylene group that does not include a structure wherein an oxygen atom is an end and that contains an ether bond between carbon atoms.

In the general formula (5), each X is -H or -F. X may be both -F, or at least one thereof may be -H. For example, one may be -F and the other may be -H, or both may be -H.

In the general formula (5), Y is -H, -F, an alkyl group, or a fluorine-containing alkyl group.

The alkyl group is an alkyl group free from fluorine atoms, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or -CF₃, and more preferably -F.

In the general formula (5), Z is the same or different and is -H, -F, an alkyl group, or a fluoroalkyl group.

The alkyl group is an alkyl group free from fluorine atoms, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Z is preferably -H, -F, or -CF₃, and more preferably -F.

In the general formula (5), at least one of X, Y, and Z preferably contains a fluorine atom. For example, X, Y, and Z may be -H, -F, and -F, respectively.

In the general formula (5), Rf is a fluorine-containing alkylene group having 1 to 40 carbon atoms or a fluorine-containing alkylene group having 2 to 100 carbon atoms and having an ether bond.
The fluorine-containing alkylene group preferably has 2 or more carbon atoms. The fluorine-containing alkylene group also preferably has 30 or fewer carbon atoms, more preferably 20 or fewer carbon atoms, and even more preferably 10 or fewer carbon atoms. Examples of the fluorine-containing alkylene group include -CF₂-, -CH₂CF₂-, -CF₂CF₂-, -CF₂CH₂-, -CF₂CF₂CH₂-, - CF(CF₃)-, -CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, and even more preferably 12 or less.
The fluorine-containing alkylene group having an ether bond is also preferably a divalent group represented by the following formula: 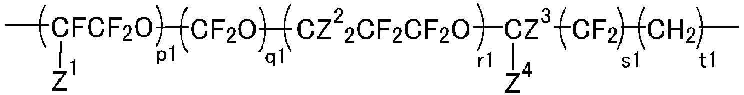 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF(CF₃)CF₂-O-CF(CF₃)-, - (CF(CF₃)CF₂-O)ₙ-CF(CF₃)- (where n is an integer of 1 to 10), - CF(CF₃)CF₂-O-CF(CF₃)CH₂-, -(CF(CF₃)CF₂-O)ₙ-CF(CF₃)CH₂- (where n is an integer of 1 to 10), -CH₂CF₂CF₂O-CH₂CF₂CH₂-, -CF₂CF₂CF₂O-CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (5), Y³ is preferably -COOM, -SO₃M, or -OSO₃M, wherein M is H, a metal atom, NR^{7y}₄, imidazolium optionally having a substituent, pyridinium optionally having a substituent, or phosphonium optionally having a substituent, wherein R^{7y} is H or an organic group, and may be the same or different, and any two may be bonded to each other to form a ring.

The organic group in R^{7y} is preferably an alkyl group.

R^{7y} is preferably H or a C₁₋₁₀ organic group, more preferably H or a C₁₋₄ organic group, and even more preferably H or a C₁₋₄ alkyl group.

The metal atom may be an alkali metal (Group 1), an alkaline earth metal (Group 2), or the like, and is preferably Na, K, or Li.

M is preferably -H, a metal atom, or -NR⁷₄, more preferably -H, an alkali metal (Group 1), an alkaline earth metal (Group 2), or -NR⁷₄, even more preferably -H, -Na, -K, - Li, or NH₄, yet more preferably -H, -Na, -K, or NH₄, particularly preferably -H, -Na or NH₄, and most preferably -H, or -NH₄.
Y³ is preferably -COOM or -SO₃M, and more preferably -COOM.

The compound represented by the general formula (5) is preferably a compound (5a) represented by the general formula (5a):

CH₂=CF(-CF₂-O-Rf-Y³) (5a)

wherein Rf and Y³ are as described above.

Specific examples of the compound represented by the general formula (5a) include a compound represented by the following formula: 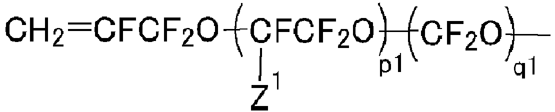 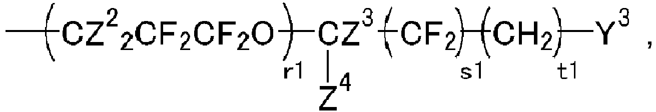 wherein Z¹ is F or CF₃; Z² and Z³ are each H or F; Z⁴ is H, F, or CF₃; p1 + q1 + r1 is an integer of 0 to 10; s1 is 0 or 1; t1 is an integer of 0 to 5; and Y³ is as described above, provided that when Z³ and Z⁴ are both H, p1 + q1 + r1 + s1 is not 0. More specifically, preferable examples include

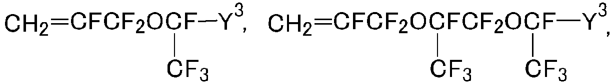

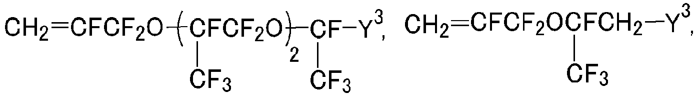

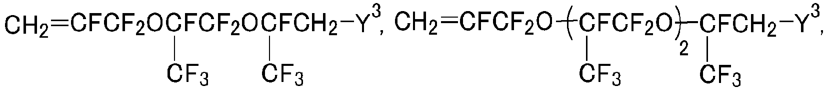

CH₂=CFCF₂OCH₂CF₂-Y³, CH₂=CFCF₂O(CH₂CF₂CF₂O)CH₂CF₂-Y³,

CH₂=CFCF₂OCH₂CF₂CH₂-Y³,

CH₂=CFCF₂O(CH₂CF₂CF₂O)CH₂CF₂CH₂-Y³,

CH₂=CFCF₂OCF₂CF₂-Y³, CH₂=CFCF₂O(CF₂CF₂CF₂O)CF₂CF₂-Y³,

CH₂=CFCF₂OCF₂CF₂CH₂-Y³,

CH₂=CFCF₂O(CF₂CF₂CF₂O)CF₂CF₂CH₂-Y³,

CH₂=CFCF₂OCF₂-Y³, CH₂=CFCF₂O(CF₂CF₂O)CF₂-Y³,

CH₂=CFCF₂OCF₂CH₂-Y³,

CH₂=CFCF₂O(CF₂CF₂O)CF₂CH₂-Y³,

and, in particular, 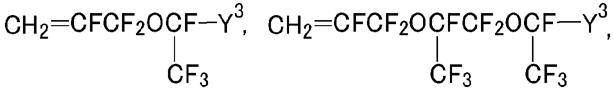 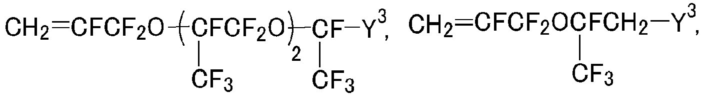 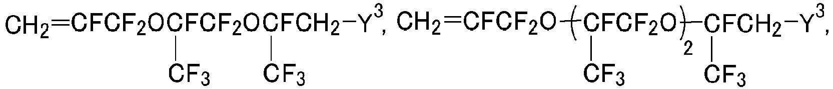 are preferable.

In the compound represented by the general formula (5a), Y³ in formula (5a) is preferably -COOM, and specifically the compound represented by general formula (5a) is preferably at least one selected from the group consisting of CH₂=CFCF₂OCF(CF₃)COOM and CH₂=CFCF₂OCF(CF₃)CF₂OCF(CF₃)COOM (wherein M is as defined above), and more preferably CH₂=CFCF₂OCF(CF₃)COOM.

The compound represented by the general formula (5) is preferably a compound (5b) represented by the general formula (5b):

CX²₂=CFCF₂-O- (CF(CF₃)CF₂O)ₙ₅-CF(CF₃)-Y³ (5b)

wherein each X² is the same, and each represent F or H; n5 represents 0 or an integer of 1 to 10; and Y³ is as defined above.

In the formula (5b), n5 is preferably 0 or an integer of 1 to 5, more preferably 0, 1, or 2, and even more preferably 0 or 1 from the viewpoint of stability of the resulting aqueous dispersion. Y³ is preferably -COOM from the viewpoint of obtaining suitable water-solubility and stability of the aqueous dispersion, and M is preferably H or NH₄ from the viewpoint of less likely remaining as impurities and improving the heat resistance of the resulting molded body.

Examples of the compound represented by the formula (5b) include CH₂=CFCF₂OCF(CF₃)COOM and CE₂=CFCF₂OCF(CF₃)CF₂OCF(CF₃)COOM, wherein M is as defined above.

Examples of the compound represented by the general formula (5) further include a compound represented by the general formula (5c):

CF₂=CFCF₂-O-Rf-Y³ (5c)

wherein Rf and Y³ are as described above.

More specifically, preferable examples include

CF₂=CFCF₂OCF₂CF₂CF₂-Y³,

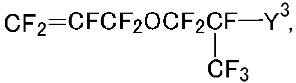

CF₂=CFCF₂OCF₂CF₂CF₂CH₂-Y³,

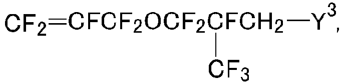

and the like.

In the general formula (6), each X is -H or -F. X may be both -F, or at least one thereof may be -H. For example, one thereof may be -F and the other may be -H, or both may be -H.

In the general formula (6), Y is -H, -F, an alkyl group, or a fluorine-containing alkyl group.

The alkyl group is an alkyl group free from fluorine atoms, and may have one or more carbon atoms. The number of carbon atoms of the alkyl group is preferably 6 or less, more preferably 4 or less, and even more preferably 3 or less.

The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less.

Y is preferably -H, -F, or -CF₃, and more preferably -F.

In the general formula (6), at least one of X and Y preferably contains a fluorine atom. For example, X, Y, and Z may be -H, -F, and -F, respectively.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or fewer carbon atoms, more preferably 20 or fewer carbon atoms, and even more preferably 10 or fewer carbon atoms. Examples of the fluorine-containing alkylene group include -CF₂-, -CH₂CF₂-, -CF₂CF₂-, -CF₂CH₂-, -CF₂CF₂CH₂-, - CF(CF₃)-, -CF(CF₃)CF₂-, and -CF(CF₃)CH₂-. The fluorine-containing alkylene group is preferably a perfluoroalkylene group.

In the general formula (6), Y³ is preferably -COOM, -SO₃M, or -OSO₃M, wherein M is H, a metal atom, NR^{7y}₄, imidazolium optionally having a substituent, pyridinium optionally having a substituent, or phosphonium optionally having a substituent, where R^{7y} is H or an organic group, and may be the same or different, and any two may be bonded to each other to form a ring.

The organic group of R^{7y} is preferably an alkyl group. R^{7y} is preferably H or a C₁₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and Na, K, or Li is preferable.

M is preferably -H, a metal atom, or -NR⁷₄, more preferably -H, an alkali metal (Group 1), an alkaline earth metal (Group 2), or -NR⁷₄, even more preferably -H, -Na, -K, - Li, or NH₄, yet more preferably -H, -Na, -K, or NH₄, particularly preferably -H, -Na or NH₄, and most preferably -H, or -NH₄.

Y³ is preferably -COOM or -SO₃M, and more preferably -COOM.

The compound represented by the general formula (6) is preferably at least one selected from the group consisting of compounds represented by the general formulae (6a), (6b), (6c), (6d), and (6e):

CF₂=CF-O-(CF₂)ₙ₁-Y³ (6a)

wherein n1 represents an integer of 1 to 10, and Y³ is as defined above;

CF₂=CF-O-(CF₂C(CF₃)F)ₙ₂-Y³ (6b)

wherein n2 represents an integer of 1 to 5, and Y³ is as defined above;

CF₂=CF-O-(CFX¹)ₙ₃-Y³ (6c)

wherein X¹ represents F or CF₃; n3 represents an integer of 1 to 10; and Y³ is as defined above;

CF₂=CF-O-(CF₂CFX¹O)ₙ₄-(CF₂)ₙ₆-Y³ (6d)

wherein n4 represents an integer of 1 to 10, n6 represents an integer of 1 to 3, and Y³ and X¹ are as defined above; and

CF₂=CF-O-(CF₂CF₂CFX¹O)ₙ₅-CF₂CF₂CF₂-Y³ (6e)

wherein n5 represents an integer of 0 to 10, and Y³ and X¹ are as defined above.

In the formula (6a), n1 is preferably an integer of 5 or less, and more preferably an integer of 2 or less. Y³ is preferably -COOM in terms of that a suitable water solubility and the stability of the aqueous dispersion can be obtained, and M is preferably H or NH₄ in terms of that M unlikely remains as an impurity, and that the heat resistance of the resulting formed article is increased.

Examples of the compound represented by the formula (6a) include CF₂=CF-O-CF₂COOM, CF₂=CF (OCF₂CF₂COOM), and CF₂=CF(OCF₂CF₂CF₂COOM), wherein M is as defined above.

In the formula (6b), n2 is preferably an integer of 3 or less from the viewpoint of stability of the resulting aqueous dispersion, Y³ is preferably -COOM from the viewpoint of obtaining suitable water-solubility and stability of the aqueous dispersion, and M is preferably H or NH₄ from the viewpoint of likely remaining as impurities and improving the heat resistance of the resulting molded body.

In the formula (6c), n3 is preferably an integer of 5 or less from the viewpoint of water-solubility, Y³ is preferably - COOM from the viewpoint of obtaining suitable water-solubility and stability of the aqueous dispersion, and M is preferably H or NH₄ from the viewpoint of improving dispersion stability.

In the formula (6d), X¹ is preferably -CF₃ from the viewpoint of stability of the aqueous dispersion, n4 is preferably an integer of 5 or less from the viewpoint of water-solubility, Y³ is preferably -COOM from the viewpoint of obtaining suitable water-solubility and stability of the aqueous dispersion, and M is preferably H or NH₄.

Examples of the compound represented by the formula (6d) include CF₂=CFOCF₂CF(CF₃)OCF₂CF₂COOM, CF₂=CFOCF₂CF(CF₃)OCF₂COOM, and CF₂=CFOCF₂CF(CF₃)OCF₂CF₂CF₂COOM, wherein M represents H, NH₄, or an alkali metal.

In the general formula (6e), n5 is preferably an integer of 5 or less in terms of water solubility, Y³ is preferably - COOM in terms of obtaining appropriate water solubility and stability of the aqueous dispersion, and M is preferably H or NH₄.

Examples of the compound represented by general formula (6e) include CF₂=CFOCF₂CF₂CF₂COOM, wherein M represents H, NH₄, or an alkali metal.

In the general formula (7), Rf is preferably a fluorine-containing alkylene group having 1 to 40 carbon atoms. In the general formula (7), at least one of X and Y preferably contains a fluorine atom.

The compound represented by the general formula (7) is preferably at least one selected from the group consisting of: a compound represented by the general formula (7a):

CF₂=CF-(CF₂)ₙ₁-Y³ (7a)

wherein n1 represents an integer of 1 to 10; and Y³ is as defined above; and a compound represented by the general formula (7b):

CF₂=CF-(CF₂C(CF₃)F)ₙ₂-Y³ (7b)

wherein n2 represents an integer of 1 to 5; and Y³ is as defined above.

Y³ is preferably -SO₃M or -COOM, and M is preferably H, a metal atom, NR^{7y}₄, imidazolium optionally having a substituent, pyridinium optionally having a substituent, or phosphonium optionally having a substituent. R^{7y} represents H or an organic group.

In the general formula (7a), n1 is preferably an integer of 5 or less, and more preferably an integer of 2 or less. Y³ is preferably -COOM from the viewpoint of obtaining suitable water-solubility and stability of the aqueous dispersion, and M is preferably H or NH₄ from the viewpoint of being less likely to remain as impurities and improving the heat resistance of the resulting molded body.
Examples of the compound represented by the formula (7a) include CF₂=CFCF₂COOM wherein M is as defined above.

In the formula (7b), n2 is preferably an integer of 3 or less from the viewpoint of stability of the resulting aqueous dispersion, Y³ is preferably -COOM from the viewpoint of obtaining suitable water-solubility and stability of the aqueous dispersion, and M is preferably H or NH₄ from the viewpoint of being less likely to remain as impurities and improving the heat resistance of the resulting molded body.

The modifying monomer preferably includes the modifying monomer (A), preferably includes at least one selected from the group consisting of compounds represented by the general formula (5a), the general formula (5c), the general formula (6a), the general formula (6b), the general formula (6c), and the general formula (6d), and more preferably includes the compound represented by the general formula (5a) or the general formula (5c).

When the modifying monomer (A) is used as the modifying monomer, the content of the modifying monomer (A) unit is preferably in the range of 0.00001 to 1.0% by mass based on the entirety of polymerized units in the TFE polymer (PTFE). The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

In production of the TFE polymer, the polymer (I) can be used within the use range described for the production method of the present disclosure. The concentration of the polymer (I) is not limited as long as it is within the above range. Too large an amount of the polymer (I) added causes generation of needle-shaped particles having a large aspect ratio and gelling of the aqueous dispersion, impairing the stability. The lower limit of the amount of the polymer (I) used is preferably 0.0001% by mass, more preferably 0.001% by mass, even more preferably 0.01% by mass, and particularly preferably 0.02% by mass, based on the aqueous medium. The upper limit of the amount of the polymer (I) used is preferably 10% by mass and more preferably 5% by mass, based on the aqueous medium.

The polymer (I) may be added to the reaction vessel at once before initiation of the polymerization, may be added at once after initiation of the polymerization, may be added in multiple portions during the polymerization, or may be added continuously during the polymerization.

In the production of the TFE polymer, the polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Moreover, the concentration of radicals in the system can be also regulated by adding a radical scavenger such as hydroquinone or catechol or adding a peroxide decomposer such as ammonium sulfate during polymerization.

The redox polymerization initiator is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of the persulfates include ammonium persulfate and potassium persulfate. Examples of the sulfites include sodium sulfite and ammonium sulfite. In order to increase the decomposition rate of the initiator, the combination of the redox initiator may preferably contain a copper salt or an iron salt. An example of the copper salt may be copper(II) sulfate, and an example of the iron salt may be iron(II) sulfate.

Examples of the redox initiator include potassium permanganate/oxalic acid, potassium permanganate/ammonium oxalate, ammonium persulfate/bisulfite/iron sulfate, manganese triacetate/oxalic acid, ammonium cerium nitrate/oxalic acid, and bromate/bisulfite, and potassium permanganate/oxalic acid is preferable. When using a redox initiator, one of an oxidizing agent or a reducing agent may be introduced into a polymerization tank in advance, and then the other may be added continuously or intermittently to initiate polymerization. For example, in the case of using potassium permanganate/oxalic acid, preferably a polymerization tank is charged with oxalic acid, and then potassium permanganate is continuously added thereto.

In the production of the TFE polymer, a known chain transfer agent may be used. Examples thereof include saturated hydrocarbons such as methane, ethane, propane, and butane, halogenated hydrocarbons such as chloromethane, dichloromethane, and difluoroethane, alcohols such as methanol, ethanol, and isopropanol, and hydrogen. The chain transfer agent is preferably one in a gas state at a normal temperature and normal pressure.

The amount of the chain transfer agent used is usually 1 to 10,000 ppm by mass, preferably 1 to 5,000 ppm by mass, based on the total amount of TFE fed.

In the production of the TFE polymer, a saturated hydrocarbon that is substantially inert to the reaction, that is in a liquid state under the reaction conditions, and that has 12 or more carbon atoms may be used as a dispersion stabilizer for the reaction system in an amount of 2 to 10 parts by mass based on 100 parts by mass of the aqueous medium. Ammonium carbonate, ammonium phosphate, or the like may be added as a buffer to adjust the pH during the reaction.

At completion of the polymerization of TFE, a polymerization dispersion having a solid concentration of 1.0 to 50% by mass and an average primary particle size of 50 to 500 nm can be obtained.

The lower limit of the solid concentration is preferably 5% by mass and more preferably 8% by mass. The upper limit may be, but is not limited to, 40% by mass or 35% by mass.

The lower limit of the average primary particle size is preferably 100 nm and more preferably 150 nm. The upper limit is preferably 400 nm and more preferably 350 nm.

The average primary particle size can be measured by dynamic light scattering. The average primary particle size may be measured by preparing an aqueous dispersion with a solid concentration being adjusted to 1.0% by mass and using dynamic light scattering at 25°C with 70 measurement processes, wherein the solvent (water) has a refractive index of 1.3328 and the solvent (water) has a viscosity of 0.8878 mPa·s. For the dynamic light scattering, ELSZ-1000S (manufactured by Otsuka Electronics Co., Ltd.) may be used, for example.

The average primary particle size can also be measured by the following method. A dispersion is diluted with water to a solid concentration of 0.15% by mass, the transmittance of incident light at 550 nm relative to the unit length of the resulting diluted latex is determined, the number-based length average particle size is determined by measuring the Feret diameter with a transmission electron microscope image, and based on these values, a calibration curve is drawn. Using this calibration curve, the average primary particle size can be determined from the measured transmittance of projected light at 550 nm of each sample.

Fine powder can be produced by coagulating the aqueous dispersion of the TFE polymer. The aqueous dispersion of the TFE polymer can be formed into fine powder through coagulation, washing, and drying, and the resulting fine powder may be used in various applications.

Pigment-containing or filler-containing TFE polymer fine powder in which pigments and fillers are uniformly mixed can be obtained by adding pigments for coloring and various fillers for improving mechanical properties before or during the coagulation.

The wet powder obtained by coagulating the TFE polymer in the aqueous dispersion is usually dried by means of vacuum, high-frequency waves, hot air, or the like while keeping the wet powder in a state in which the wet powder is less fluidized, preferably in a stationary state. Friction between the powder particles especially at high temperature usually has unfavorable effects on the TFE polymer in the form of fine powder. This is because the particles made of such a TFE polymer are easily formed into fibrils even with a small shearing force and lose its original, stable particulate structure.

The drying is performed at a drying temperature of 10 to 300°C, preferably 100 to 300°C.

The resulting fine powder of the TFE polymer is preferable for molding, and suitable applications thereof include tubes for hydraulic systems or fuel systems of aircraft or automobiles, flexible hoses for chemicals or vapors, and electric wire coating.

The aqueous dispersion of the TFE polymer is preferably mixed with a nonionic surfactant to stabilize and further concentrate the aqueous dispersion, and then further mixed with, depending on its purpose, an organic or inorganic filler to form a composition and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls and cooking utensils and impregnation of glass cloth.

The aqueous dispersion may also be used to prepare an organosol of the TFE polymer. The organosol may contain the TFE polymer and an organic solvent, examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents, and N-methyl-2-pyrrolidone and dimethylacetamide are suitably used. The organosol may be prepared by the method described in International Publication No. WO 2012/002038, for example.

The aqueous dispersion of the TFE polymer or the fine powder of the TFE polymer is also preferably used as a processing aid. When used as a processing aid, the aqueous dispersion or the fine powder is mixed with a host polymer, for example, to improve the melt strength of the host polymer in melt fabrication and to improve the mechanical strength, electric properties, incombustibility, anti-drop performance during combustion, and slidability of the resulting polymer.

The aqueous dispersion of the TFE polymer or the fine powder of the TFE polymer is also preferably used as a binder for batteries or used for dustproof applications.

The aqueous dispersion of the TFE polymer or the fine powder of the TFE polymer is also preferably combined with a resin other than the TFE polymer to form a processing aid before use. The aqueous dispersion or fine powder is suitable as a raw material of the PTFEs described in, for example, Japanese Patent Laid-Open No. 11-49912, U.S. Patent No. 5,804,654, Japanese Patent Laid-Open No. 11-29679, and Japanese Patent Laid-Open No. 2003-2980. Processing aids containing the aqueous dispersion or the fine powder are not inferior in any way to the processing aids described in the publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), and, in particular, PFA or FEP is preferable.

The aqueous dispersion also preferably contains a melt-fabricable fluororesin. Examples of the melt-fabricable fluororesin include FEP, PFA, TFE/perfluoroallyl ether copolymers, ETFE, and EFEP. The aqueous dispersion containing the melt-fabricable fluororesin may be used as a coating material. The melt-fabricable fluororesin enables sufficient fusion of the TFE polymer particles, improving the film-formability and providing the resulting film with gloss.

The fluorine-free resin to which the co-coagulated powder is added may be in the form of powder, pellets, or emulsion. In order to achieve sufficient mixing of the resins, the addition is preferably performed by a known method such as extrusion kneading or roll kneading under a shearing force.

The aqueous dispersion of the TFE polymer is also preferably used as a dust suppression treatment agent. The dust suppression treatment agent may be used in a method for suppressing dust from a dust-generating substance by mixing the dust suppression treatment agent with the dust-generating substance and subjecting the mixture to a compression-shear action at a temperature of 20 to 200°C to fibrillate the TFE polymer, for example, the methods described in Japanese Patent No. 2,827,152 and Japanese Patent No. 2,538,783.

The aqueous dispersion of the TFE polymer can suitably be used for the dust suppression treatment agent composition described in International Publication No. WO 2007/004250, and can also suitably be used for the method of dust suppression treatment described in International Publication No. WO 2007/000812.

The dust control treatment agent is suitably used for dust suppression treatment in the fields of building-products, soil stabilizers, solidifying materials, fertilizers, landfill of incineration ash and harmful substance, and explosion proof equipment, cosmetics, and sands for pet excretion represented by cat sand.

The aqueous dispersion of the TFE polymer is also preferably used as a raw material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

The high-molecular-weight PTFE powder obtained by polymerization has stretchability and non melt processability, and is also useful as a raw material for a stretched body (porous body).

When the stretched body is in the form of a film (PTFE stretched film or PTFE porous film), the stretched body can be formed by stretching by a known PTFE stretching method. Stretching allows easy formation of fibrils of PTFE, resulting in a high-molecular-weight PTFE porous body (film) including nodes and fibers.

Preferably, roll-stretching a sheet-shaped or rod-shaped paste extrudate in an extruding direction can provide a uniaxially stretched film.

Further stretching in a transverse direction using a tenter, for example, can provide a biaxially stretched film. Prebaking treatment is also preferably performed before stretching.

This PTFE stretched body is a porous body having a high porosity, and can suitably be used as a filter material for a variety of microfiltration filters such as air filters and chemical filters and a support member for polymer electrolyte films.

The PTFE stretched body is also useful as a material of products used in the fields of textiles, of medical treatment, of electrochemistry, of sealants, of air filters, of ventilation/internal pressure adjustment, of liquid filters, and of consumer goods.

Examples of specific applications will now be provided below.

### - Electrochemical field

Examples of the applications in this field include prepregs for dielectric materials, EMI-shielding materials, and heat conductive materials. More specifically, examples include printed circuit boards, electromagnetic interference shielding materials, insulating heat conductive materials, and insulating materials.

### - Sealant field

Examples of the applications in this field include gaskets, packings, pump diaphragms, pump tubes, and sealants for aircraft.

### - Air filter field

Examples of the applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), adsorbent-attached filters (for HDD embedment), adsorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

### - Ventilation/internal pressure adjustment field

Examples of the applications in this field include materials for freeze drying such as vessels for freeze drying, ventilation materials for automobiles for electronic circuits and lamps, applications relating to vessels such as vessel caps, protective ventilation for electronic devices, including small devices such as tablet terminals and mobile phone terminals, and ventilation for medical treatment.

### - Liquid filter field

Examples of the applications in this field include liquid filters for semiconductors (for production of semiconductors), hydrophilic PTFE filters (for production of semiconductors), filters for chemicals (for chemical treatment), filters for pure water production lines (for production of pure water), and back-washing liquid filters (for treatment of industrial discharge water).

### - Consumer goods field

Examples of the applications in this field include clothes, cable guides (movable wires for motorcycles), clothes for motor cyclists, cast liners (medical supporters), filters for cleaners, bagpipes (musical instrument), cables (signal cables for guitars, etc.), and strings (for string instrument).

### - Textile field

Examples of the applications in this field include PTFE fibers (fiber materials), machine threads (textiles), weaving yarns (textiles), and ropes.

### - Medical treatment field

Examples of the applications in this field include implants (stretched articles), artificial blood vessels, catheters, general surgical operations (tissue reinforcing materials), products for head and neck (dura mater alternatives), oral health (tissue regenerative medicine), and orthopedics (bandages).

Low molecular weight PTFE can also be produced by the production method of the present disclosure.

The low-molecular-weight PTFE may be produced by polymerization, or may be produced by reducing the molecular weight of a high-molecular-weight PTFE obtained by polymerization by a known method (e.g., thermal decomposition, radiation decomposition).

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

A low-molecular-weight PTFE may also be obtained by dispersing a polymerization initiator and the polymer (I) in an aqueous medium in the presence of a chain transfer agent, and then polymerizing TFE or TFE and a monomer copolymerizable with TFE. In this case, the chain transfer agent is preferably at least one selected from the group consisting of alkanes having 2 to 4 carbon atoms. Specifically, the chain transfer agent is more preferably methane, ethane, propane, butane, or isobutane, and even more preferably ethane or propane. In this case, the amount of the chain transfer agent is preferably 10 ppm by mass or more or more than 10 ppm by mass based on the aqueous medium.

In the case of using the low-molecular-weight PTFE obtained by the polymerization in the form of powder, the powder particles may be obtained by coagulating the aqueous dispersion.

In the present disclosure, high molecular weight PTFE means non melt-processible and fibrillatable PTFE. On the other hand, low molecular weight PTFE means melt-fabricable and non-fibrillatable PTFE.

The term "non melt-processible" means a feature of polymer that the melt flow rate thereof cannot be measured at a temperature higher than the crystal melting point in accordance with ASTM D 1238 and D 2116.

The presence or absence of the fibrillation ability can be determined by "paste extrusion", a representative method of molding a "high-molecular-weight PTFE powder" which is a powder of a TFE polymer. Usually, the high-molecular-weight PTFE can be paste-extruded when it is fibrillatable. When a non-fired molded product obtained by paste extrusion shows substantially no strength or elongation (for example, when it shows an elongation of 0% and is broken when stretched), it can be regarded as non-fibrillatable.

The high-molecular-weight PTFE preferably has a standard specific gravity (SSG) of 2.130 to 2.280. The standard specific gravity is determined by the water replacement method in accordance with ASTM D 792 using a sample molded in accordance with ASTM D4895-89. In the present disclosure, the "high-molecular-weight" means that the standard specific gravity is within the above range.

The low-molecular-weight PTFE has a melt viscosity at 380°C of 1 × 10² to 7 × 10⁵ Pa·s. In the present disclosure, the "low-molecular-weight" means that the melt viscosity is within the above range. The melt viscosity is a value measured in accordance with ASTM D 1238, using a flow tester (manufactured by Shimadzu Corporation) and a 2ϕ-8 L die, by keeping 2 g of the sample that has been heated in advance at 380°C for 5 minutes, at the above temperature under a load of 0.7 MPa.

The high-molecular-weight PTFE has a melt viscosity significantly higher than that of the low-molecular-weight PTFE, and the melt viscosity thereof is difficult to measure accurately. The melt viscosity of low molecular weight PTFE is measurable, but it is difficult to obtain a formed article usable in the measurement of standard specific gravity from low molecular weight PTFE, and it is thus difficult to measure the accurate standard specific gravity thereof. Accordingly, in the present disclosure, the standard specific gravity is used as an index of the molecular weight of the high-molecular-weight PTFE, while the melt viscosity is used as an index of the molecular weight of the low-molecular-weight PTFE. It should be noted that there is no known measuring method for directly specifying the molecular weight of either the high-molecular-weight PTFE or the low-molecular-weight PTFE.

The high-molecular-weight PTFE preferably has a peak temperature of 333 to 347°C, more preferably 335 to 345°C. The low-molecular-weight PTFE preferably has a peak temperature of 322 to 333°C, more preferably 324 to 332°C. The peak temperature can be specified as the temperature corresponding to the maximum value appearing in the differential thermal (DTA) curve obtained by increasing the temperature of PTFE without a history of being heated to a temperature of 300°C or higher at 10°C/min using TG/DTA (simultaneous thermogravimetric analyzer).

The peak temperature of the PTFE may be 322 to 347°C.

When the PTFE is a high-molecular-weight PTFE, the upper limit of the peak temperature of the PTFE may be 347°C or lower, 346°C or lower, 345°C or lower, 344°C or lower, 343°C or lower, 342°C or lower, 341°C or lower, or 340°C or lower.

When the PTFE is a high-molecular-weight PTFE, the lower limit of the peak temperature of the PTFE may be 333°C or higher, or 335°C or higher.

When the PTFE is a low-molecular-weight PTFE, the upper limit of the peak temperature of the PTFE may be 333°C or lower, or 332°C or lower.

When the PTFE is a low-molecular-weight PTFE, the lower limit of the peak temperature of the PTFE may be 322°C or higher, or 324°C or higher.

The average primary particle size of primary particles of low molecular weight PTFE is preferably 10 to 300 nm, more preferably 50 nm or more, more preferably 100 nm or more, and even more preferably 150 nm or more, and is more preferably 250 nm or less. A relatively small average primary particle size of primary particles can be obtained by, for example, adding a modifying monomer to the polymerization system at the initial stage of TFE polymerization.

The average primary particle size of primary particles of the low-molecular-weight PTFE can be measured by dynamic light scattering. The average primary particle size may be measured by first preparing a low-molecular-weight PTFE aqueous dispersion having a polymer solid concentration adjusted to about 1.0% by mass, and then using dynamic light scattering at a measurement temperature of 25°C with 70 times of measurement processes, wherein the solvent (water) has a refractive index of 1.3328 and the solvent (water) has a viscosity of 0.8878 mPa·s. In dynamic light scattering, for example, ELSZ-1000S (manufactured by Otsuka Electronics Co., Ltd.) can be used.

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 52 mJ/mg or higher at 290 to 350°C calculated from the heat-of-fusion curve. The PTFE has an enthalpy of fusion of more preferably 55 mJ/mg or higher, and even more preferably 58 mJ/mg or higher.

The PTFE fine powder obtained by the above may also be used to produce unsintered tape (green tape).

### (II) Melt-fabricable fluororesin

(1) In the production method of the present disclosure, the polymerization for FEP is preferably performed at a polymerization temperature of 10 to 150°C at a polymerization pressure of 0.3 to 6.0 MPaG.

The FEP preferably has a monomer composition ratio (% by mass) of TFE:HFP = (60 to 95): (5 to 40), more preferably (85 to 92):(8 to 15).

In addition to TFE and HFP, a further monomer copolymerizable with these monomers may be polymerized to obtain a copolymer of TFE, HFP, and the further monomer as the FEP. Examples of the further monomer include the above-mentioned fluorine-containing monomers (except for TFE and HFP) and fluorine-free monomers. One further monomer may be used singly, or multiple further monomers may be used in combination. The further monomer is preferably perfluoro(alkyl vinyl ether). The content of the further monomer unit in the FEP may be 0.1 to 2% by mass based on the entirety of monomer units.

In the polymerization of FEP, the polymer (I) can be used within the use range in the production method of the present disclosure, and is usually added in an amount of 0.0001 to 10% by mass based on 100% by mass of the aqueous medium.

In the polymerization of FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

In the production method of the present disclosure, the aqueous dispersion of FEP obtained may optionally be subjected to post-treatment such as concentration, and then the concentrate may be dried and powdered, and the powder may be melt-extruded into pellets. The aqueous medium in the aqueous FEP dispersion may optionally contain an additive such as a nonionic surfactant and may contain a water-soluble organic solvent such as a water-soluble alcohol or may be free from a water-soluble organic solvent.

Melt extrusion may be performed under any appropriately set extrusion conditions usually capable of providing pellets.

In the production method of the present disclosure, the resulting FEP may contain an end group such as -CF₃ or -CF₂H on at least one of the polymer main chain and a polymer side chain, but it is preferable that the content of thermally unstable groups such as -COOH, -CH₂OH, -COF, -CF=CF-, -CONH₂, or -COOCH₃ (hereinafter, referred to as an "unstable end group") is low or absent.

The unstable end group is chemically unstable, and thus not only reduces the heat resistance of the resin but also causes an increase in the attenuation of the resulting electric wire.

The production method of the present disclosure is preferably performed in such a way that a polymer in which the total number of unstable end groups and -CF₂H end groups at the completion of the polymerization is 50 or less per 1 × 10⁶ carbon atoms is produced. The number of such groups is more preferably less than 20, even more preferably 5 or less, per 1 × 10⁶ carbon atoms. There may also be neither unstable end groups nor -CF₂H end groups, i.e. all end groups may be -CF₃ end groups.

The unstable end groups and the -CF₂H end groups may be fluorinated and converted into the -CF₃ end groups and thereby stabilized. Examples of the fluorination method include, but not limited to, methods of exposing the polymer to a fluorine radical source that generates fluorine radicals under fluorination conditions. Examples of the fluorine radical source include fluorine gas, CoF₃, AgF₂, UF₆, OF₂, N₂F₂, CF₃OF, and halogen fluorides such as IF₅ and ClF₃. In particular, preferable is a method of bringing fluorine gas and the FEP obtained by the production method of the present disclosure into direct contact with each other, and, in order to control the reaction, the contact is preferably performed using a diluted fluorine gas having a fluorine gas concentration of 10 to 50% by mass. The diluted fluorine gas is obtainable by diluting fluorine gas with an inert gas such as nitrogen gas or argon gas. The fluorine gas treatment may be performed at a temperature of 100 to 250°C. The treatment temperature is not limited to this range and may be suitably set according to the conditions. The fluorine gas treatment is preferably performed by feeding a diluted fluorine gas into the reactor continuously or intermittently. This fluorination may be performed on dry powder after the polymerization or on melt-extruded pellets.

The FEP obtained by the production method of the present disclosure has good moldability and less likely causes molding defects, as well as has properties such as heat resistance, chemical resistance, solvent resistance, insulation, and electric properties.

The FEP powder may be produced by a method of drying the FEP obtained by the above-mentioned production method of the present disclosure to powder the FEP.

The powder may be fluorinated. The fluorinated powder may be produced by a method of feeding a fluorine gas to the powder obtained by the above-described method for producing a powder to fluorinate the powder to obtain a fluorinated powder.

The FEP pellets may be produced by a method of pelletizing FEP obtained by the above-mentioned production method of the present disclosure.

The pellets may be fluorinated. The fluorinated pellets may be produced by a method of feeding a fluorine gas to the pellets obtained by the above-described method for producing pellets to fluorinate the pellets to obtain fluorinated pellets.

Thus, this FEP may be used in production of a variety of formed articles such as coating materials for electric wires, foamed electric wires, cables, and wires, tubes, films, sheets, and filaments.

(2) In the production method of the present disclosure, the polymerization of a TFE/perfluoro(alkyl vinyl ether) copolymer such as PFA or MFA and a TFE/perfluoroallyl ether copolymer is usually preferably carried out at a polymerization temperature of 10 to 100°C at a polymerization pressure of 0.3 to 6.0 MPaG.

The TFE/perfluoro(alkyl vinyl ether) copolymer preferably has a monomer composition ratio (mol%) of TFE:perfluoro(alkyl vinyl ether) = (90 to 99.7):(0.3 to 10) and more preferably (97 to 99):(1 to 3). The perfluoro(alkyl vinyl ether) preferably used is one represented by the formula: CF₂=CFORf⁴, wherein Rf⁴ is a perfluoroalkyl group having 1 to 6 carbon atoms.

In addition to TFE and the perfluoro(alkyl vinyl ether), a further monomer copolymerizable with these monomers may be polymerized to obtain a copolymer of TFE, the perfluoro(alkyl vinyl ether), and the further monomer as the TFE/perfluoro(alkyl vinyl ether) copolymer. Examples of the further monomer include the above-mentioned fluorine-containing monomers (except for TFE and the perfluoro(alkyl vinyl ether)) and fluorine-free monomers. One further monomer may be used singly, or multiple further monomers may be used in combination. The content of the further-monomer unit in the TFE/perfluoro (alkyl vinyl ether) copolymer may be 0.1 to 2% by mass based on all monomer units.

The TFE/perfluoroallyl ether copolymer preferably has a monomer composition ratio (mol%) of TFE:perfluoroallyl ether = (90 to 99.7): (0.3 to 10), and more preferably (97 to 99): (1 to 3). The perfluoroallyl ether used is preferably represented by the formula: CF₂=CFCF₂ORf⁴, wherein Rf⁴ is a perfluoroalkyl group having 1 to 6 carbon atoms.

In addition to TFE and perfluoroallyl ether, by polymerizing a further monomer that is copolymerizable with these monomers, a copolymer of TFE, perfluoroallyl ether, and the further monomer may be obtained as a copolymer of TFE/perfluoroallyl ether. Examples of the further monomer include the fluorine-containing monomers (excluding TFE and perfluoroallyl ether) and fluorine-free monomers described above. One further monomer may be used singly, or multiple further monomers may be used in combination. The content of the further-monomer unit in the TFE/perfluoroallyl ether copolymer may be 0.1 to 2% by mass based on the entirety of monomer units.

In the polymerization of the TFE/perfluoro(alkyl vinyl ether) copolymer and the TFE/perfluoroallyl ether copolymer, the polymer (I) may be used within the use range in the production method of the present disclosure, and is usually preferably added in an amount of 0.0001 to 10% by mass based on 100% by mass of the aqueous medium.

In the polymerization for the TFE/perfluoro(alkyl vinyl ether) copolymer and the TFE/perfluoroallyl ether copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

The aqueous dispersion of the TFE/perfluoro(alkyl vinyl ether) copolymer such as PFA or MFA and the TFE/perfluoroallyl ether copolymer obtained by the production method of the present disclosure may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant, and may contain a water-soluble organic solvent such as a water-soluble alcohol or may be free from a water-soluble organic solvent.

Melt extrusion may be performed under any appropriately set extrusion conditions usually capable of providing pellets.

In order to improve the heat resistance of the copolymer and to enhance a chemical permeation suppression effect of a formed article, the copolymer is preferably subjected to a fluorine gas treatment.

The fluorine gas treatment is performed by bringing fluorine gas into contact with the copolymer. However, since the reaction with fluorine is extremely exothermic, fluorine is preferably diluted with an inert gas such as nitrogen. The amount of fluorine in the fluorine gas/inert gas mixture is 1 to 100% by mass, preferably 10 to 25% by mass. The treatment temperature is 150 to 250°C and preferably 200 to 250°C and the fluorine gas treatment duration is 3 to 16 hours, preferably 4 to 12 hours. The fluorine gas treatment is performed at a gas pressure in the range of 1 to 10 atm and preferably atmospheric pressure. In the case of using a reactor at atmospheric pressure, the fluorine gas/inert gas mixture may be continuously passed through the reactor. This results in conversion of unstable ends of the copolymer into -CF₃ ends, thermally stabilizing the copolymer.

The copolymer and the composition thereof may be molded by compression molding, transfer molding, extrusion forming, injection molding, blow molding, or the like as in the case of conventional PFA.

Such a molding technique can provide a desired formed article, and examples of the formed article include sheets, films, packings, round bars, square bars, pipes, tubes, round tanks, square tanks, tanks, wafer carriers, wafer boxes, beakers, filter housings, flowmeters, pumps, valves, cocks, connectors, nuts, electric wires, and heat-resistant electric wires.

Preferable among these are tubes, pipes, tanks, connectors, and the like to be used in a variety of chemical reaction devices, semiconductor manufacturing devices, and acidic or alkaline chemical feeding devices or the like each requiring chemical impermeability.

The aqueous dispersion of the TFE/perfluoro(alkyl vinyl ether) copolymer such as PFA or MFA and the TFE/perfluoroallyl ether copolymer may also be appropriately mixed with a nonionic surfactant, and optionally polyethersulfone, polyamide-imide, and/or polyimide, and metal powder are dissolved or dispersed in an organic solvent, and thereby a primer composition can be obtained. This primer composition may be used in a method for applying a fluororesin to a metal surface, wherein the method includes applying the primer composition to a metal surface, applying a melt-fabricable fluororesin composition to the resulting primer layer, and firing the melt-fabricable fluororesin composition layer together with the primer layer.

(3) In the production method of the present disclosure, the polymerization for ETFE is preferably performed at a polymerization temperature of 10 to 100°C at a polymerization pressure of 0.3 to 2.0 MPaG.

ETFE preferably has a monomer composition ratio (mol%) of TFE:ethylene = (50 to 99): (50 to 1).

In addition to ethylene and TFE, by polymerizing a further polymer that is copolymerizable with these monomers, a copolymer of ethylene, TFE and a further monomer may be obtained as ETFE. Examples of the further monomer include the fluorine-containing monomers (excluding TFE) and fluorine-free monomers (excluding ethylene) described above. One further monomer may be used singly, or multiple further monomers may be used in combination.

The further monomer is preferably hexafluoropropylene, perfluorobutyl ethylene, perfluorohexyl ethylene, 3,3,4,4,5,5,6,6,7,7,8,8,8-tridecafluorooct-1-ene, 2, 3, 3, 4, 4, 5, 5-heptafluoro-1-pentene (CH₂=CFCF₂CF₂CF₂H), or 2-trifluoromethyl-3,3,3-trifluoropropene ((CF₃)₂CF=CH₂).

The content of the further-monomer unit in ETFE may be 0 to 20% by mass based on the entirety of monomer units. A preferable mass ratio is TFE:ethylene:further monomer=(63 to 94) : (27 to 2) : (1 to 10).

In the polymerization for the ETFE, the polymer (I) can be used within the use range in the production method of the present disclosure, and is usually added in an amount of 0.0001 to 10% by mass based on 100% by mass of the aqueous medium.

In the polymerization for ETFE, the chain transfer agent used is preferably cyclohexane, methanol, ethanol, propanol, ethane, propane, butane, pentane, hexane, carbon tetrachloride, chloroform, methylene chloride, methyl chloride, or the like.

The aqueous dispersion of ETFE obtained by the production method of the present disclosure may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant, and may contain a water-soluble organic solvent such as a water-soluble alcohol or may be free from a water-soluble organic solvent.

Melt extrusion may be performed under any appropriately set extrusion conditions usually capable of providing pellets.

ETFE may be extruded into a sheet. In other words, powder or pellets of ETFE in a molten state may be continuously extruded through a die and then cooled to provide a sheet-shaped formed article. ETFE may be mixed with an additive.

Known additives may be suitably used. Specific examples include ultraviolet absorbers, photostabilizers, antioxidants, infrared absorbers, flame retarders, flame-retardant fillers, organic pigments, inorganic pigments, and dyes. From the viewpoint of excellent weather resistance, inorganic additives are preferable.

The content of the additive in the ETFE sheet is preferably 20% by mass or less, and particularly preferably 10% by mass or less, based on the total mass of the ETFE sheet.

The ETFE sheet has excellent mechanical strength and appearance, and thus can suitably be used for film materials (e.g., roof materials, ceiling materials, outer wall materials, inner wall materials, and coating materials) of film-structured buildings (e.g., sports facilities, gardening facilities, and atriums).

In addition to the film materials of film-structured buildings, the ETFE sheet is also useful for, for example, outdoor boards (e.g., noise-blocking walls, windbreak fences, breakwater fences, roof panels of carports, shopping arcades, footpath walls, and roof materials), shatter-resistant window films, heat-resistant waterproof sheets, building materials (e.g., tent materials of warehouse tents, film materials for shading, partial roof materials for skylights, window materials alternative to glass, film materials for flame-retardant partitions, curtains, outer wall reinforcement, waterproof films, anti-smoke films, non-flammable transparent partitions, road reinforcement, interiors (e.g., lighting, wall surfaces, and blinds), exteriors (e.g., tents and signboards)), living and leisure goods (e.g., fishing rods, rackets, golf clubs, and screens), automobile materials (e.g., hoods, damping materials, and bodies), aircraft materials, shipment materials, exteriors of home appliances, tanks, vessel inner walls, filters, film materials for construction works, electronic materials (e.g., printed circuit boards, circuit boards, insulating films, and release films), surface materials for solar cell modules, mirror protection materials for solar thermal energy, and surface materials for solar water heaters.

(4) The production method of the present disclosure may be used to produce an electrolyte polymer precursor. In the production method of the present disclosure, the polymerization for the electrolyte polymer precursor is preferably performed at a polymerization temperature of 10 to 100°C and a polymerization pressure of 0.1 to 2.0 MPaG. The electrolyte polymer precursor contains a monomer containing a functional group represented by -SO₂X¹⁵¹, -COZ¹⁵¹, or -POZ¹⁵²Z¹⁵³ (X¹⁵¹, Z¹⁵¹, Z¹⁵², and Z¹⁵³ are as described later), and can be converted into an ion-exchangeable polymer through a hydrolysis treatment.

An example of the monomer to be used for the electrolyte polymer precursor may be
a fluorine-containing monomer represented by the general formula (150):

CF₂=CF-O-(CF₂CFY¹⁵¹-O)ₙ-(CFY¹⁵²)ₘ-A¹⁵¹

wherein Y¹⁵¹ represents a fluorine atom, a chlorine atom, a - SO₂F group, or a perfluoroalkyl group; the perfluoroalkyl group optionally containing ether oxygen and a -SO₂F group; n represents an integer of 0 to 3; n Y¹⁵¹s are the same as or different from each other; Y¹⁵² represents a fluorine atom, a chlorine atom, or a -SO₂F group; m represents an integer of 1 to 5; m Y¹⁵²s are the same as or different from each other; A¹⁵¹ represents -SO₂X¹⁵¹,-COZ¹⁵¹, or - POZ¹⁵²Z¹⁵³; X¹⁵¹ represents F, Cl, Br, I, -OR¹⁵¹, or-NR¹⁵²R¹⁵³; Z¹⁵¹, Z¹⁵², and Z¹⁵³ are the same as or different from each other, and each represent -NR¹⁵⁴R¹⁵⁵ or - OR¹⁵⁶; R¹⁵¹, R¹⁵², R¹⁵³, R¹⁵⁴, R¹⁵⁵, and R¹⁵⁶ are the same as or different from each other, and each represent H, ammonium, an alkali metal, or an alkyl group, aryl group, or sulfonyl-containing group optionally containing a fluorine atom. Examples of the monomer to be used for the electrolyte polymer precursor also include the compound containing two fluorosulfonyl groups described in International Publication No. WO 2007/013532 and the perfluoromonomer having a -SO₂F group and a dioxolane ring described in International Publication No. WO 2014/175123. The electrolyte polymer precursor preferably has a monomer composition ratio (mol%) of TFE:vinyl ether = (50 to 99): (50 to 1), more preferably TFE:vinyl ether = (50 to 93): (50 to 7).

The electrolyte polymer precursor may be modified with a third monomer within a range of 0 to 20% by mass of all monomers. Examples of the third monomer include CTFE, vinylidene fluoride, perfluoroalkyl vinyl ether, and perfluorobutenyl vinyl ether; cyclic monomers such as perfluoro-2,2-dimethyl-1,3-dioxolane and perfluoro-2-methylene-4-methyl-1,3-dioxole; multifunctional monomers such as divinylbenzene.

The electrolyte polymer precursor thereby obtained may be molded into a film, followed by hydrolysis using an alkali solution and a treatment using a mineral acid, and thereby used as a polymer electrolyte film for fuel cells, electrolysis devices, redox flow batteries, and the like.

The electrolyte polymer precursor may be hydrolyzed using an alkali solution while the dispersed state thereof is maintained, thereby providing an electrolyte polymerization dispersion.

This dispersion may be then heated up to 120°C or higher in a pressurized vessel and thereby dissolved in, for example, a solvent mixture of water and an alcohol, i.e., converted into a solution state.

The solution thereby obtained may be used as a binder for electrodes. Also, the solution may be combined with a variety of additives and cast to form a film, and the film may be used for antifouling films, organic actuators, or the like.

### (5) TFE/VDF copolymer

In the production method of the present disclosure, the polymerization for the TFE/VDF copolymer may be performed at any polymerization temperature, such as 0 to 100°C. The polymerization pressure is suitably determined according to other polymerization conditions such as the polymerization temperature, and may be usually 0 to 9.8 MPaG.

The TFE/VDF copolymer preferably has a monomer composition ratio (mol%) of TFE:VDF = (5 to 90): (95 to 10). The TFE/VDF copolymer may be modified with a third monomer within a range of 0 to 50 mol% of all monomers. The composition ratio thereof is preferably TFE:ethylene:third monomer = (30 to 85): (10 to 69.9): (0.1 to 10).

The third monomer is preferably a monomer represented by
the formula: CX¹¹X¹²=CX¹³(CX¹⁴X¹⁵)ₙ₁₁X¹⁶
wherein X¹¹ to X¹⁶ are the same or different, and each represent H, F, or Cl; n11 represents an integer of 0 to 8, provided that TFE and VDF are excluded; or
   a monomer represented by the formula: CX²¹X²²=CX²³-O(CX²⁴X²⁵)ₙ₂₁X²⁶
wherein X²¹ to X²⁶ are the same as or different from each other, and each represent H, F, or Cl; and n21 represents an integer of 0 to 8.

The third monomer may be a fluorine-free ethylenic monomer. From the viewpoint of maintaining the heat resistance and the chemical resistance, the fluorine-free ethylenic monomer is preferably selected from ethylenic monomers having 6 or fewer carbon atoms. Examples include ethylene, propylene, 1-butene, 2-butene, vinyl chloride, vinylidene chloride, alkyl vinyl ethers (e.g., methyl vinyl ether, ethyl vinyl ether, and propyl vinyl ether), maleic acid, itaconic acid, 3-butenoic acid, 4-pentenoic acid, vinylsulfonic acid, acrylic acid, and methacrylic acid.

In the polymerization for the TFE/VDF copolymer, the polymer (I) can be used within the use range in the production method of the present disclosure, and is usually added in an amount of 0.0001 to 5% by mass based on 100% by mass of the aqueous medium.

The TFE/VDF copolymer may be amidated by being brought into contact with a nitrogen compound capable of generating ammonia water, ammonia gas, or ammonia.

The TFE/VDF copolymer obtained by the above-described method may also preferably be used as a material for providing TFE/VDF copolymer fibers by a spinning-drawing method. The spinning-drawing method is a method for obtaining a TFE/VDF copolymer fiber by melt spinning a TFE/VDF copolymer, cooling and solidifying it to obtain an undrawn yarn, and then running the undrawn yarn in a heating cylinder to draw the undrawn yarn.

The TFE/VDF copolymer may be dissolved in an organic solvent to provide a solution of the TFE/VDF copolymer. Examples of the organic solvent include nitrogen-containing organic solvents such as N-methyl-2-pyrrolidone, N,N-dimethyl acetamide, and dimethyl formamide; ketone-based solvents such as acetone, methyl ethyl ketone, cyclohexanone, and methyl isobutyl ketone; ester-based solvents such as ethyl acetate and butyl acetate; ether-based solvents such as tetrahydrofuran and dioxane; and general-purpose organic solvents having a low boiling point such as solvent mixtures thereof. The solution may be used as a binder for batteries.

The aqueous dispersion of the TFE/VDF copolymer may preferably be used to coat a porous substrate formed from a polyolefin resin to provide a composite porous film. The aqueous dispersion may also preferably contain inorganic particles and/or organic particles dispersed therein and be used to coat a porous substrate to provide a composite porous film. The composite porous film thereby obtained may be used as a separator for lithium secondary batteries.

The powder of the melt-fabricable fluororesin is suitably used as a powdery coating material. When applied to a substrate, the powdery coating material made of the melt-fabricable fluororesin powder can provide a film having a smooth surface. The melt-fabricable fluororesin powder having an average particle size of 1 µm or greater and smaller than 100 µm is particularly suitable as a powdery coating material used for electrostatic coating, and the melt-fabricable fluororesin powder having an average particle size of 100 µm or greater and 1,000 µm or smaller is particularly suitable as a powdery coating material used for rotational coating or rotational molding.

The melt-fabricable fluororesin powder can be produced by a method of drying the melt-fabricable fluororesin obtained by the above-mentioned production method of the present disclosure to powder the melt-fabricable fluororesin. The method for producing the melt-fabricable fluororesin powder is also one aspect of the present disclosure.

In the production method of the present disclosure, when the fluororesin is subjected to coagulation, washing, drying, or the like, discharge water or off gas is generated. The polymer (I), decomposition products and by-products of the polymer (I) by-produced from the polymer (I), residual monomers, and the like may be collected from discharge water generated in the coagulation or the washing and/or from off gas generated in the drying, and then purified to reuse the polymer (I), the decomposition products and by-products of the polymer (I) secondarily produced from the polymer (I), the residual monomers, and the like. Although the method for carrying out the above collection and purification is not limited, it may be carried out by a known method. For example, they may be performed by the methods disclosed in National Publication of International Patent Application No. 2011-520020. Examples thereof further include the methods disclosed in U.S. Patent Application Publication No. 2007/15937, U.S. Patent Application Publication No. 2007/25902, and U.S. Patent Application Publication No. 2007/27251. Specific examples of the methods are as follows.

An example of the method of collecting the polymer (I), the decomposition products and by-products of the polymer (I) secondarily produced from the polymer (I), the residual monomers, and the like from discharge water may be a method in which the discharge water is brought into contact with adsorbent particles formed of ion exchange resin, activated carbon, silica gel, clay, zeolite, or the like, so that the particles are allowed to adsorb the polymer (I) and the like, and the discharge water and the adsorbent particles are then separated. Incinerating the adsorbent particles having adsorbed the polymer (I) and the like can prevent emission of the polymer (I) and the like into the environment.

Alternatively, the polymer (I) and the like may be removed and eluted by a known method from the ion exchange resin particles having adsorbed the polymer (I) and the like, and collected. For example, in the case of using anion exchange resin particles as the ion exchange resin particles, the polymer (I) and the like can be eluted by bringing a mineral acid into contact with an anion exchange resin. When a water-soluble organic solvent is added to the resulting eluate, the mixture is usually separated into two phases. Since the lower phase contains the polymer (I) and the like, it is possible to collect the polymer (I) and the like by collecting and neutralizing the lower phase. Examples of the water-soluble organic solvent include polar solvents such as alcohols, ketones, and ethers.

Other methods of collecting the polymer (I) and the like from ion exchange resin particles include a method of using an ammonium salt and a water-soluble organic solvent and a method of using an alcohol and, if necessary, an acid. In the latter method, ester derivatives of the polymer (I) and the like are generated, and thus, they can easily be separated from the alcohol by distillation.

When the discharge water contains fluororesin particles and other solids, they are preferably removed before the discharge water and the adsorbent particles are brought into contact with each other. Examples of methods of removing the fluororesin particles and other solids include a method of adding an aluminum salt, for example, to deposit these components, and then separating the discharge water and the deposits, and an electrocoagulation method. The components may also be removed by a mechanical method such as a crossflow filtration method, a depth filtration method, or a precoat filtration method.

From the viewpoint of productivity, the discharge water preferably contains the fluororesin in a non-agglomerated form in a low concentration, more preferably less than 0.4% by mass, and particularly preferably less than 0.3% by mass.

An example of the method of collecting the polymer (I) and the like from the off gas may be a method in which a scrubber is brought into contact with deionized water, an alkaline aqueous solution, an organic solvent such as a glycol ether solvent, or the like to provide a scrubber solution containing the polymer (I) and the like. When the alkaline aqueous solution used is a highly concentrated alkaline aqueous solution, the scrubber solution can be collected in a state where the polymer (I) and the like are phase-separated, and thus the polymer (I) and the like can be easily collected and reused. Examples of the alkali compound include alkali metal hydroxides and quaternary ammonium salts.

The scrubber solution containing the polymer (I) and the like may be concentrated using a reverse osmosis membrane, for example. The concentrated scrubber solution usually contains fluoride ions, and the fluoride ions may be removed by adding alumina after the concentration so that the polymer (I) and the like can easily be reused. Alternatively, the scrubber solution may be brought into contact with adsorbent particles so that the adsorbent particles can adsorb the polymer (I) and the like, and thereby the polymer (I) and the like may be collected by the aforementioned method.

The polymer (I) and the like collected by any of the above methods may be reused in the production of fluororesin.

### (Fluororesin composition)

The present disclosure also provides a composition containing a polymer (I) containing a polymerization unit (I) derived from a monomer (I) represented by the general formula (I) and a fluororesin containing a tetrafluoroethylene unit, wherein the content of the polymer (I) is less than 0.15% by mass based on the fluororesin (hereinafter sometimes referred to as a "first composition"):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

Since the first composition has a reduced content of the polymer (I), the polymer (I) contained does not affect the properties of a formed article obtained using the first composition. Accordingly, a formed article having excellent properties can be obtained from the first composition.

The fluororesin contained in the first composition is not limited as long as it is a fluororesin containing a TFE unit, and is preferably PTFE and more preferably non melt-processible PTFE. The fluororesin containing a TFE unit and PTFE are as already described above.

The content of the polymer (I) in the first composition is 0.15% by mass or less, preferably 0.12% by mass or less, and more preferably 0.10% by mass or less based on the fluororesin. The content of the polymer (I) in the first composition is preferably 0.0001% by mass or more, more preferably 0.001% by mass or more, and even more preferably 0.01% by mass or more based on the fluororesin.

The content of the polymer (I) in the composition can be determined by the same method as the method for determining the content of the polymer (I) in the polymerization dispersion.

The first composition can be suitably produced by the production method of the present disclosure.

Also, the present disclosure provides a composition containing a polymer (I) containing a polymerization unit (I) derived from a monomer (I) represented by the general formula (I) and PTFE, wherein the standard specific gravity of PTFE is 2.210 or less, and the content of the polymer (I) is 0.23% by mass or less based on PTFE (hereinafter sometimes referred to as a "second composition"):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

Since the second composition has a reduced content of the polymer (I), the polymer (I) contained does not affect the properties of a formed article obtained using the second composition. Accordingly, a formed article having excellent properties can be obtained from the second composition.

PTFE contained in the second composition is preferably a non melt-processible PTFE. PTFE is as already described above.

The standard specific gravity of PTFE contained in the second composition is 2.210 or less, more preferably 2.200 or less, and even more preferably 2.190 or less.

The content of the polymer (I) in the second composition is 0.23% by mass or less, preferably 0.20% by mass or less, and more preferably 0.15% by mass or less based on PTFE. The content of the polymer (I) in the second composition is preferably 0.0001% by mass or more, more preferably 0.001% by mass or more, and even more preferably 0.01% by mass or more based on PTFE.

The content of the polymer (I) in the composition can be determined by the same method as the method for determining the content of the polymer (I) in the polymerization dispersion.

The second composition can be suitably produced by the production method of the present disclosure.

Also, the present disclosure provides a composition containing a polymer (I) containing a polymerization unit (I) derived from a monomer (I) represented by the general formula (I) and a fluororesin containing a tetrafluoroethylene unit, wherein the fluororesin is melt-fabricable, and the content of the polymer (I) is 4.0% by mass or less based on the fluororesin (hereinafter sometimes referred to as a "third composition"):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

Since the third composition has a reduced content of the polymer (I), the polymer (I) contained does not affect the properties of a formed article obtained using the third composition. Accordingly, a formed article having excellent properties can be obtained from the third composition.

The fluororesin contained in the third composition contains a TFE unit and is thus a fluororesin that is melt-fablicable. The fluororesin contained in the third composition is preferably at least one selected from the group consisting of a TFE/HFP copolymer [FEP], a TFE/perfluoro(alkyl vinyl ether) copolymer [such as PFA and MFA], and a TFE/perfluoroallyl ether copolymer. These melt-fabricable fluororesins are as already described above.

The content of the polymer (I) in the third composition is 4.0% by mass or less, preferably 3.5% by mass or less, and more preferably 3.0% by mass or less based on the fluororesin. The content of the polymer (I) in the third composition is preferably 0.0001% by mass or more, more preferably 0.001% by mass or more, and even more preferably 0.01% by mass or more based on the fluororesin.

When the fluororesin contained in the third composition is a TFE/perfluoro(alkyl vinyl ether) copolymer, the content of the polymer (I) in the third composition is preferably 0.25% by mass or less, more preferably 0.20% by mass or less, and even more preferably 0.15% by mass or less, and is preferably 0.0001% by mass or more, more preferably 0.001% by mass or more, and even more preferably 0.01% by mass or more, based on the TFE/perfluoro(alkyl vinyl ether) copolymer.

When the fluororesin contained in the third composition is FEP, the content of the polymer (I) in the third composition is preferably 3.5% by mass or less and more preferably 3.0% by mass or less, and is preferably 0.0001% by mass or more, more preferably 0.001% by mass or more, and even more preferably 0.01% by mass or more, based on FEP.

The content of the polymer (I) in the composition can be determined by the same method as the method for determining the content of the polymer (I) in the polymerization dispersion.

The third composition can be suitably produced by the production method of the present disclosure.

Next, matters common to the first to third compositions (hereinafter sometimes referred to as the "composition of the present disclosure") will now be described in more detail.

The form of the composition of the present disclosure is not limited, and may be, for example, an aqueous dispersion, a coagulate, a dried product, gum, crumb, powder, a pellet, or the like. The aqueous dispersion refers to a dispersion system in which the aqueous medium is the dispersion medium and the fluororesin is the dispersoid. The above aqueous medium is not limited as long as it is a liquid containing water, and may contain, in addition to water, an organic solvent such as an alcohol, an ether, a ketone, or a paraffin wax.

The aqueous dispersion may be a dispersion in which a powder composed of a fluororesin is dispersed in an aqueous medium. The composition of the present disclosure is suitably a powder.

In one embodiment, the composition of the present disclosure contains a fluorine-containing surfactant. A composition containing a fluorine-containing surfactant has an advantage that it can be stably produced with high productivity using a fluorine-containing surfactant.

In one embodiment, the composition of the present disclosure is substantially free from a fluorine-containing surfactant.

In the present disclosure, the expression "substantially free from a fluorine-containing surfactant" means that the content of the fluorine-containing surfactant in the composition is 10 ppm by mass or less, and is preferably 1 ppm by mass or less, more preferably 100 ppb by mass or less, even more preferably 10 ppb by mass or less, and yet more preferably 1 ppb by mass or less, and particularly preferably the fluorine-containing surfactant is at or below the detection limit as measured by liquid chromatography-mass spectrometry (LC/MS).

The content of the fluorine-containing surfactant can be quantified by a known method. For example, it can be quantified by LC/MS analysis.

First, methanol is added to the composition for extraction, and the obtained extracted liquid is subjected to LC/MS analysis. In order to further increase the extraction efficiency, a treatment by Soxhlet extraction, ultrasonic treatment, or the like may be performed.

The molecular weight information is extracted from the obtained LC/MS spectrum to confirm agreement with the structural formula of the candidate fluorine-containing surfactant.

Thereafter, aqueous solutions having five or more different content levels of the confirmed fluorine-containing surfactant are prepared, and LC/MS analysis is performed on the aqueous solutions with the respective content levels, and the relationship between the content level and the area corresponding to that content level is plotted to draw a calibration curve.

Then, using the calibration curve, the area of the LC/MS chromatogram of the fluorine-containing surfactant in the extracted liquid can be converted to the content of the fluorine-containing surfactant.

The composition of the present disclosure may contain a known additive such as a pigment, a thickener, a dispersant, a defoaming agent, an anti-freezing agent, or a film-forming aid, and a further polymer compound.

While embodiments have been described above, it will be understood that various changes in form and detail can be made without departing from the gist and scope of the claims.

<1> According to the first viewpoint of the present disclosure, provided is a method for producing a compound containing a fluororesin, the method comprising:
   polymerizing tetrafluoroethylene in an aqueous medium in the presence of a polymer (I) containing a polymerization unit (I) derived from a monomer (I) represented by the general formula (I) to give a polymerization dispersion containing a fluororesin containing tetrafluoroethylene unit,
   coagulating the fluororesin in the polymer dispersion to give a coagulate, and
   washing the coagulate to give a composition containing the fluororesin, wherein
      (1) the coagulation is carried out by bringing the fluororesin in the polymer dispersion into contact with an organic solvent, and/or
      (2) the washing is carried out by bringing the coagulate into contact with an organic solvent,

         CX¹X³=CX²R(-CZ¹Z²-A⁰)ₘ (I)
      wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.
<2> According to the second viewpoint of the present disclosure, provided is
   the production method according to the first viewpoint, wherein the organic solvent is an alcohol having 1 to 7 carbon atoms.
<3> According to the third viewpoint of the present disclosure, provided is
   the production method according to the first or second viewpoint, wherein the organic solvent is an alcohol having 2 to 7 carbon atoms.
<4> According to the fourth viewpoint of the present disclosure, provided is
   the production method according to any one of the first to third viewpoints, wherein the coagulation is carried out by bringing the fluororesin in the polymerization dispersion into contact with the organic solvent.
<5> According to the fifth viewpoint of the present disclosure, provided is
   the production method according to the fourth viewpoint, wherein an amount of the organic solvent used in coagulation is 1.0% by mass or more based on the fluororesin in the polymerization dispersion.
<6> According to the sixth viewpoint of the present disclosure, provided is
   the production method according to the fourth or fifth viewpoint, wherein a temperature when the fluororesin in the polymer dispersion is brought into contact with the organic solvent is 5 to 80°C.
<7> According to the seventh viewpoint of the present disclosure, provided is
   the production method according to any one of the fourth to sixth viewpoints, wherein pH of the polymerization dispersion when the fluororesin in the polymerization dispersion is brought into contact with the organic solvent is within a range of 3 to 12.
<8> According to the eighth viewpoint of the present disclosure, provided is
   the production method according to any one of the fourth to seventh viewpoints, wherein the coagulate is washed with water.
<9> According to the ninth viewpoint of the present disclosure, provided is
   the production method according to any one of the first to seventh viewpoints, wherein the washing is carried out by bringing the coagulate into contact with the organic solvent.
<10> According to the tenth viewpoint of the present disclosure, provided is
   the production method according to the ninth viewpoint, wherein a temperature when the coagulate is brought into contact with the organic solvent is 5 to 80°C.
<11> According to the eleventh viewpoint of the present disclosure, provided is
   the production method according to the ninth or tenth viewpoint, wherein the washing is carried out by bringing the coagulate into contact with the organic solvent, and then the coagulate is further washed with water.
<12> According to the twelfth viewpoint of the present disclosure, provided is
   the production method according to any one of the first to eleventh viewpoints, wherein the fluororesin is a polytetrafluoroethylene.
<13> According to the thirteenth viewpoint of the present disclosure, provided is
   a composition comprising a polymer (I) containing a polymerization unit (I) derived from a monomer (I) represented by the general formula (I) and a fluororesin containing tetrafluoroethylene unit, wherein a content of the polymer (I) is 0.15% by mass or less based on the fluororesin:

   CX¹X³=CX²R(-CZ¹Z²-A⁰)ₘ (I)

   wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.
<14> According to the fourteenth viewpoint of the present disclosure, provided is
   the composition according to the thirteenth viewpoint, wherein the fluororesin is a non melt-processible polytetrafluoroethylene.
<15> According to the fifteenth viewpoint of the present disclosure, provided is
   a composition comprising a polymer (I) containing a polymerization unit (I) derived from a monomer (I) represented by the general formula (I) and a polytetrafluoroethylene, wherein a standard specific gravity of the polytetrafluoroethylene is 2.210 or less, and the content of the polymer (I) is 0.23% by mass or less based on the polytetrafluoroethylene:

   CX¹X³=CX²R(-CZ¹Z²-A⁰)ₘ (I)

   wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.
<16> According to the sixteenth viewpoint of the present disclosure, provided is
   a composition comprising a polymer (I) containing a polymerization unit (I) derived from a monomer (I) represented by the general formula (I) and a fluororesin containing tetrafluoroethylene unit, wherein the fluororesin is melt-fabricable, and a content of the polymer (I) is 4.0% by mass or less based on the fluororesin:

   CX¹X³=CX²R(-CZ¹Z²-A⁰)ₘ (I)

   wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.
<17> According to the seventeenth viewpoint of the present disclosure, provided is
   the composition according to the thirteenth to sixteenth viewpoints, which is substantially free from a fluorine-containing surfactant.

### EXAMPLES

Hereinafter, the embodiments of the present disclosure will now be described by way of Examples, but the present disclosure is not limited only to the Examples.

Various numerical values in the Examples were measured by the following methods.

### <Solid concentration of aqueous PTFE dispersion>

In an air dryer, 1 g of the aqueous dispersion was dried at a condition of 150°C for 60 minutes, and the proportion of the mass of the non-volatile matter to the mass of the aqueous dispersion (1 g) was expressed by percentage and taken as the solid concentration thereof.

### <Content of polymer D in PTFE powder>

The content of polymer D contained in PTFE powder was determined with a Fourier transform infrared spectrometer.

### <Standard specific gravity (SSG)>

The SSG was measured by the water replacement method in accordance with ASTM D 792 using a sample molded in accordance with ASTM D4895-89.

The polymers (I) used in the Examples are as follows.

Polymer D: Homopolymer of monomer D represented by formula: CH₂=CF(CF₂OCFCF₃COOH) (number average molecular weight 8.6×10⁴, weight-average molecular weight 18.0×10⁴)

The number average molecular weight and the weight average molecular weight were determined by performing measurement by gel permeation chromatography (GPC) using GPC HLC-8020 manufactured by Tosoh Corporation, using Shodex columns manufactured by SHOWA DENKO K.K. (one GPC KF-801, one GPC KF-802, and two GPC KF-806M connected in series), and allowing tetrahydrofuran (THF) to flow at a flow rate of 1 ml/min as the solvent, and by calculating the molecular weights using monodisperse polystyrene as the standard.

Polymer L: Homopolymer of polymer L of 1,1,2,2-tetrafluoro-2-((1,2,2-trifluorovinyl)oxy)ethane-1-sulfonic acid (monomer L) (number average molecular weight 0.8×10⁴, weight-average molecular weight 1.0×10⁴)

The number average molecular weight and the weight average molecular weight were determined by performing measurement by gel permeation chromatography (GPC) using 1260 Infinity II manufactured by Agilent Technologies and using connected columns manufactured by Tosoh Corporation (one TSKgel G3000PW_{XL} and one TSG gel GMPW_{XL}) while allowing a mixed solvent of a Tris buffer and acetonitrile (Tris buffer : acetonitrile = 8 : 2 (v/v)) to flow at a flow rate of 0.5 ml/min, using monodisperse polyethylene oxide (PEO) and polyethylene glycol (PEG) as standards.

### Preparation Example 1

A PTFE polymerization dispersion (an aqueous PTFE dispersion) was obtained by the method described in Synthesis Example 2 of International Publication No. WO 2021/045227.

Various physical properties of the resulting PTFE polymerization dispersion and PTFE powder are shown below.
Solid concentration of PTFE polymerization dispersion: 29.1% by mass
pH of PTFE polymerization dispersion: 4.1
Content of polymer D in PTFE polymerization dispersion: 0.37% by mass
Standard specific gravity of PTFE: 2.201

### Comparative Example 1

The temperature of the aqueous PTFE dispersion (pH 6.2) obtained in Preparation Example 1 and diluted with deionized water to a solid concentration of 13% was regulated to 21°C, nitric acid was added in an amount corresponding to 0.66% by mass based on PTFE in the aqueous dispersion, and then the mixture was coagulated while being stirred. pH after coagulation was 2. After filtration, the resulting wet powder was washed three times with water in an amount corresponding to 400% by mass based on PTFE and then dried at 120°C for 12 hours to give PTFE powder.

### Example 1

The temperature of the aqueous PTFE dispersion (pH 6.2) obtained in Preparation Example 1 and diluted with deionized water to a solid concentration of 13% was regulated to 21°C, 2-butanol in an amount corresponding to 39% by mass based on PTFE in the aqueous dispersion was added to the diluted aqueous dispersion, and then the mixture was coagulated while being stirred. After filtration, the resulting wet powder was washed three times with water in an amount corresponding to 400% by mass based on PTFE and then dried at 120°C for 12 hours to give PTFE powder.

### Example 2

PTFE powder was obtained in the same manner as in Example 1, except that the amount of 2-butanol added was changed to an amount corresponding to 190% by mass based on the PTFE in the aqueous dispersion.

### Example 3

PTFE powder was obtained in the same manner as in Example 1, except that the temperature of the aqueous PTFE dispersion obtained in Preparation Example 1 and diluted with deionized water to a solid concentration of 13% was regulated to 21°C, the pH of the diluted aqueous PTFE dispersion was regulated to 9.6 by adding aqueous ammonia, 2-butanol in an amount corresponding to 39% by mass based on PTFE in the aqueous dispersion was added to the diluted aqueous dispersion, and then the mixture was coagulated while being stirred.

### Example 4

PTFE powder was obtained in the same manner as in Example 1, except that 1-propanol was used in place of 2-butanol.

### Example 5

The temperature of the aqueous PTFE dispersion obtained in Preparation Example 1 and diluted with deionized water to a solid concentration of 13% was regulated to 21°C, nitric acid was added in an amount corresponding to 0.66% by mass based on PTFE in the aqueous dispersion, and then the mixture was coagulated while being stirred. pH after coagulation was 2. After filtration, the resulting wet powder was washed three times with methanol in an amount corresponding to 400% by mass based on PTFE, further washed five times with water in an amount corresponding to 400% by mass based on PTFE, and then dried at 120°C for 12 hours to give PTFE powder.

### Example 6

PTFE powder was obtained in the same manner as in Example 5, except that 2-butanol was used in place of methanol.

### Example 7

PTFE powder was obtained in the same manner as in Example 3, except that the wet powder obtained by coagulation was washed three times with 2-butanol in an amount corresponding to 400% by mass based on PTFE and further washed six times with water in an amount corresponding to 400% by mass based on

### PTFE.

The results of the above are shown in Table 1.

### [Table 1]

**Table 1**

| | Aqueous dispersion | Coagulation | | Washing | | | in PTFE powder Polymer D content |
|---|---|---|---|---|---|---|---|
| | pH | Coagulating agent | Amount added | Organic solvent | Amount added | Deionized water | |
| | - | | % by mass/polymer | | % by mass/polymer | % by mass/polymer | % by mass/polymer |
| Comparative Example 1 | 6.2 | Nitric acid | 0.66 | - | - | 1200 | 0.37 |
| Example 1 | 6.2 | 2-BuOH | 39 | - | - | 1200 | 0.09 |
| Example 2 | 6.2 | 2-BuOH | 190 | - | - | 2000 | 0.03 |
| Example 3 | 9.6 | 2-BuOH | 39 | - | - | 1200 | 0.05 |
| Example 4 | 6.2 | 1-PrOH | 39 | - | - | 1600 | 0.09 |
| Example 5 | 6.2 | Nitric acid | 0.66 | MeOH | 1200 | 2000 | 0.08 |
| Example 6 | 6.2 | Nitric acid | 0.66 | 2-BuOH | 1200 | 2000 | 0.07 |
| Example 7 | 9.6 | 2-BuOH | 39 | 2-BuOH | 1200 | 2400 | 0.01 |

### Example 8

PTFE powder was obtained in the same manner as in Example 1, except that 2-propanol was added in an amount corresponding to 133% by mass of PTFE in the aqueous dispersion in place of 2-butanol in an amount corresponding to 39% by mass.

### Example 9

PTFE powder was obtained in the same manner as in Example 1, except that 2-pentanol was added in an amount corresponding to 40% by mass of PTFE in the aqueous dispersion in place of 2-butanol in an amount corresponding to 39% by mass.

### Preparation Example 2

A PTFE polymerization dispersion was obtained by the method described in Example 4 of International Publication No. WO 2022/244784.

Various physical properties of the resulting PTFE polymerization dispersion and PTFE powder are shown below.
Solid concentration of PTFE polymerization dispersion: 25.5% by mass
pH of PTFE polymerization dispersion: 3.6
Content of polymer L in PTFE polymerization dispersion: 0.58% by mass
Standard specific gravity of PTFE: 2.165

### Example 10

PTFE powder was obtained in the same manner as in Example 1, except that the polymerization dispersion obtained in Preparation Example 2 was used in place of the aqueous PTFE dispersion obtained in Preparation Example 1, and the amount of 2-butanol added was changed to an amount corresponding to 40% by mass based on PTFE in the polymerization dispersion.

The results of the above are shown in Table 2.

### [Table 2]

**Table 2**

| | Coagulation | | Washing | Polymer D content in PTFE powder | Polymer L content in PTFE powder |
|---|---|---|---|---|---|
| | Coagulating agent | Amount added | Deionized water | | |
| | | % by mass /polymer | % by mass /polymer | % by mass /polymer | % by mass /polymer |
| Example 8 | 2-PrOH | 133 | 2100 | 0.03 | |
| Example 9 | 1-Pentanol | 40 | 2100 | 0.02 | |
| Example 10 | 2-BuOH | 40 | 2100 | | 0.20 |

## Claims

1. A method for producing a composition containing a fluororesin, the method comprising:
polymerizing tetrafluoroethylene in an aqueous medium in the presence of a polymer (I) containing a polymerization unit (I) derived from a monomer (I) represented by the general formula (I) to obtain a polymerization dispersion containing a fluororesin containing tetrafluoroethylene unit,
coagulating the fluororesin in the polymerization dispersion to obtain a coagulate, and
washing the coagulate to obtain a composition containing the fluororesin, wherein
(1) the coagulation is carried out by bringing the fluororesin in the polymerization dispersion into contact with an organic solvent, and/or
(2) the washing is carried out by bringing the coagulate into contact with an organic solvent,
CX¹X³=CX²R(-CZ¹Z²-A⁰)ₘ (I)
wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

2. The production method according to claim 1,
wherein the organic solvent is an alcohol having 1 to 7 carbon atoms.

3. The production method according to claim 1 or 2, wherein the organic solvent is an alcohol having 2 to 7 carbon atoms.

4. The production method according to any one of claims 1 to 3, wherein the coagulation is carried out by bringing the fluororesin in the polymerization dispersion into contact with the organic solvent.

5. The production method according to claim 4, wherein an amount of the organic solvent used in the coagulation is 1.0% by mass or more based on the fluororesin in the polymerization dispersion.

6. The production method according to claim 4 or 5, wherein a temperature when the fluororesin in the polymer dispersion is brought into contact with the organic solvent is 5 to 80°C.

7. The production method according to any one of claims 4 to 6, wherein pH of the polymerization dispersion when the fluororesin in the polymerization dispersion is brought into contact with the organic solvent is within a range of 3 to 12.

8. The production method according to any one of claims 4 to 7, wherein the coagulate is washed with water.

9. The production method according to any one of claims 1 to 7, wherein the washing is carried out by bringing the coagulate into contact with the organic solvent.

10. The production method according to claim 9, wherein a temperature when the coagulate is brought into contact with the organic solvent is 5 to 80°C.

11. The production method according to claim 9 or 10, wherein the washing is carried out by bringing the coagulate into contact with the organic solvent, and then the coagulate is further washed with water.

12. The production method according to any one of claims 1 to 11, wherein the fluororesin is a polytetrafluoroethylene.

13. A composition comprising a polymer (I) containing a polymerization unit (I) derived from a monomer (I) represented by the general formula (I) and a fluororesin containing tetrafluoroethylene unit, wherein a content of the polymer (I) is 0.15% by mass or less based on the fluororesin:
CX¹X³=CX²R(-CZ¹Z²-A⁰)ₘ (I)
wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

14. The composition according to claim 13, wherein the fluororesin is a non melt-processible polytetrafluoroethylene.

15. A composition comprising a polymer (I) containing a polymerization unit (I) derived from a monomer (I) represented by the general formula (I) and a polytetrafluoroethylene, wherein a standard specific gravity of the polytetrafluoroethylene is 2.210 or less, and a content of the polymer (I) is 0.23% by mass or less based on the polytetrafluoroethylene:
CX¹X³=CX²R(-CZ¹Z²-A⁰)ₘ (I)
wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

16. A composition comprising a polymer (I) containing a polymerization unit (I) derived from a monomer (I) represented by the general formula (I) and a fluororesin containing tetrafluoroethylene unit, wherein the fluororesin is melt-fabricable, and a content of the polymer (I) is 4.0% by mass or less based on the fluororesin:
CX¹X³=CX²R(-CZ¹Z²-A⁰)ₘ (I)
wherein X¹ and X³ are each independently F, Cl, H, or CF₃; X² is H, F, an alkyl group, or a fluorine-containing alkyl group; A⁰ is an anionic group; R is a linking group; Z¹ and Z² are each independently H, F, an alkyl group, or a fluorine-containing alkyl group; and m is an integer of 1 or more.

17. The composition according to any one of claims 13 to 16, which is substantially free from a fluorine-containing surfactant.
